# EUROPÄISCHE PATENTSCHRIFT

(11) **EP 2 540 567 B1**
(45) Veröffentlichungstag und Bekanntmachung des Hinweises auf die Patenterteilung: **22.04.2015**
(21) Anmeldenummer: 12004590.1
(22) Anmeldetag: 19.06.2012
(51) Int. Cl.: B60P 7/13, B65D 90/00

(54) **Befestigungssystem für dne Transport einer schweren Last auf einer Transportoberfläche**
Fixing system for the transport of a heavy load on a transport surface
Système de fixation pour le transport d'une charge lourde sur une surface de transport

(30) Priorität: 29.06.2011 EP 11005328; 08.09.2011 DE 202011105439 U; 09.09.2011 DE 202011105689 U; 22.09.2011 DE 102011113863
(43) Veröffentlichungstag der Anmeldung: 02.01.2013
(73) Patentinhaber: Wader-Wittis GmbH, 42477 Radevormwald (DE)
(72) Erfinder: Behr, Carl Peter, 22393 Hamburg (DE)
(74) Vertreter: Wetzel, Philipp

(56) Entgegenhaltungen:
- EP-A2- 2 423 046
- WO-A1-2005/014439
- DE-A1- 10 158 737
- DE-A1- 19 709 658
- FR-A1- 2 323 048
- GB-A- 2 286 424

## Beschreibung

Die Erfindung betrifft ein Befestigungssystem, geeignet für den Transport einer schweren Last, insbesondere einer Komponente einer Windkraftanlage, auf einer Transportoberfläche, insbesondere auf einem Schiff.

Üblicherweise werden Lasten auf Transportoberflächen, bei denen es sich beispielsweise um die Bodenfläche eines Schiffsladeraums oder um einen Lukendeckel eines Schiffsladeraums handelt, in Containern transportiert, die in ihren Eckbeschlägen normierte Öffnungen aufweisen, in die Haltevorrichtungen, sogenannte Twistlocks, eingreifen. Die Transportoberflächen weisen korrespondierende Öffnungen auf, in die die Twistlocks dann auf der anderen Seite eingreifen. Bei einem Twistlock handelt es sich um ein Verriegelungselement, das an seiner Ober- und Unterseite beispielsweise jeweils einen beweglichen Konus aufweist, der in einer ersten Position so angeordnet ist, dass der Twistlock sowohl auf seiner Ober- als auch auf seiner Unterseite in die jeweiligen Aufnahmeöffnungen eingesetzt werden kann. Innerhalb der Einsetzöffnungen befindet sich ein Gehäuse, das an einem Teil der Einsetzöffnung anliegt und horizontale Kräfte überträgt. Nach Einsetzen in die jeweiligen Aufnahmeöffnungen werden die Konen über einen am Twistlock vorgesehenen Hebel gedreht und in eine Verriegelungsstellung überführt. Das System aus Aufnahmeöffnung in der Decksoberfläche, Twistlock und Containerecke ist auf eine Last von 25 t swl (Safe Working Load) ausgelegt. Dieses System ist weltweit bewährt und wird milliardenfach eingesetzt.

Schwierig wird es, wenn beispielsweise an Bord von Schiffen, Lasten transportiert werden sollen, die sich einerseits nicht in Containern anordnen lassen, aufgrund ihrer Größe, und die andererseits aufgrund ihres Gewichts die Maximalbelastung eines Verbindungssystems, bestehend aus Aufnahmeelement, Twistlock und Containerecke von 25 t swl überschreiten.

Ein weiteres Problem beim Einsatz von klassischen Twistlocks (siehe z.B EP 2423046) sind deren Maßtoleranzen. Bei wechselnden klimatischen Bedingungen finden Längenänderungen der Rahmen statt, die bewirken, dass die horizontale Kraftübertragung nur partiell erfolgt, weil nicht gewährleistet werden kann, dass die Mittelgehäuse in hinreichenden Maß mit den Einsetzöffnungen in Kontakt stehen, so dass horizontale Kräfte übertragen werden können. Dieses ist beim Containertransport unproblematisch, wird aber bei großen Bauteilen mit großen Lasten ggf. zum Problem, weil nicht bestimmt werden kann, ob die Befestigungsmittel sich hinreichend im Eingriff befinden, so dass die Last horizontal hinreichend sicherbar ist unter allen klimatischen Bedingungen.

Bei solchen großen und schweren Lasten handelt es sich beispielsweise um Komponenten von Windkraftanlagen. Dieses ist insbesondere bei dem Seetransport von Komponenten von Windkraftanlagen (Turmsegmente, Rotorflügel, Gondeln, Naben), entweder vom Herstellungsort zu dem Aufstellungsland oder bei der Errichtung von Offshore-Windkraftanlagen von einem Verladepunkt zu dem Errichtungsort der Fall. Bedingt durch die steigende Nutzung erneuerbarer Energien wird eine Vielzahl von immer größer werdenden Windkraftanlagen errichtet. Dieses geschieht sowohl onshore als auch offshore. Anlagen mit einer Leistung von mehr als 5 MW und Nabenhöhen von über 100 m sind heutzutage möglich und üblich. Aufgrund der Tatsache, dass die Komponenten von Windkraftanlagen immer größer werden, erschweren sich dementsprechend die Transportprobleme dieser Komponenten.

Ausschlaggebend für die wirtschaftliche Nutzung von Windenergien sind u. a. die Kosten, die bei der Errichtung der Anlage sowie bei dem Transport der einzelnen Anlagenkomponenten entstehen. Eine Vielzahl von Herstellern von Windkraftanlagen bezieht seine Komponenten teilweise aus eigener Herstellung und teilweise von Zulieferbetrieben, die weltweit angesiedelt sind. Hierbei ist ein kostengünstiger und sicherer Transport zu gewährleisten. Aufgrund der großen Anzahl von Herstellern und Zulieferbetrieben, die häufig als kleine Betriebe begonnen haben, sind individuelle Transportsysteme teilweise herstellerspezifisch entwickelt worden.

Gegenwärtig werden für den Transport solcher Komponenten Transportrahmen verwendet, die entweder ausschließlich oder zusätzlich zu den Twistlocks mit Schweißverbindungen mit der Transportfläche verbunden werden bzw. zusätzliche Elemente vorgesehen sind, die über Schweißverbindungen mit dem Transportrahmen auf der einen Seite, und mit der Transportoberfläche auf der anderen Seite, die haltende Verbindung herstellen. Dieses ist problematisch, da das Herstellen und Lösen der Schweißverbindungen zeitaufwendig ist, und damit der Herstellungsprozess der Windkraftanlagen sich zum einen verlängert und er damit verteuert wird, und zum anderen die Be- und Entladezeiten der Transportschiffe erhöht werden, was die Einsatzzeiten der Schiffe reduziert und gleichzeitig die Kosten des Transportes erhöht.

Darüber hinaus werden die Systeme, mit denen die Komponenten transportiert werden, auf das jeweilige Projekt maßgeschneidert. Dieses hat den Nachteil, dass mit jedem neuen Projekt hohe Entwicklungskosten und unter Umständen lang andauernde Genehmigungsverfahren bei den Zertifizierern anfallen, um ein passendes Transportsystem bereitzustellen. Auch ist es notwendig für jede Systemkomponente wie Turmabschnitte, Gondel, Verankerungselemente im Grund wie Tripods oder Gittermasten mit einem eigenen Transportsystem zu versehen, da diese unterschiedliche Anforderungen wegen Größe, Gewicht etc. an das Transportsystem stellen.

Eine weitere Komponente des Transportproblems ist der Transport der Elemente der Windkraftanlagen auf Schiffen von einem Hafen, in dem der Hersteller der Elemente seine Produkte geliefert hat, zu einem Hafen im Errichtungsbereich der Windkraftanlage. Dieser Transport erfolgt im Wesentlichen horizontal. Dabei werden die Elemente beispielsweise an Deck für den Transport angeordnet. Auf besonders großen Spezialschiffen ist allerdings auch der vertikale Transport vorgesehen. Hierbei kann es sich ebenfalls um reine Transportfahrten vom Hersteller ausgehend handeln. Allerdings kommt dem vertikalen Transport eine weitere Bedeutung zu, da die Anzahl von offshore errichteten Windkraftanlagen steigt. Hier weist der vertikale Transport den Vorteil auf, dass die Elemente, beispielsweise wenn es sich um Turmsegmente handelt, nicht durch eine Hubvorrichtung, wie beispielsweise einen Kran, von der Horizontale in die Vertikale überführt werden müssen. Die vertikal angeordneten Turmsegmente können am Errichtungsort direkt aus dem Bauch des Schiffes oder vom Deck des Schiffes entnommen werden und ohne Lageänderung direkt montiert werden. Allerdings bringt der vertikale Transport weitere Probleme für den Transport mit sich, da die auf die haltende Verbindung wirkenden Kräfte und Momente sich entsprechend vergrößern.

Aufgabe der Erfindung ist es, ein Befestigungssystem der eingangs genannten Art zu schaffen, mit dem es möglich ist große und schwere Lasten zu transportieren, insbesondere auch vertikal und gleichzeitig sicherzustellen, dass eine hinreichende Sicherung der Lasten auf der Transportoberfläche bereitgestellt wird.

Gelöst wird diese Aufgabe durch ein Befestigungssystem, geeignet für den Transport einer schweren Last, insbesondere einer Komponente einer Windkraftanlage, auf einer Transportoberfläche, insbesondere auf einem Schiff, wobei die Last auf einen Transportrahmen so mit wenigstens einem die Last sichernden Befestigungsmittel angeordnet ist, dass das Lastbefestigungsmittel auf die Last wirkende vertikale und/oder horizontale Kräfte sowie Momente aufnimmt und in den Transportrahmen einleitet, wobei in oder auf der Transportoberfläche wenigstens eine Aufnahmevorrichtung mit wenigstens einer Einsetzöffnung für ein vertikal sicherndes Rahmenbefestigungsmittel vorgesehen ist, über das die auf die Last wirkenden vertikalen Kräfte und Momente vom Rahmen über die Aufnahmevorrichtung in die Transportoberfläche einleitbar sind, und auf der Transportoberfläche wenigstens eine weitere Aufnahmevorrichtung mit wenigstens einer Einsetzöffnung für ein horizontal sicherndes Rahmenbefestigungsmittel vorgesehen ist, über das die auf die Last wirkenden horizontalen Kräfte und Momente vom Rahmen über die Aufnahmevorrichtung in die Transportoberfläche einleitbar sind, der Transportrahmen wenigstens eine Öffnung zum Einsetzen des vertikal sichernden Rahmenbefestigungsmittels aufweist, und der Transportrahmen wenigstens eine Aussparung zur Aufnahme des horizontal sichernden Rahmenbefestigungsmittels aufweist.

Durch das Vorsehen zweier unterschiedlicher Befestigungsmittel zum einen für horizontale Kräfte und zum anderen für vertikale Kräfte und ein entsprechendes vorsehen von separaten Aufnahmen für diese am Transportrahmen wird es möglich, die Sicherungswirkung unabhängig von Toleranzen und Längenänderungen, beispielsweise durch Temperaturänderungen, zu gewährleisten.

Eine weitere Lehre der Erfindung sieht vor, dass in einem Wandabschnitt der Aussparung und/oder in einem Wandabschnitt des horizontal sichernden Rahmenbefestigungsmittels wenigstens eine Öffnung vorgesehen ist, durch die ein Arretiermittel, bevorzugt ein Gewindebolzen, einsetzbar ist, der gegen einen Wandabschnitt des horizontal sichernden Rahmenbefestigungsmittels und/oder gegen einen Wandabschnitt der Aussparung und/oder in einer Vertiefung in dem Wandabschnitt des horizontal sichernden Rahmenbefestigungsmittels oder der Aussparung bewegbar ist, so dass eine horizontal sichernde Verbindung zwischen Transportrahmen und horizontal sicherndem Rahmenbefestigungsmittel herstellbar ist. Hierdurch lassen sich Maßtoleranzen ausgleichen und es lässt sich besonders einfach eine hinreichende horizontale Haltewirkung bereitstellen.

Eine weitere Lehre der Erfindung sieht vor, dass an einem Wandabschnitt, bevorzugt an der Unterseite, wenigstens einen Vorsprung aufweist, der in die Einsetzöffnung der Aufnahmevorrichtung einsetzbar ist. Vorteilhafter Weise sind die Vorsprünge so ausgeführt, dass sie in die Einsetzöffnungen der Aufnahmevorrichtungen passen. Diese stellen in horizontaler Richtung eine hinreichend haltende Verbindung bereit.

Eine weitere Lehre der Erfindung sieht vor, dass das horizontal sichernde Rahmenbefestigungsmittel ein Grundkörper aufweist, an dem der Wandabschnitt oder die Wandabschnitte des horizontal sichernden Rahmenbefestigungsmittels angeordnet sind. Der Grundkörper dient als Basis für die Aufnahme der horizontalen Haltekräfte.

Eine weitere Lehre der Erfindung sieht vor, dass die Aufnahmevorrichtung wenigstens einen Grundkörper und eine eine Oberseite bildende Abdeckplatte aufweist, in der sich die Einsetzöffnung befindet, wobei die Aufnahmevorrichtung bevorzugt eine Abdeckplatte mit wenigstens zwei oder vier darin angeordneten Einsetzöffnungen und wenigstens zwei oder vier unter den Einsetzöffnungen angeordneten Grundkörpern aufweist.

Eine weitere Lehre der Erfindung sieht vor, dass das vertikal sichernde Rahmenbefestigungsmittel ein Widerlager, ein Verriegelungselement und einen das Widerlager und das Verriegelungselement verbindenden Bolzen aufweist, wobei das Verriegelungselement eine an der Außenseite des Verriegelungselements befindliche Kraftübertragungsfläche und eine Vertiefung zwischen Kraftübertragungsfläche und Bolzen aufweist, das Verriegelungselement zwischen einer entriegelten und einer verriegelten Stellung drehbar ist und in der entriegelten Stellung in die Einsetzöffnung der Aufnahmevorrichtung einsetzbar ist. Ein solches Rahmenbefestigungsmittel ist besonders geeignet, definiert vertikale Kräfte zu übertragen.

Eine weitere Lehre der Erfindung sieht vor, dass das Verriegelungselement auf dem Bolzen aufschraubbar ist, wobei das Verriegelungselement gegenüber dem Bolzen mit einem Sicherungselement arretierbar ist, bevorzugt derart, dass der Bolzen und das Verriegelungselement eine korrespondierende Öffnung für die Aufnahme eines Sicherungselements, das bevorzugt ein Sicherungsstift ist, aufweisen. Dieses stellt eine einfache, sichere und kostengünstige Möglichkeit dar, ein solches Verriegelungselement herzustellen.

Eine weitere Lehre der Erfindung sieht vor, dass das Widerlager auf den Bolzen aufsteckbar und mit einem Konterelement, das bevorzugt auf den Bolzen aufschraubbar ist, arretierbar ist, wobei zur Sicherung des Konterelements ein Sicherungselement vorgesehen ist, das bevorzugt ein Sicherungsstift ist, wobei bevorzugt der Bolzen und/oder das Konterelement wenigstens eine Aufnahme für das Sicherungselement, bevorzugt in Form einer Öffnung, aufweisen, wobei das Konterelement besonders bevorzugt eine Mehrzahl von Aufnahmen aufweist, und/oder dass zur Sicherung des Konterelements ein Federring vorgesehen ist. Auf diese Art kann einfach und sicher gewährleistet werden, dass das Rahmenbefestigungsmittel einfach herzustellen ist und gleichzeitig sicher hält und sicher arretiert werden kann.

Eine weitere Lehre der Erfindung sieht vor, dass das vertikal sichernde Rahmenbefestigungsmittel so ausgelegt ist, dass durch die Gesamtanzahl der vertikal sichernden Rahmenbefestigungsmittel die vertikal auf die Last wirkenden Kräfte und Momente vollständig aufnehmbar sind, und/oder dass das horizontale Rahmenbefestigungsmittel so ausgelegt ist, dass durch die Gesamtzahl der horizontal sicherenden Rahmenbefestigungsmittel die horizontal auf die Last wirkenden Kräfte und Momente vollständig aufnehmbar sind. Dadurch wird eine entsprechende Kontrollierbarkeit bereitgestellt.

Eine weitere Lehre der Erfindung sieht vor, dass auf der Transportoberfläche, bevorzugt in Verbindung mit der Aufnahmevorrichtung, ein Einweiseelement für den Transportrahmen anordbar ist, wobei das Einweiseelement bevorzugt wenigstens einen Vorsprung aufweist, der in die Aufnahmevorrichtung einsetzbar ist. Durch ein solches Einweiseelement ist besonders einfach gewährleistbar, dass die Last am vorgesehenen Ort anordbar ist, wobei eine genaue Positionierung in Abhängigkeit der Aufnahmevorrichtungen durch das Einsetzen in diese möglich ist.

Eine weitere Lehre der Erfindung sieht vor, dass es sich bei dem lastsichernden Befestigungsmittel um ein nachfolgend beschriebenes Sicherungselement handelt. Diese haben sich als besonders vorteilhaft erwiesen.

Eine weitere Lehre der Erfindung sieht vor, dass es sich bei dem horizontal sichernden Rahmenbefestigungsmittel um ein nachfolgend beschriebenes Rahmenbefestigungsmittel handelt. Diese haben sich als besonders vorteilhaft erwiesen.

Weiterhin wird die erfindungsgemäße Aufgabe auch durch ein Sicherungselement geeignet zur Befestigung einer schweren Last, insbesondere einer Komponente einer Windkraftanlage, auf einem Transportelement mit wenigstens einem Bolzenelement, das mit dem Transportelement in Wirkverbindung steht, gelöst, mit wenigstens einem Arretierelement, das auf dem Bolzenelement anordbar oder angeordnet ist, wobei das Arretierelement einen ersten Auflageabschnitt zur Auflage auf einem Widerlager, das in Wirkverbindung mit dem Transportelement steht, und einen zweiten Auflageabschnitt zur Auflage auf einem Abschnitt der Last oder auf einem Auflager, das auf der Last anordbar ist, aufweist, wobei über das Arretierelement über die Auflageabschnitte eine die Last auf dem Transportelement haltende Kraft übertragbar ist, die durch ein auf dem Bolzen aufbringbares Konterelement erzeugbar ist, wobei über das Arretierelement im Wesentlichen vertikale Lasten oder Momente von der Last in das Transportelement eingeleitet werden. Auf diese Weise wird es einfach und universell möglich, die verschiedenen Komponenten der Windkraftanlage auf einem Transportrahmen oder auf einer Transportoberfläche anzuordnen und die Komponenten schnell zu befestigen und zu lösen. Weiterhin ist ein solches Sicherungselement einfach herzustellen und ermöglicht eine sichere Verbindung zwischen Trägerelement und Windkraftanlagenelement. Des Weiteren kann auf einfache Weise durch das Aufheben der Arretierkraft ein schnelles Lösen des Elements der Windkraftanlage vom Trägerelement herbeigeführt werden.

Eine weitere Lehre der Erfindung sieht vor, dass es sich bei dem Transportelement um einen Transportrahmen oder eine Transportoberfläche handelt, und/oder dass die Wirkverbindung des Bolzens mit dem Transportelement über eine Öffnung im Transportelement herstellbar ist, in die der Bolzen einsteckbar ist, oder der Bolzen am Transportelement angeordnet ist, und/oder dass es sich bei dem Bolzen um einen Gewindebolzen handelt, und/oder dass es sich bei dem Konterelement um eine Mutter handelt. Durch das Vorsehen des Gewindeabschnitts auf dem Bolzenelement in Verbindung mit dem Konterelement und dem Widerlager ist es in Verbindung mit dem Arretierelement auf einfache Weise möglich, die Arretierkraft zu erzeugen.

Eine Drehbarkeit des Arretierelements gegenüber dem Bolzenelement ermöglicht vorteilhafter Weise eine einfache Herstellung der einzelnen Komponenten des Sicherungselementes. Des Weiteren ermöglicht die Drehbarkeit des Arretierelements in Bezug auf das Bolzenelement eine sichere und einfache Arretierbarkeit und Lösbarkeit in Bezug auf die Last bzw. das Element der Windkraftanlage. Durch das Vorsehen der Distanzstücke ist es möglich, in Bezug auf unterschiedlich starke Verbindungsabschnitte des Elements der Windkraftanlage eine hinreichend sichere Haltekraft zu erzeugen.

Eine weitere Lehre der Erfindung sieht vor, dass ein Arretierkörper vorgesehen ist, der in Wirkverbindung mit dem Widerlager und der Last steht, über den im Wesentlichen horizontale Lasten von der Last auf das Transportelement übertragen werden, wobei der Arretierkörper bevorzugt in das Widerlager einsetzbar ist, und/oder dass das Widerlager eine Öffnung aufweist, in die ein Arretiermittel, bevorzugt ein Gewindebolzen, einbringbar ist, der gegen eine Seitenwand des Arretierkörpers und/oder in eine Öffnung in der Seitenwand des Arretierkörpers bewegbar ist, so dass die Wirkverbindung herstellbar ist. Über den Arretierkörper ist es durch dessen Wirkverbindung mit Last und Widerlager einfach möglich, im Wesentlichen horizontale Lasten von der Last auf das Transportelement zu übertragen. Über das Arretiermittel wird eine Abstandstanddifferenz in horizontaler Richtung ausgleichbar.

Eine weitere Lehre der Erfindung sieht vor, dass ein Führungselement vorgesehen ist, über das gewährleistet ist, dass die Last an der dafür vorgesehenen Stelle auf dem Transportelement angeordnet ist, wobei bevorzugt das Führungselement Bestandteil des Arretierkörpers ist. Durch die Kombination der Elemente kann einfach eine korrekte Positionierung gewährleistet werden, ohne einen zusätzlichen Einweiser vorzusehen. Weiterhin wird die erfindungsgemäße Aufgabe auch durch ein Rahmenbefestigungsmittel geeignet zum horizontalen Befestigen eines Transportrahmens auf einer Transportoberfläche, gelöst, mit einem Grundkörper und wenigstens einem Wandabschnitt, der an dem Grundkörper angeordnet ist oder Bestandteil des Grundkörpers ist, einem an einem Wandabschnitt angeordneten Vorsprung geeignet zum lösbaren Einsetzen in eine Aufnahmevorrichtung, mit einer im Grundkörper oder in einem Wandabschnitt vorgesehenen Öffnung, die so ausgeführt ist, dass in die Öffnung ein Arretiermittel, bevorzugt ein Gewindebolzen, einsetzbar ist und einem in oder am Grundkörper oder in oder an einem Wandabschnitt vorgesehenen Widerlagerabschnitt, der so ausgeführt ist, dass über ein weiteres Befestigungsmittel, bevorzugt ein Gewindebolzen, gegen den Widerlagerabschnitt eine horizontal haltende Verbindung zwischen Grundkörper und Transportrahmen herstellbar ist. Der Grundkörper dient als Basis für die Aufnahme der horizontalen Haltekräfte. Über ihn lassen sich besonders einfach adäquate Verbindungen zur Aufnahme horizontaler Kräfte bereitstellen. Durch das Vorsehen entsprechender Öffnungen wird dieses besonders einfach möglich.

Weiterhin wird die erfindungsgemäße Aufgabe auch durch ein Verfahren zum Sichern einer schweren Last, insbesondere einer Komponente einer Windkraftanlage, auf einer Transportoberfläche, insbesondere am Bord eines Schiffes, gelöst, bei dem die Last an einem Transportrahmen über ein Sicherungselement, insbesondere wie zuvor beschrieben, angeordnet und befestigt wird, der Transportrahmen auf der Transportoberfläche durch Absenken angeordnet wird, wobei vor dem Absenken wenigstens ein vertikal sicherndes Rahmenbefestigungsmittel in wenigstens eine dafür vorgesehene Öffnung im Transportrahmen eingesetzt wird, das beim Absetzen des Transportrahmens auf der Transportoberfläche in wenigstens eine Aufnahmevorrichtung eingreift, die in der Transportoberfläche angeordnet ist, wobei das vertikal sichernde Rahmenbefestigungsmittel ein Verriegelungselement aufweist, das nach dem Absetzen von einer Einsetzposition in eine Verriegelungsposition überführt wird, dadurch gekennzeichnet, dass vertikal sichernde Rahmenbefestigungsmittel so ausgeführt ist, dass die auf die Last wirkenden vertikalen Kräfte und Momente über das vertikal sichernde Rahmenbefestigungsmittel in die Transportoberfläche übertragen werden, dass in wenigstens eine Aussparung im Transportrahmen und in wenigstens einer zu der Aussparung korrespondierenden Aufnahmevorrichtung ein horizontal sicherndes Rahmenbefestigungsmittel, insbesondere wie zuvor beschrieben, eingesetzt wird, dass ein Arretierungsmittel, bevorzugt ein Gewindebolzen, durch wenigstens eine Öffnung in einem Wandabschnitt der Aussparung und/oder in einem Wandabschnitt eines Grundkörpers des horizontal sichernden Rahmenbefestigungsmittels geführt wird und gegen den korrespondierenden Wandabschnitt und/oder in eine korrespondierende Öffnung im Wandabschnitt des horizontal sichernden Rahmenbefestigungsmittels und/oder der Aussparung bewegt wird, der Transportrahmen gegenüber der Transportoberfläche dadurch so arretiert wird, dass die auf die Last wirkenden horizontalen Kräfte und Momente über das horizontal sichernde Rahmenbefestigungsmittel in die Transportoberfläche eingeleitet werden.

Nachfolgend wird die Erfindung an Hand eines Ausführungsbeispiels in Verbindung mit einer Zeichnung näher erläutert. Dabei zeigen:
- Fig. 1: eine räumliche Ansicht des erfindungsgemäßen Befestigungssystems,
- Fig. 2: einen ersten Verfahrensschritt zu Fig. 1,
- Fig. 3: eine zweiten Verfahrensschritt zu Fig. 1
- Fig. 4: eine dritten Verfahrensschritt zu Fig. 1,
- Fig. 5: eine vierten Verfahrensschritt zu Fig. 1,
- Fig. 6: eine fünften Verfahrensschritt zu Fig. 1,
- Fig. 7: eine erste Ausführungsform eines erfindungsgemäßen Rahmenbefestigungsmittels,
- Fig. 8: eine Schnittansicht zu Fig. 7,
- Fig. 9: eine Draufsicht zu Fig. 7,
- Fig. 10: eine Detailansicht zu Fig. 7,
- Fig. 11: eine Detailansicht zu Fig. 7,
- Fig. 12: eine zweite Ausführungsform eines erfindungsgemäßen vertikal sichernden Rahmenbefestigungsmittels,
- Fig. 13: eine dritte Ausführungsform eines erfindungsgemäßen vertikal sichernden Rahmenbefestigungsmittels,
- Fig. 14: eine vierte Ausführungsform eines erfindungsgemäßen vertikal sichernden Rahmenbefestigungsmittels,
- Fig. 15: eine fünfte Ausführungsform eines erfindungsgemäßen vertikal sichernden Rahmenbefestigungsmittels,
- Fig. 16 bis Fig. 22: räumliche Darstellungen der erfindungsgemäßen Verfahrensschritte zum Vornehmen der vertikal sichernden Rahmenbefestigung,
- Fig. 23: eine räumliche teilgeschnittene Ansicht des vertikal gesicherten Transportrahmens,
- Fig. 24: eine erste räumliche Ansicht eines erfindungsgemäßen horizontal sichernden Rahmenbefestigungsmittels
- Fig. 25: eine zweite Ansicht zu Fig. 24,
- Fig. 26: eine räumliche Ansicht des Rahmenbefestigungsmittels nach Fig. 24 auf einem Aufnahmemittel,
- Fig. 27: eine erste räumliche Ansicht des Rahmenbefestigungsmittels nach Fig. 24 in Verbindung mit einem erfindungsgemäßen Transportrahmen,
- Fig. 28.: Ein Ansicht des Transportrahmenabschnitts aus Fig. 27,
- Fig. 29: eine zweite Ausführungsform zu Fig. 27,
- Fig. 30: eine Draufsicht zu Fig. 29,
- Fig. 31: eine Schnittansicht zu Fig. 29,
- Fig. 32 bis Fig. 35: eine zweite Ausführungsform eines erfindungsgemäßen Befestigungssystems
- Fig. 36 bis Fig. 38: eine alternative Ausführungsform eines Befestigungssystems,
- Fig. 39 bis Fig. 42: eine erste Ausführungsform eines erfindungsgemäßen Last sicherndes Sicherungselements,
- Fig. 43 bis Fig. 46: eine zweite Ausführungsform eines erfindungsgemäßen Last sicherndes Sicherungselements,
- Fig. 47 bis Fig. 50: ergänzende Darstellungen zum Befestigungssystem nach den Fig. 32 bis Fig. 35,
- Fig. 51 bis Fig. 53: eine dritte Ausführungsform eines erfindungsgemäßen Last sicherndes Sicherungselements,

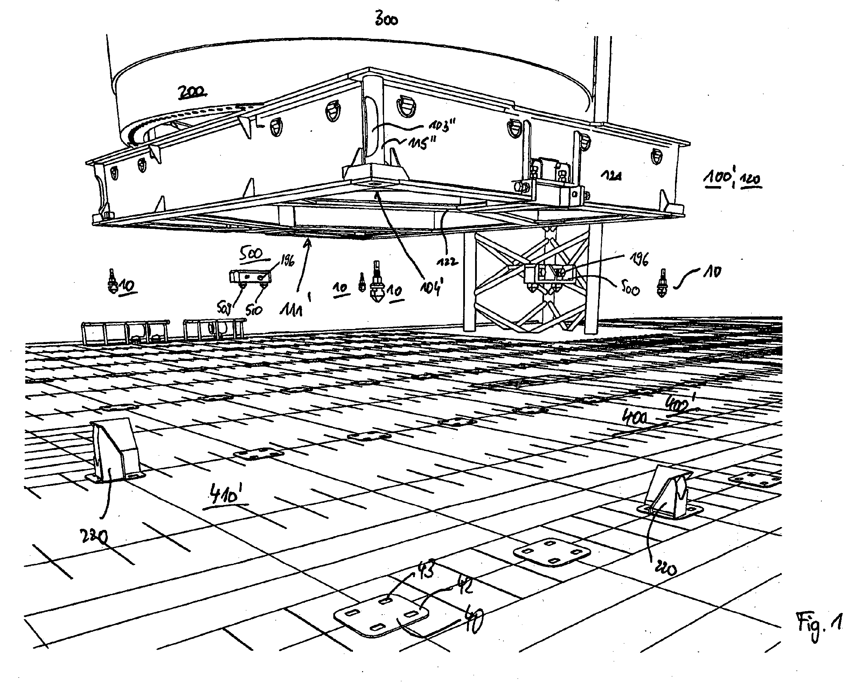

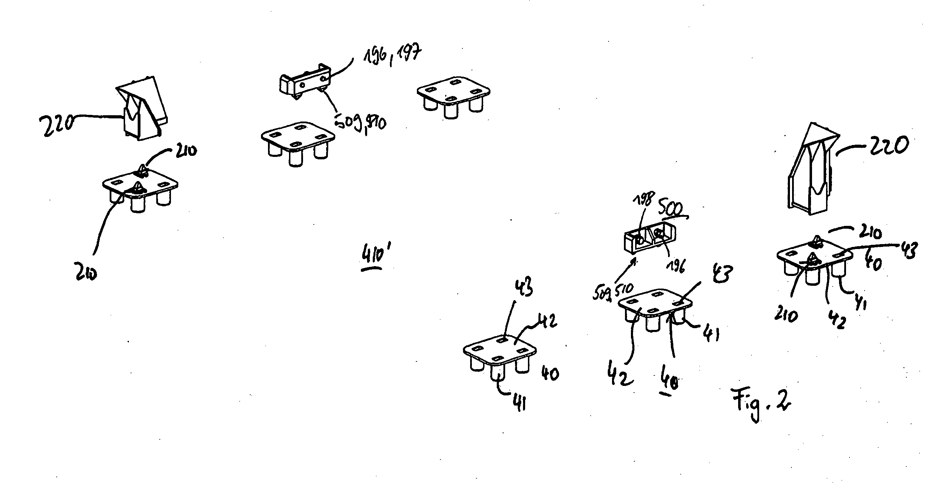

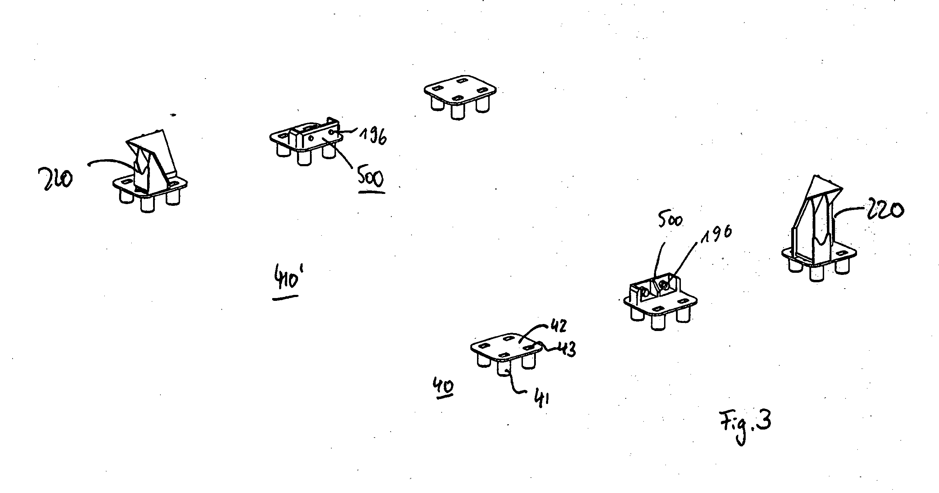

Fig. 1 zeigt eine räumliche eines Elements einer Windkraftanlage, bei der es sich um einen Turmabschnitt 300 handelt, an dessen unteren ende ein Flansch 200 angeordnet ist. Der Flansch ist über ein Lastbefestigungsmittel 1010 mit einem Transportrahmen 120 eines Transportsystems 100' verbunden. Über einen nicht dargestellten Kran wird die Last auf einem Schiff 400' auf dessen Transportoberfläche 410' angeordnet. Auf der Transportoberfläche sind Aufnahmevorrichtungen 40 angeordnet. Über Twistlocks 210 sind Einweiser 220 in den äußeren Aufnahmevorrichtungen 40 vorgesehen. Weiterhin sind in den mittleren Aufnahmevorrichtungen 40 horizontale Rahmenbefestigungsmittel 500 vorgesehen (siehe Fig. 2 und Fig. 3).

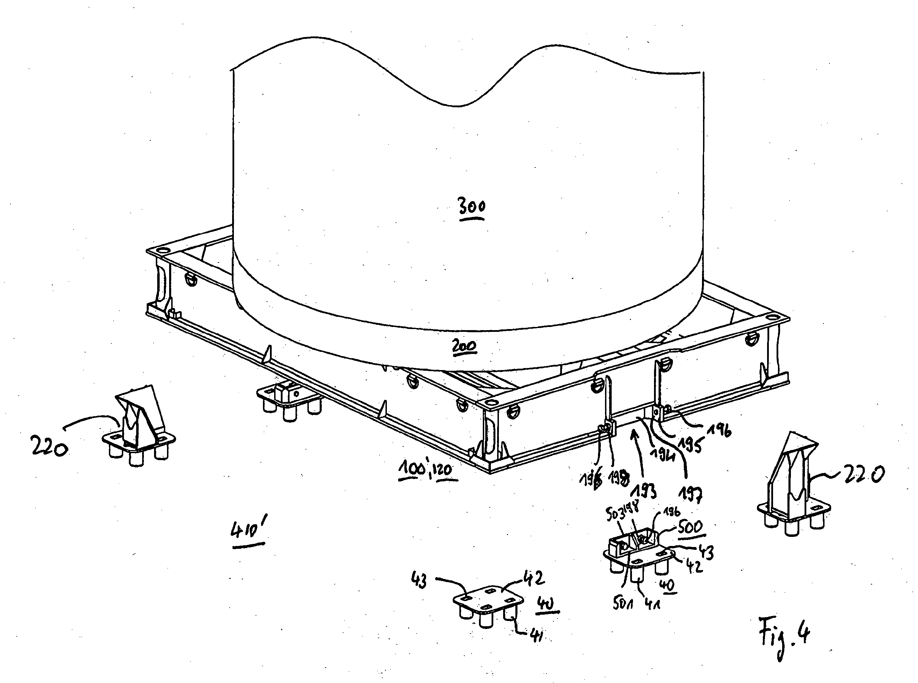

Der Transportrahmen 120 weist Aussparungen 193 auf, die in der Längsseite des Transportrahmens 120 in dessen Außenrahmen 121 angeordnet sind. Diese Aussparungen korrespondieren mit dem Ort der Anordnung der horizontalen Befestigungsmittel 500, wie dieses in Fig. 4 zu sehen ist. Vor dem Aufsetzen werden in die Aufnahmebereiche 104' des Transportrahmens 120 vertikale Rahmenbefestigungsmittel 10 eingesetzt.

Beim Absetzen des Transportrahmens 120 auf die entsprechende Position auf der Transportoberfläche bewirkten die Einweiser 220, dass die horizontalen Befestigungsmittel 500 in die Aussparungen 193 und die vertikalen Befestigungsmittel 10 in Einsetzöffnungen 43 in einer Abdeckplatte 42 der Aufnahmevorrichtung 40 mit ihrem jeweiligen Verriegelungselement 12 eingreifen.

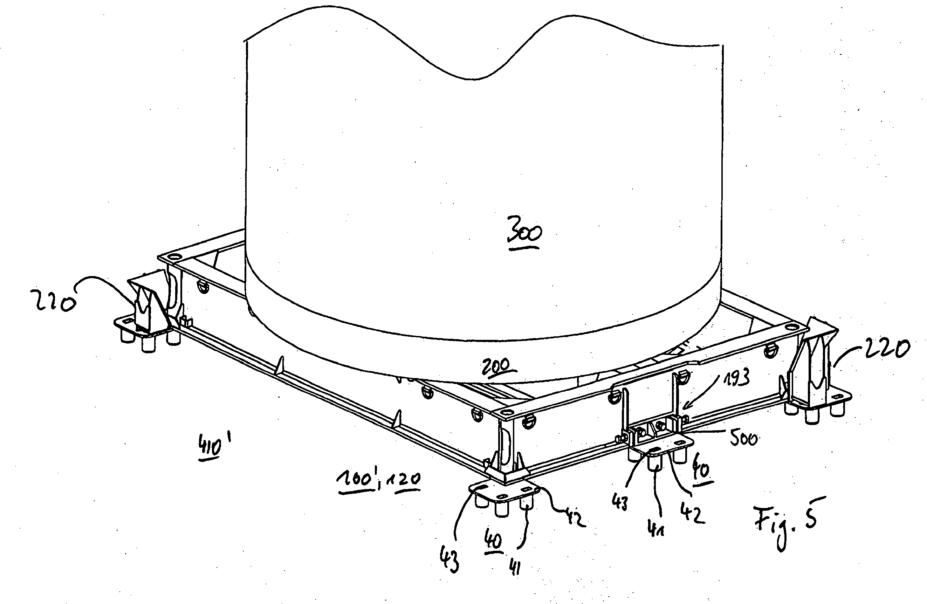

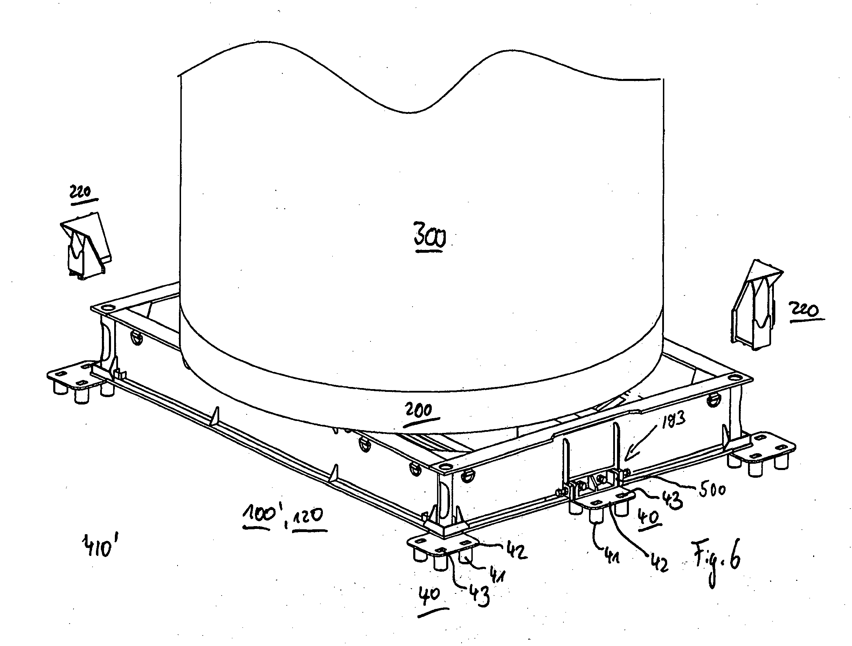

Nach dem Absetzen (siehe Fig. 5) werden die vertikalen Rahmenbefestigungsmittel 10 in den Aufnahmevorrichtungen 40 verriegelt, nachfolgend beschrieben wird, und die horizontalen Rahmenbefestigungsmittel werden in den Aussparungen arretiert. Anschließend werden die Einweiser 220 entfernt (siehe Fig. 6).

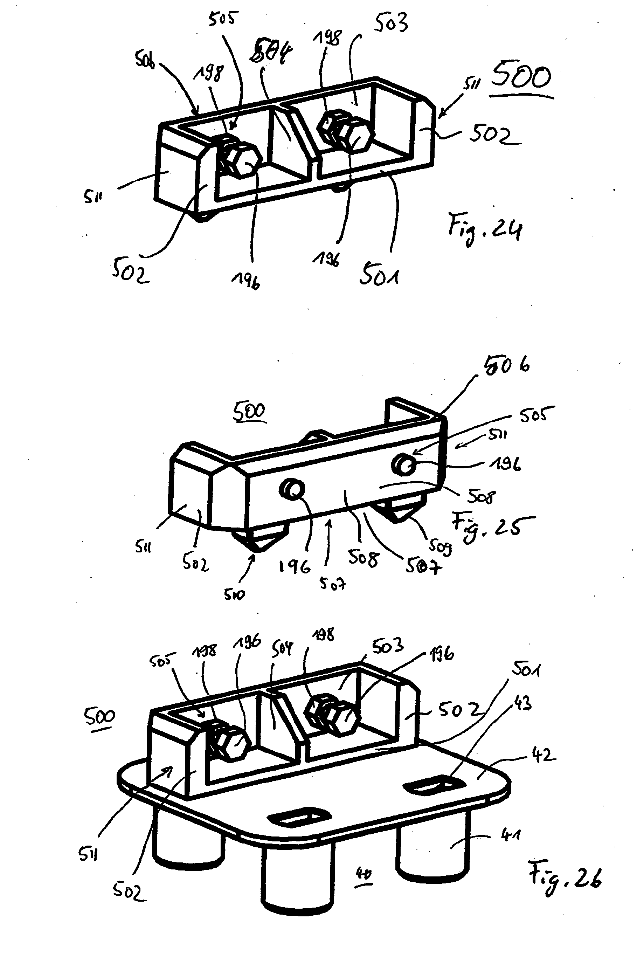

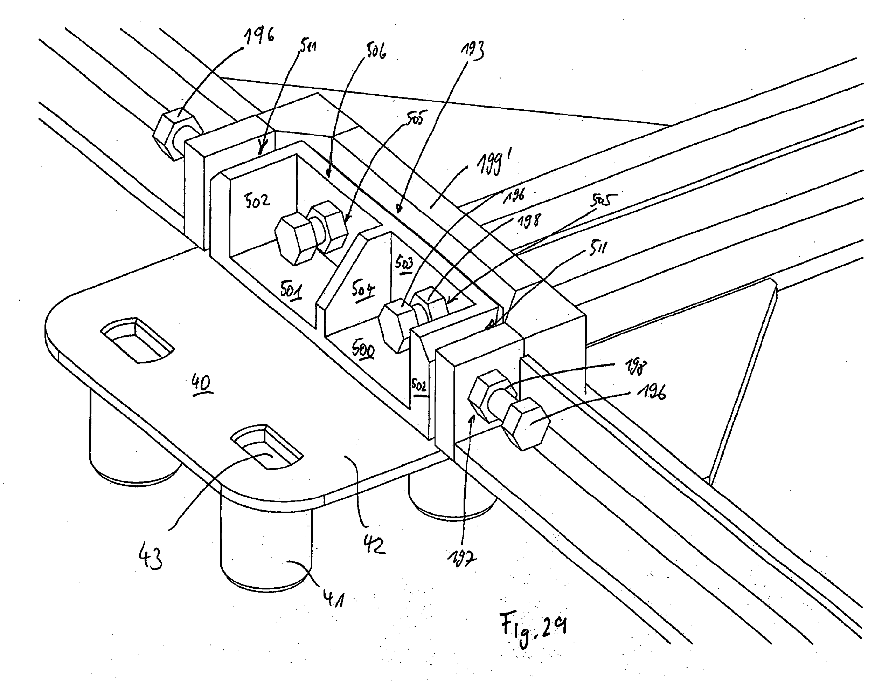

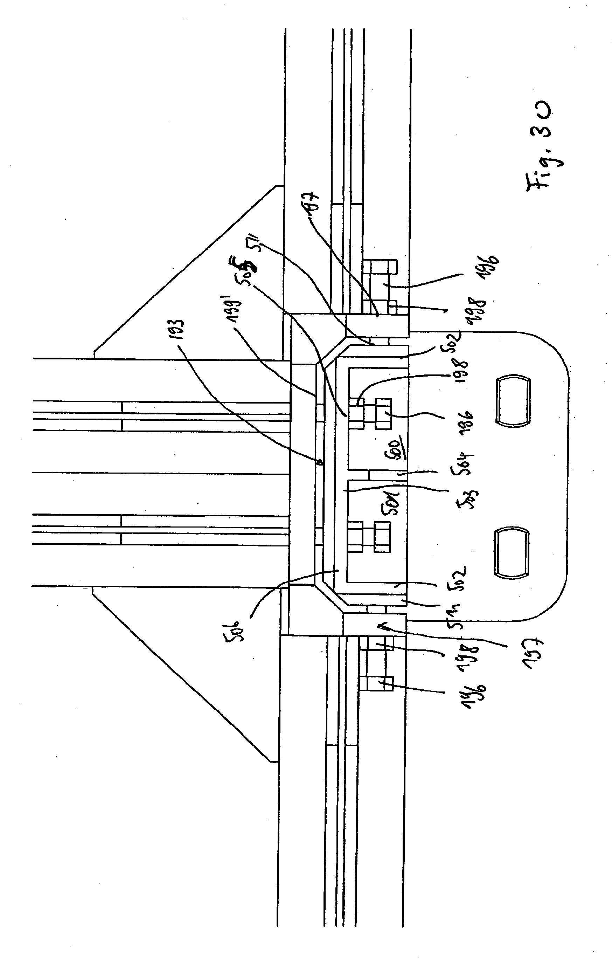

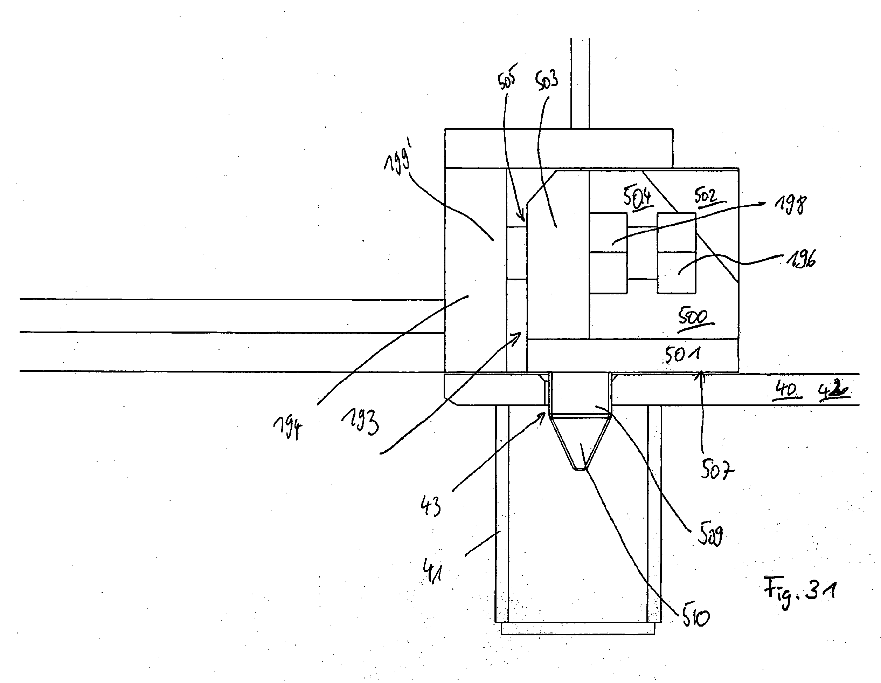

Das horizontale Befestigungsmittel 500 sowie dessen Anordnung in der Aussparung 193 des Transportrahmens 120 sind in den Fig. 24 bis Fig. 31 dargestellt. Das horizontale Rahmenbefestigungsmittel weist einen Grundkörper 501 auf. An dessen Unterseite 507 sind Vorsprünge 509 angeordnet, die Einführabschnitte 510 aufweisen, die in die Einsetzöffnungen 43 der Aufnahmevorrichtung 40 einsetzbar sind. Am Grundkörper 501 sind Seitenwandabschnitte 502 vorgesehen, die einen Anschlag 511 aufweisen, der als Widerlager dient. Weiterhin ist am Grundkörper 500 eine hintere Seitenwand 503 vorgesehen, die in ihren Ecken mit den Seitenwandabschnitten 502 verbunden ist. Die Rückseite 508 der Seitenwand 503 kann ebenfalls als Anschlag dienen. Zur Stabilisierung ist ein Steg 504 vorgesehen. In der hinteren Seitenwand 503 sind Bohrungen 505 vorgesehen, die entweder ein Gewinde (nicht dargestellt) oder hier eine daran angebrachte Gewindemutter 198 aufweisen. In diese Gewindemutter 198 sind Gewindebolzen 196 einschraubbar. Die Seitenwände 502 und 503 weisen eine Oberseite 506 auf, die ebenfalls als Anschlag dienen kann.

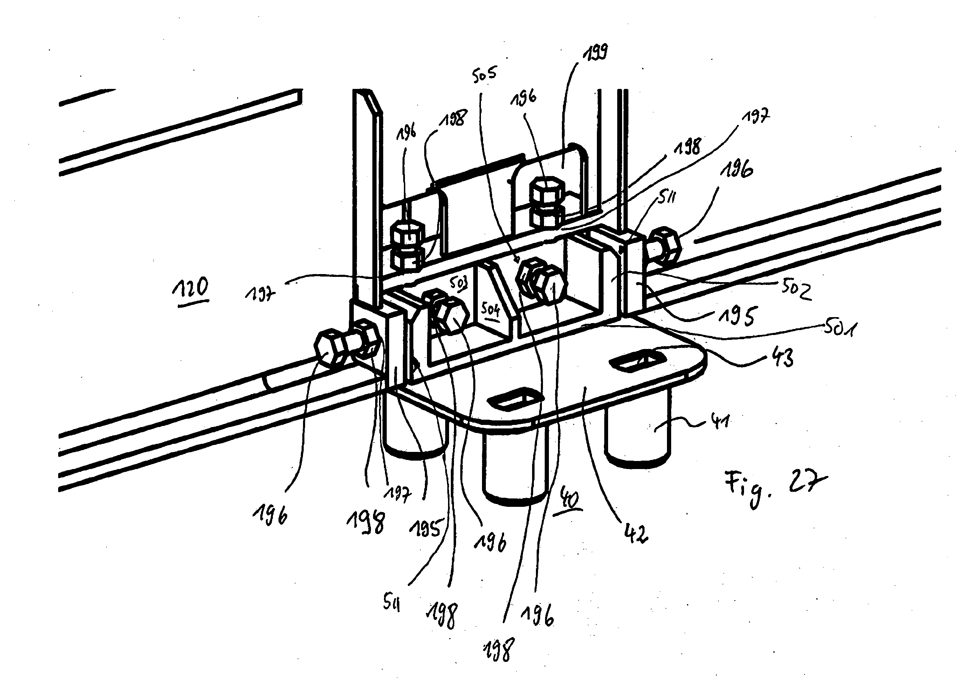

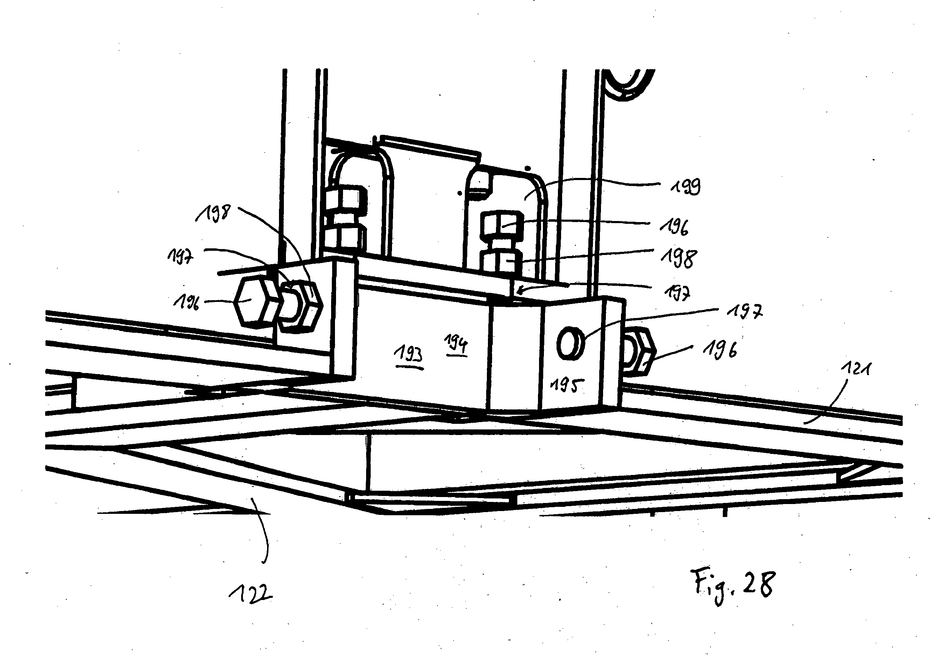

In Fig. 27 ist das horizontale Befestigungsmittel in die entsprechende Aufnahmevorrichtung 40 und die Aussparung 40 eingesetzt. Die Aussparung 193 (siehe Fig. 28) weist eine Rückwand 194 und Seitenwände bzw. Seitenwandabschnitte 195 auf. In den Seitenwänden 195 sind Bohrungen 197 vorgesehen. Weiterhin ist es auch möglich, in der Seitenwand 193 Bohrungen 197 vorzusehen. Auf der Außenseite der Seitenwände sind Gewindemuttern 198 zur Aufnahme von Gewindebolzen 196 angeordnet. Oberhalb der Aussparung 193 sind Aussparungen 199 in der Seitenwand des Außenrahmens 121 des Transportrahmens 120 vorgesehen. Durch diese ist es möglich, in einem weiteren Wandabschnitt ebenfalls Bohrung 195 und Gewindemuttern 198 vorzusehen.

Ist der Transportrahmen 120 auf der Transportoberfläche 410' angeordnet, so werden die Gewindebolzen 196 in die Muttern 198 eingeschraubt, bis sie an den Anschlägen 211 oder auf der Oberseite 206 des Grundkörpers 501 oder der Seitenwand 194, 195 anliegen. Dadurch wird eine haltende horizontale Verbindung zwischen Transportrahmen und dem horizontalen Rahmenbefestigungsmittel 500 bereitgestellt. Dieses stellt wiederum durch die in sich den Einsetzöffnungen 43 der Aufnahmevorrichtungen 40 befindlichen Vorsprünge 509 eine haltende horizontale Verbindung mit der Transportoberfläche 410' bereit.

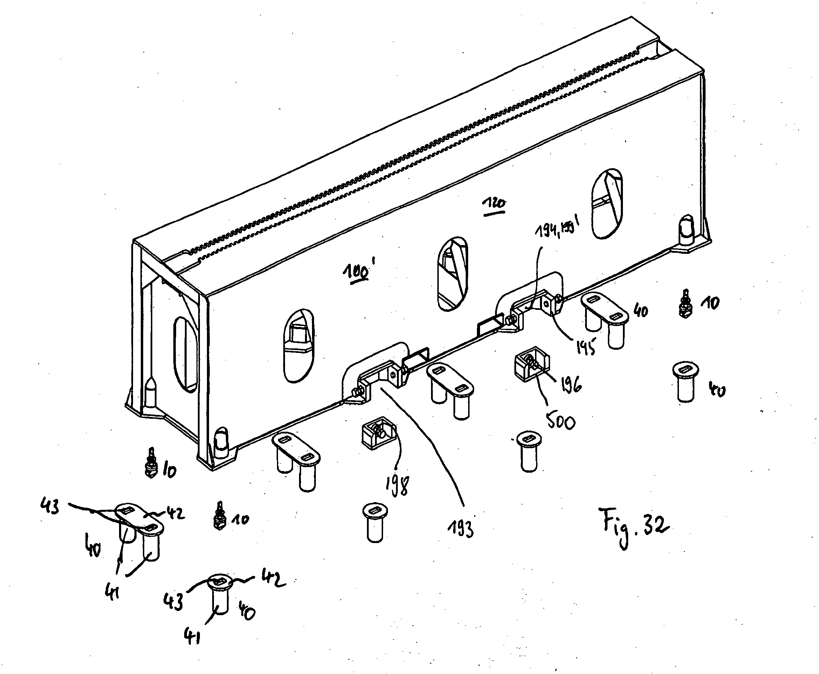

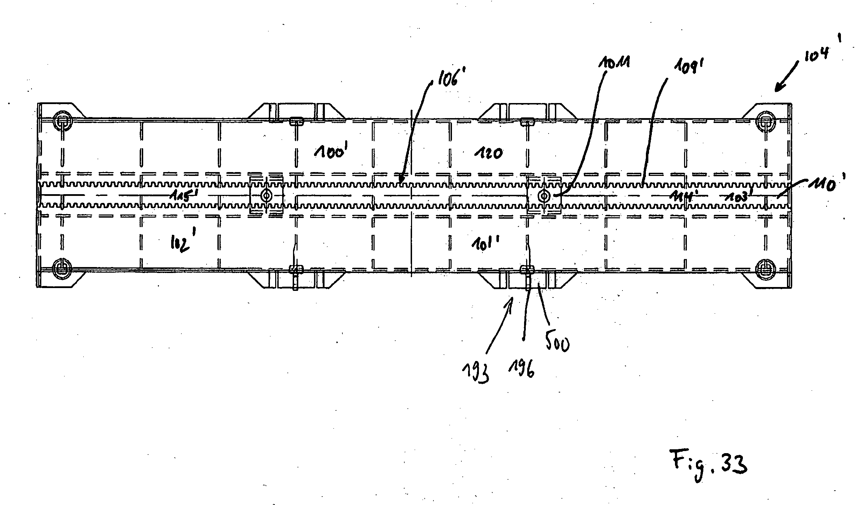

In Fig. 32 bis Fig. 35 ist eine alternative Ausführungsform der horizontalen Rahmenbefestigungsmittel 500 dargestellt, bei dem lediglich ein Befestigungsabschnitt vorgesehen ist. Am Transportrahmen sind dafür mehrere Aussparungen 193 vorgesehen, so dass eine besonders variable Anpassung an die jeweilige Last möglich ist.

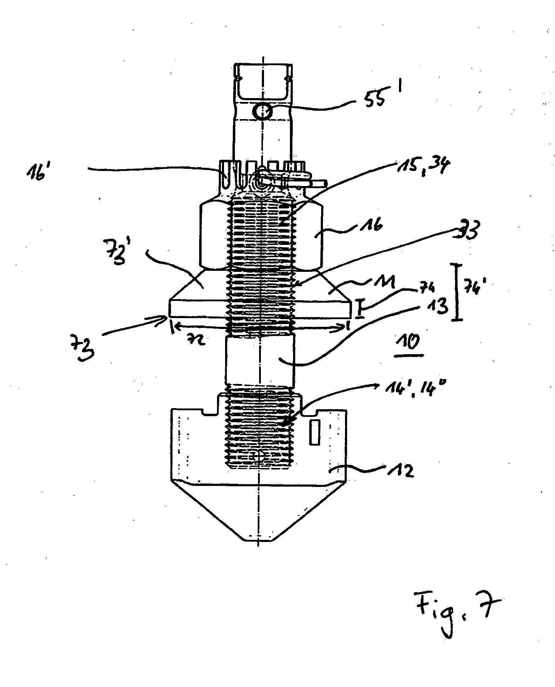

Fig. 7 zeigt eine erste Ausführungsform des erfindungsgemäßen vertikal sichernden Rahmenbefestigungsmittel 10. Das Rahmenbefestigungsmittel 10 umfasst ein Widerlager 11 und ein Verriegelungselement 12, die über einen Gewindebolzen 13 miteinander verbunden sind. Der Gewindebolzen 13 ist über einen Verbindurigsabschnitt 14 mit dem Verriegelungselement 12 verbunden. Dabei handelt es sich um einen Gewindeabschnitt 14' am unteren Ende des Bolzens 13 und eine Öffnung 14" im Verriegelungselement 12, das einen korrespondierenden Gewindeabschnitt aufweist, so dass der Gewindeabschnitt 14' in die Öffnung 14" des Verriegelungselements einschraubbar ist.

Das Widerlager 11 ist als eine ringförmige Scheibe 73 mit einem Durchmesser 72 ausgeführt. An seiner Oberseite weist die Scheibe einen konisch zulaufenden Abschnitt 73' auf, der einstückig mit der Scheibe 73 verbunden ist. Die Scheibe 73 weist in ihrer Mitte eine Bohrung 33 auf. Die Bohrung 33 korrespondiert mit dem Durchmesser des Gewindebolzens 13, so dass dieser durch die Bohrung 33 hindurch gesteckt werden kann. Die Scheibe 73 weist eine Dicke 74 auf, die ausgelegt wird, dass eine hinreichend sichere Haltekraft für die Last bereit gestellt werden kann. Zusätzlich kann die dicke 74' von Scheibe 73 und konischen Abschnitt 73' entsprechend berücksichtigt werden. An einem Abschnitt weist der Gewindebolzen 13 ein Gewinde 15 auf. Auf das Gewinde 15 ist eine Mutter 16 aufgeschraubt, die als Arretierelement 16 fungiert.

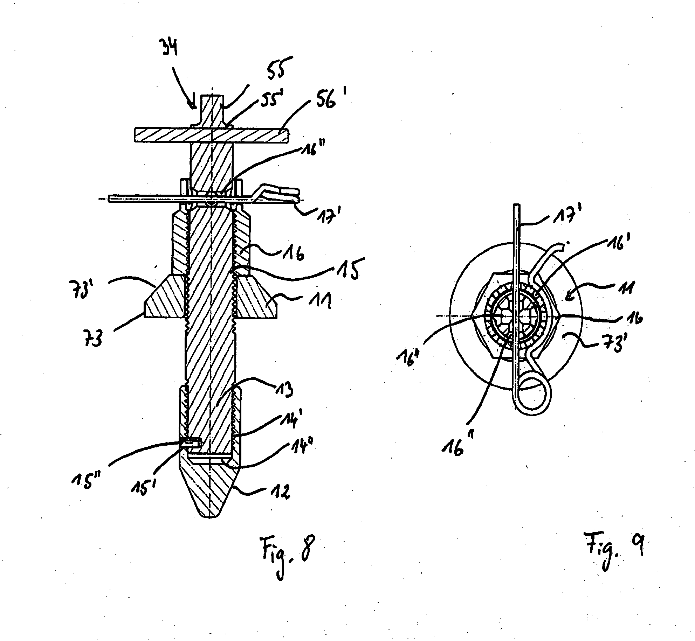

Der Bolzen 13 und das Verriegelungselement 12 weisen eine korrespondieren Bohrung 15' auf, in die ein Arretierstift 15" als Sicherungselement einsetzbar ist (siehe Fig. 8). Oberhalb des Gewindeabschnitts 15 ist eine Kreuzbohrung 16" im Bolzen 13 angeordnet. Diese korrespondiert mit u-förmigen Aussparungen 16' in der Mutter 16. Die Aussparungen 16' und ein Teil der Kreuzbohrung 16" korrespondieren fluchtend im montierten Zustand, so dass ein Federstift 17' durch die Kreuzbohrung 16" und die Aussparung 16' gesteckt werden kann, wodurch die Mutter gesichert wird.

Zur Betätigung des Rahmenbefestigungsmittels 10 weist der Gewindebolzen 13 an seiner Oberseite 34 einen Betätigungsabschnitt 55 auf. Zusätzlich ist eine Bohrung 55' vorgesehen, in die ein Drehhebel 56' einsetzbar ist. Der Drehhebel 56' kann auch als Verbindungsabschnitt mit einem Drehwerkzeug dienen.

Die Funktion und der weitere Aufbau werden anschließend erläutert.

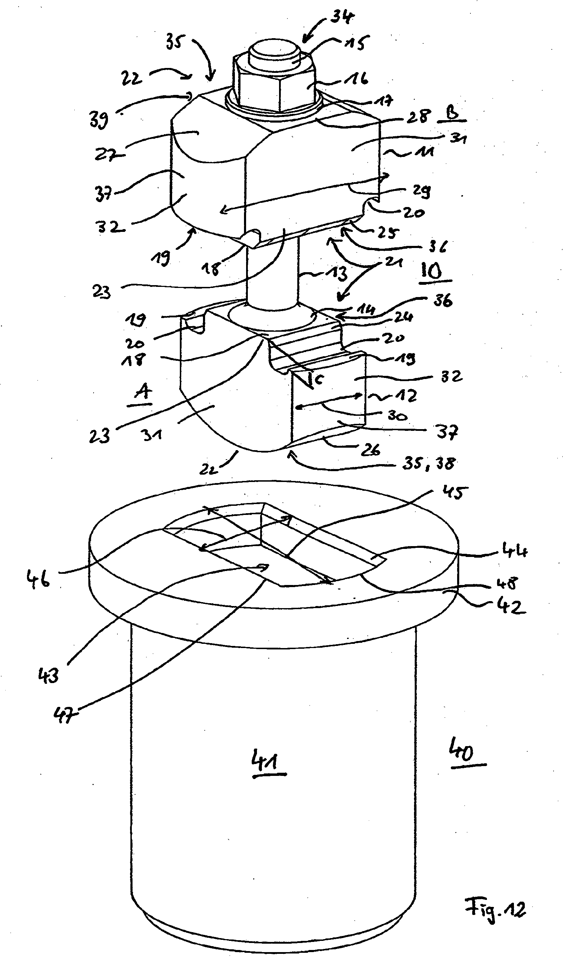

Fig. 12 zeigt eine räumliche Ansicht einer zweiten Ausführungsform eines erfindungsgemäßen vertikal sichernden Rahmenbefestigungssystems, bestehend aus einem Rahmenbefestigungsmittel 10 und einer Aufnahmevorrichtung 40. Das Rahmenbefestigungsmittel 10 umfasst ein oberes Verriegelungselement 11 und ein unteres Verriegelungselement 12, die über einen Gewindebolzen 13 miteinander verbunden sind. Der Gewindebolzen 13 ist über einen Verbindungsabschnitt 14 mit dem unteren Verriegelungselement 12 verbunden. Das obere Verriegelungselement 11 weist eine Bohrung 33 auf, durch die der Gewindebolzen 13 hindurchgeführt ist. An seinem oberen Abschnitt 34 weist der Gewindebolzen 13 ein Gewinde 15 auf. Auf das Gewinde 15 ist eine Mutter 16 aufgeschraubt, die als Arretierelement fungiert. Zwischen oberem Verriegelungselement 11 und der Mutter 16 ist eine Unterlegscheibe 17 angeordnet. Sowohl das obere Verriegelungselement 11 als auch das untere Verriegelungselement 12 weisen einen Abschnitt 18 auf, der dem jeweiligen anderen Verriegelungselement 11, 12 gegenüberliegt. Der Abschnitt 18 weist jeweils zwei Kraftübertragungsflächen 19 auf, die an der Innenseite 21 des Verriegelungselementes 11, 12 angeordnet ist. Des Weiteren weist der Abschnitt 18 einen inneren Abschnitt 21 auf, der über eine Vertiefung 20 von der Kraftübertragungsfläche 19 getrennt ist. Der innere Abschnitt 21 ist als Vierkant 23 ausgeführt.

Das obere und das untere Verriegelungselement 11, 12 weisen in ihrer Grundform eine Quaderform auf, die eine Längserstreckung 29 vorsieht, die größer ist als die Quererstreckung 30. In Längserstreckung 29 weist der Quader zwei Seitenflächen 31 auf, und in Quererstreckung 30 zwei Seitenflächen 32. Des Weiteren weist das Verriegelungselement 11, 12 eine Außenfläche 35 auf, die im montierten Zustand jeweils vom gegenüberliegenden Verriegelungselement 11, 12 weg zeigt, und eine Innenfläche 36, die dem jeweils anderen Verriegelungselement 11, 12 zugewandt ist. Die Seitenflächen 31 in Längserstreckung 29 sind als plane Flächen ausgeführt, wobei die Seitenflächen 32 in Quererstreckung 30 eine Kreisbogenfläche 37 bilden. Der Radius dieser Kreisbogenfläche 37 korrespondiert mit einem Innendurchmesser 49 eines zylindrischen Grundkörpers 41 der Aufnahmevorrichtung 40, die später beschrieben wird. Die Außenfläche 35 des unteren Verriegelungselements 12 ist ebenfalls als Kreisbogenfläche 38 ausgeführt. Diese Kreisbogenfläche 38 stellt eine Einführfläche 27 dar, mit der die Sicherungsvorrichtung 10 einfacher in eine Einsetzöffnung 43 der Aufnahmevorrichtung 40 einsetzbar ist. Das obere Verriegelungselement 11 weist eine Außenfläche 35 auf, die in einem planen oberen Abschnitt 34 und zwei diagonal angeordneten bzw. kreisbogenförmig ausgeführten Einführabschnitten 26 ausgeführt ist. Die Einführabschnitte 26 erleichtern das Aufsetzen einer Last 300 oder eines Transportrahmens 120, wenn deren Befestigungsaufnahme 104' so angeordnet wird, dass das obere Verriegelungselement 11 in diese eingesetzt wird. Der obere plane Abschnitt 34 bildet eine Widerlagefläche 28, gegen die die Unterlegscheibe 17 und die Mutter 16 festgeschraubt werden, und über die entsprechend die Haltekraft der Verriegelungselemente 11 und 12 in die Sicherungsvorrichtung 10 eingeleitet wird.

Das untere Verriegelungselement 12 weist an seinem Vierkant 23 in Quererstreckung 30 eine Fase 24 auf, die als Einführhilfe fungiert, wenn der Vierkant 23 des unteren Verriegelungselementes 12 in seiner Verriegelungsposition B in die Einsetzöffnung 43 von unten eingeführt wird. Eine korrespondierende Fase 24 kann auch am Vierkant 23 des oberen Verriegelungselementes 11 vorgesehen werden (in den Fig. nicht dargestellt).

Das obere Verriegelungselement 11 weist in Quererstreckung 30 eine größere Dimension auf, als das untere Verriegelungselement 12. Hierdurch wird verhindert, dass die Sicherungsvorrichtung 10 nach dem Einsetzen in die Aufnahmevorrichtung 40 in deren Innenraum 51 des zylindrischen Grundkörpers 41 hinein rutscht. Das obere Verriegelungselement 11 weist entlang der Längserstreckung 29 eine Fase 25 auf dem Vierkant 23 auf. Die Fase 25 dient, wie in Fig. 3 dargestellt, dazu, dass das obere Verriegelungselement 11 in seiner Einsetzposition A richtig in die Einsetzöffnung 43 eingeführt wird. Sie dient als Einführhilfe.

Die Kraftübertragungsflächen 19 sind gegenüber dem oberen Abschnitt 24 des Vierkants 23 parallel in die Richtung der jeweiligen Außenfläche 35 versetzt (Versatz C) angeordnet. Auf diese Weise wird der Vierkant 23 erhöht vorgesehen, so dass dieser in die Einsetzöffnung 43 der Aufnahmevorrichtung 40 und die Befestigungsaufnahme 104' des Transportrahmens 120 eintreten kann.

Die Aufnahmevorrichtung 40 weist einen zylindrischen Grundkörper 41 auf, der mit einer Abdeckplatte 42 versehen ist. In die Abdeckplatte 42 ist eine Einsetzöffnung 43 vorgesehen, die mit der Dimensionierung und Form der Verriegelungselemente 11, 12 korrespondiert. Die Einsetzöffnung 43 weist eine Längserstreckung 45 mit einer Längsseite 47 und eine Quererstreckung 46 mit einer Querseite 48 auf. Die Querseite 48 ist dabei bogenförmig ausgeführt. An der Oberseite der Abdeckplatte 42 weist die Einsetzöffnung 43 umlaufend eine Fase 44 auf, die das Einsetzen der Sicherungsvorrichtung erleichtert. Der zylindrische Grundkörper 41 weist einen Innendurchmesser 49 auf. Der Innendurchmesser 49 ist so gewählt, dass lediglich ein geringer Abstand 50 (siehe Fig. 9) des unteren Verriegelungselementes 12 zur Innenwand 52 des zylindrischen Grundkörpers 41 besteht.

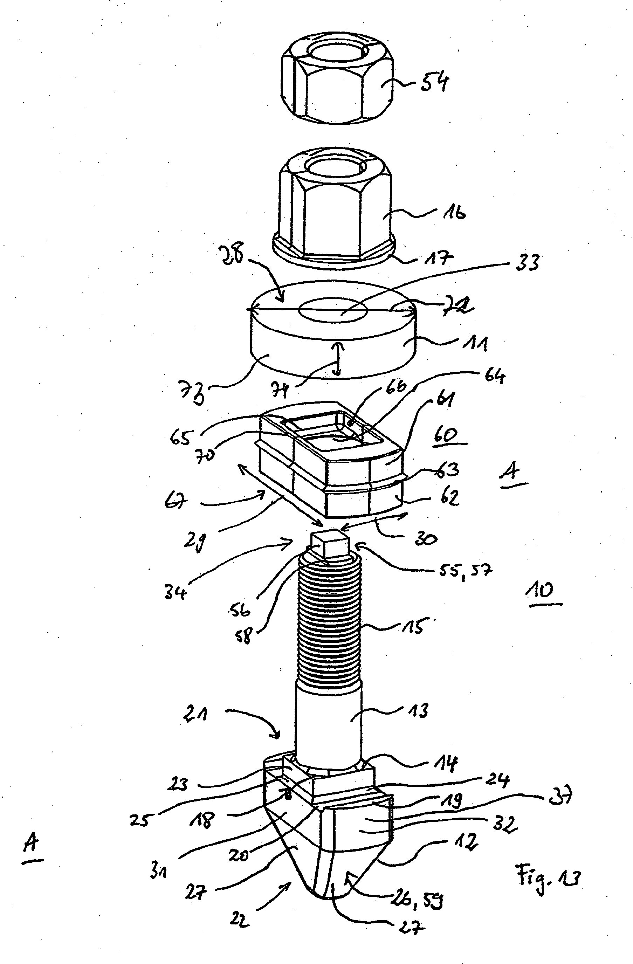

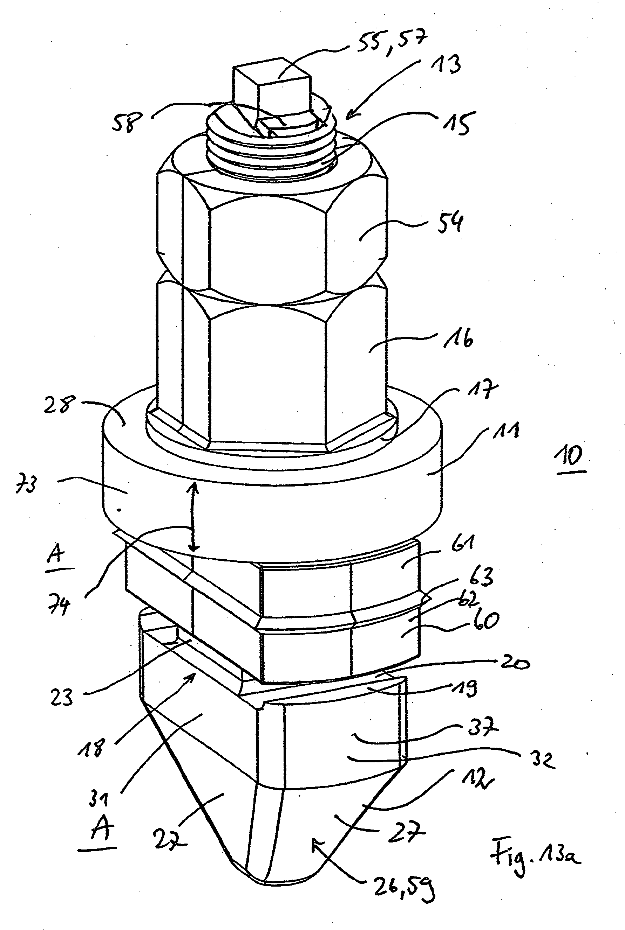

Fig. 13 zeigt eine Explosionsansicht einer dritten Ausführungsform eines Rahmenbefestigungsmittels 10. Die zusammengesetzte Ausführung ist in Fig. 13a dargestellt. Die dritte Ausführungsform des Rahmenbefestigungsmittels 10 umfasst ein Widerlager 11 und ein Verriegelungselement 12, die über einen Gewindebolzen 13 miteinander verbunden sind. Der Gewindebolzen 13 ist über einen Verbindungsabschnitt 14 mit dem Verriegelungselement 12 verbunden. Das Widerlager 11 ist als eine ringförmige Scheibe 73 mit einem Durchmesser 72 ausgeführt. Die Scheibe 73 weist in ihrer Mitte eine Bohrung 33 auf. Die Bohrung 33 korrespondiert mit dem Durchmesser des Gewindebolzens 13, so dass dieser durch die Bohrung 33 hindurch gesteckt werden kann. Die Scheibe 73 weist eine Dicke 74 auf, die ausgelegt wird, dass eine hinreichend sichere Haltekraft für die Last 300 bereit gestellt werden kann. An seinem oberen Abschnitt 34 weist der Gewindebolzen 13 ein Gewinde 15 auf. Auf das Gewinde 15 ist eine Mutter 16 aufgeschraubt, die als Arretierelement 16 fungiert. Zwischen Widerlager 11 und der Mutter 16 ist eine Unterlegscheibe 17 angeordnet. Diese kann in einer alternativen Ausführungsform auch fest mit der Mutter 16 verbunden sein. Oberhalb der Mutter 16 ist als Konterelement 54 eine weitere Mutter 54 angeordnet. Das Verriegelungselement 12 weist einen Abschnitt 18 auf, der dem Widerlager 11 zugewandt ist. Der Abschnitt 18 weist zwei Kraftübertragungsflächen 19 auf, die an der Innenseite des Verriegelungselements 12 angeordnet sind. Des Weiteren weist der Abschnitt 18 einen inneren Abschnitt 21 auf, der über eine Vertiefung 20 von der Kraftübertragungsfläche 19 getrennt ist. Der innere Abschnitt 21 ist als Vierkant 23 ausgeführt. Das Verriegelungselement 12 weist in seiner Grundform eine Quaderform auf, die eine Längserstreckung 29 vorsieht, die größer ist als die Quererstreckung 30. An seiner vom Widerlager 11 abgewandten Außenseite 22 ist ein Einführabschnitt 26 mit Einführflächen 27 vorgesehen, die als Konus 59 ausgeführt sind. An seiner Außenseite weist die Scheibe 73 eine Widerlagerfläche 28 auf, gegen die das Arretierelement 16 über die Unterlegscheibe 17 gegengeschraubt wird. In Längserstreckung 29 weist der Quader zwei Seitenflächen 31 auf und in Quererstreckung 30 zwei Seitenflächen 32. Die Längserstreckung 29 und die Quererstreckung 30 sowie die Form der Seitenflächen 32 korrespondieren im Wesentlichen mit der Form der Einsetzöffnung 43. Die Seitenflächen 31 in Längserstreckung sind als plane Flächen ausgeführt, wobei die Seitenflächen 32 in Quererstreckung 30 eine Kreisbogenfläche 37 bilden. Der Radius dieser Kreisbogenfläche 37 korrespondiert mit dem Innendurchmesser 49 des zylindrischen Grundkörpers 41 der Aufnahmevorrichtung 40, die zuvor beschrieben wurde. Der Durchmesser 72 der Scheibe 73 des Widerlagers 11 korrespondiert analog mit dem Innendurchmesser 49 des zylindrischen Grundkörpers 41 der Aufnahmevorrichtung 40.

Der Konus 59 bzw. der Einführabschnitt 26 weist Einführflächen 27 auf, mit denen die Sicherungsvorrichtung 10 einfacher in die Einsetzöffnung 43 der Aufnahmevorrichtung 40 einsetzbar ist. Weiterhin erleichtern die Einführabschnitte 26 das Aufsetzen des Transportrahmens 120, wenn deren Befestigungsaufnahme 104' so angeordnet wird, dass das Verriegelungselement 11 in diese eingesetzt wird.

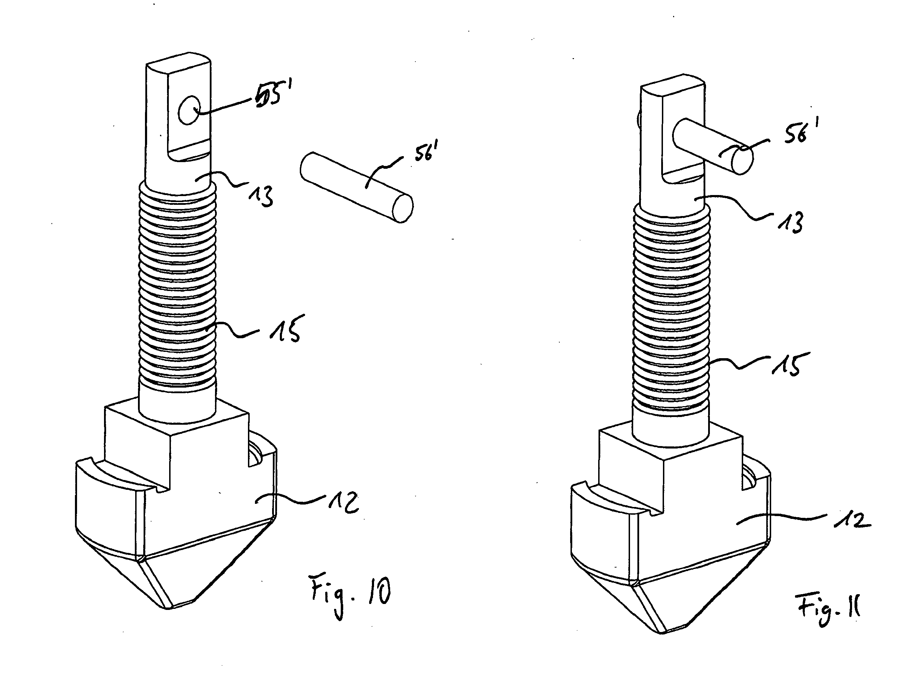

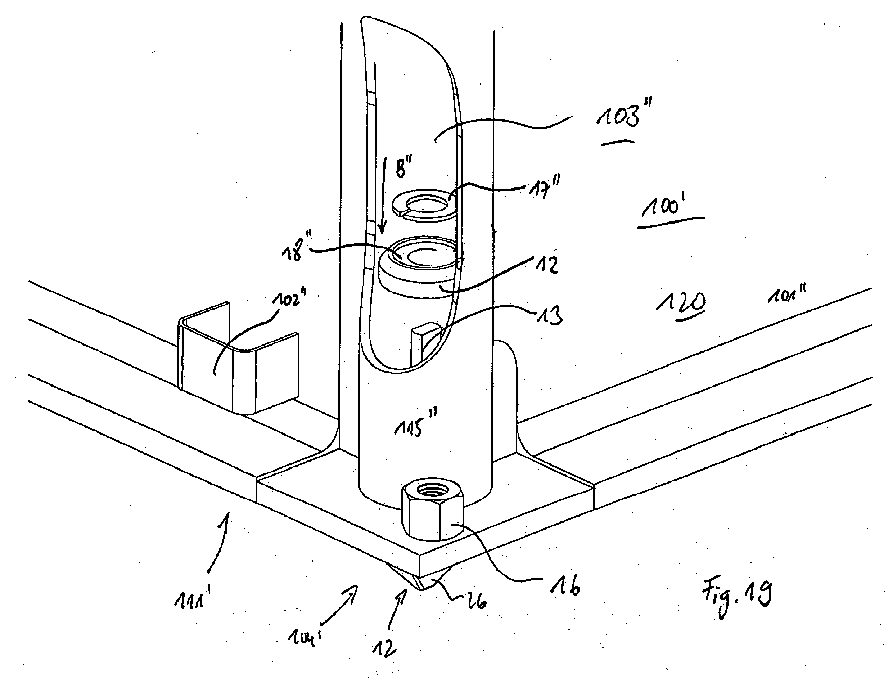

Das Verriegelungselement 12 kann an seinem Vierkant 23 sowohl in Quererstreckung 30 als auch in Längserstreckung 29 eine Fase 24 aufweisen, die als Einführhilfe fungiert, wenn der Vierkant 23 des Verriegelungselements 12 sowohl in seiner Einsetzposition A als auch in seiner Verriegelungsposition B in eine Aussparung 65 eines unteren Teils 67 eines unteren Einsetzabschnitts 62 eines Einsetzkörpers 60 eingesetzt wird. Die Fase 24 ist im Ausführungsbeispiel 2 in den Fig. 10 bis 21 nicht dargestellt.

Weiterhin weist das Rahmenbefestigungsmittel 10 den Einsetzkörper 60 auf. Der Einsetzkörper 60 weist einen oberen Einsetzabschnitt 61 und den unteren Einsetzabschnitt 62 auf, die in ihrem Übergangsbereich eine Fase 63 aufweisen. Der Einsetzkörper 60 weist entweder eine Bohrung 64 und/oder eine Aussparung 65 auf. Die Bohrung 64 korrespondiert mit dem Durchmesser des Gewindebolzens 13. Die Aussparung 65 korrespondiert mit der Dimension des Vierkants 23. Der Einsetzkörper 60 weist in Längserstreckung 29 eine größere Dimension als in Quererstreckung 30 auf. Der Einsetzkörper 60 entspricht im Wesentlichen der Dimension der Einsetzöffnung 43 der Aufnahmevorrichtung 40 bzw. der Befestigungsaufnahme 104', beispielsweise des Transportrahmens 120. Die Fase 63 korrespondiert dabei mit der Fase 44 der Einsetzöffnung 43 bzw. einer korrespondierenden Fase 110 der Befestigungsaufnahme 104'. Sowohl an ihrem äußeren Umfang weist der Einsetzkörper 60 eine Fase 70 auf, die das Einsetzen des Einsetzkörpers in die Einsetzöffnungen erleichtert. Des Weiteren ist eine Fase 75 vorgesehen, die an der Außenseite der Aussparung 65 bzw. der Bohrung 64 vorgesehen ist, um das Einsetzen bzw. Einführen des Gewindebolzens 13 bzw. des Vierkants 23 zu erleichtern.

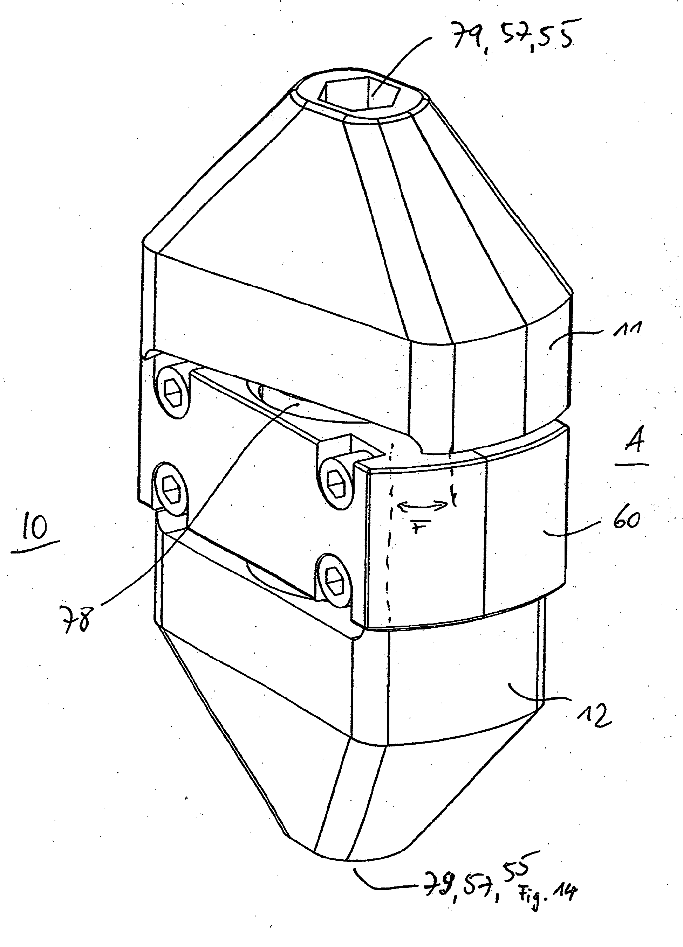

In Fig. 14 ist eine vierte Ausführungsform des Rahmenbefestigungsmittels 10 dargestellt. Das Rahmenbefestigungsmittel 10 besteht dabei aus einem oberen Verriegelungselement 11 und einem unteren Verriegelungselement 12, die über einen Bolzen 78 miteinander verbunden sind. Das Verbinden des Bolzens 78 mit den Verriegelungselementen 11, 12 erfolgt über einen Verbindungsabschnitt 14. Die Verriegelungselemente 11, 12 weisen an ihrer Außenseite 22 jeweils einen Einführabschnitt 26 mit Einführflächen 27 auf, der als Konus 59 ausgeführt ist. Des Weiteren weisen die Verriegelungselemente 11, 12 einen inneren Abschnitt 21 auf, an dessen Außenseite über die Quererstreckung 30 jeweils eine Kraftübertragungsfläche 19 angeordnet ist. Die Kraftübertragungsfläche 19 ist durch eine Vertiefung 20 vom Bolzen 78 getrennt. Das obere Verriegelungselement 11 ist aber gegenüber dem unteren Verriegelungselement 12 um einen Drehversatz F auf dem Bolzen 78 verdreht angeordnet. Bei der Verdrehung handelt es sich dabei um einen Versatz von beispielsweise 15°. An seiner Außenseite 22 weist wenigstens das obere Verriegelungselement 11 ein Verbindungselement 57 als Drehabschnitt 55 auf. Vorliegend ist dieses als Sechskant 79 ausgeführt. In dieses Verbindungselement 57 kann ein Werkzeug eingreifen, um ein gleichzeitiges Verdrehen der Verriegelungselemente 11, 12 gegenüber dem Einsetzkörper 60 zu bewirken. Der Einsetzkörper 60 weist einen rechten Teil 80 und einen linken Teil 81 auf. Beide Teile beinhalten eine Aussparung 82, die von ihrem Durchmesser her mit dem Durchmesser des Bolzens 78 korrespondiert, und diesen im montierten Zustand umschließen. An der jeweiligen Ober- bzw. Unterseite der Aussparung ist eine Fase angeordnet. Sowohl der rechte Teil 80 als auch der linke Teil 81 weisen jeweils vier korrespondierende Bohrungen 85 auf, durch die Gewindestifte 84 hindurch gesteckt werden können. Den Gewindestiften 84 gegenüber sind Gewindeaufnahmen 86 als Befestigungselemente vorgesehen. Durch die Gewindestifte 84 und die Gewindeaufnahmen 86 können der rechte und der linke Teil 69, 81 miteinander verbunden werden. Des Weiteren weisen sowohl der rechte Teil 80 als auch der linke Teil 81 jeweils eine Bohrung 87 auf, in die eine Feder 88 und ein Drehwiderlager 89, je in Form einer Kugel, vorgesehen wird. Die Feder 88 und das Drehwiderlager 89 wirken als Drehhemmung auf den Bolzen 78, um ein spontanes bzw. selbsttätiges Verdrehen zu verhindern. In Fig. 14 befindet sich das Verriegelungselement 12 in Einsetzposition A.

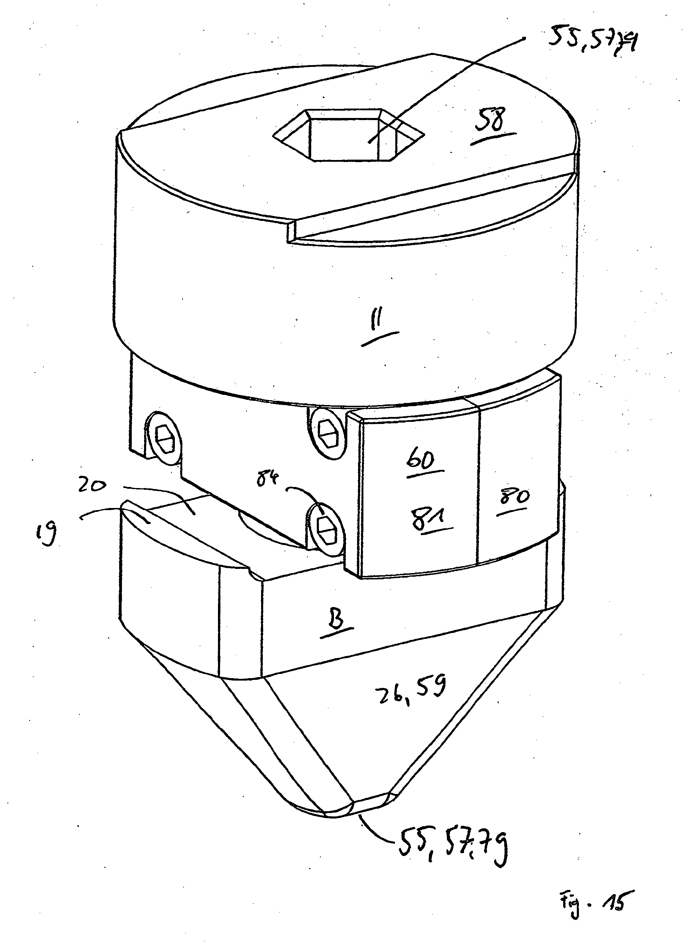

Die Fig. 15 zeigt eine fünfte Ausführungsform des Rahmenbefestigungsmittels 10. Diese unterscheidet sich von der dritten Ausführungsform dadurch, dass anstelle des oberen Verriegelungselementes 11 ein Widerlager 11 vorgesehen ist, das über den Bolzen 78 mit dem unteren Verriegelungselement 12 verbunden ist. Der Durchmesser 77 des Widerlagers 11 korrespondiert dabei mit dem Innendurchmesser 49 der Aufnahmevorrichtung 40. Der Aufbau ist ansonsten identisch mit dem vierten Ausführungsbeispiel. Sowohl im vierten Ausführungsbeispiel als auch im fünften Ausführungsbeispiel ist die Länge des Bolzens 78 so ausgelegt, dass eine Ablösebewegung des Transportrahmens 120 von der Transportoberfläche 410' im Wesentlichen nicht möglich ist. In Fig. 15 befindet sich das Verriegelungselement 12 in Verriegelungsposition B.

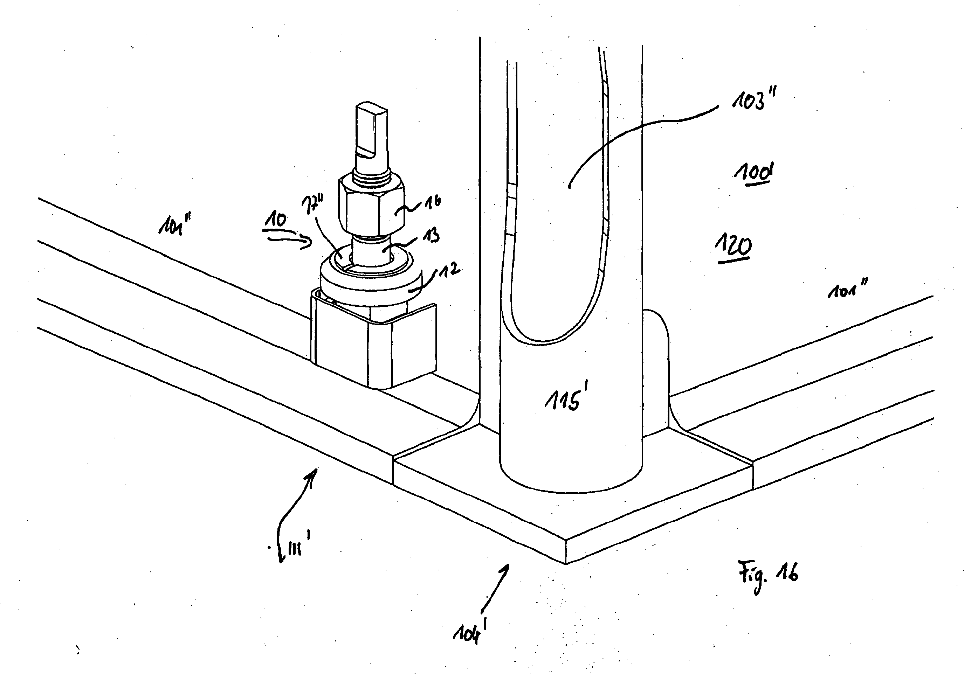

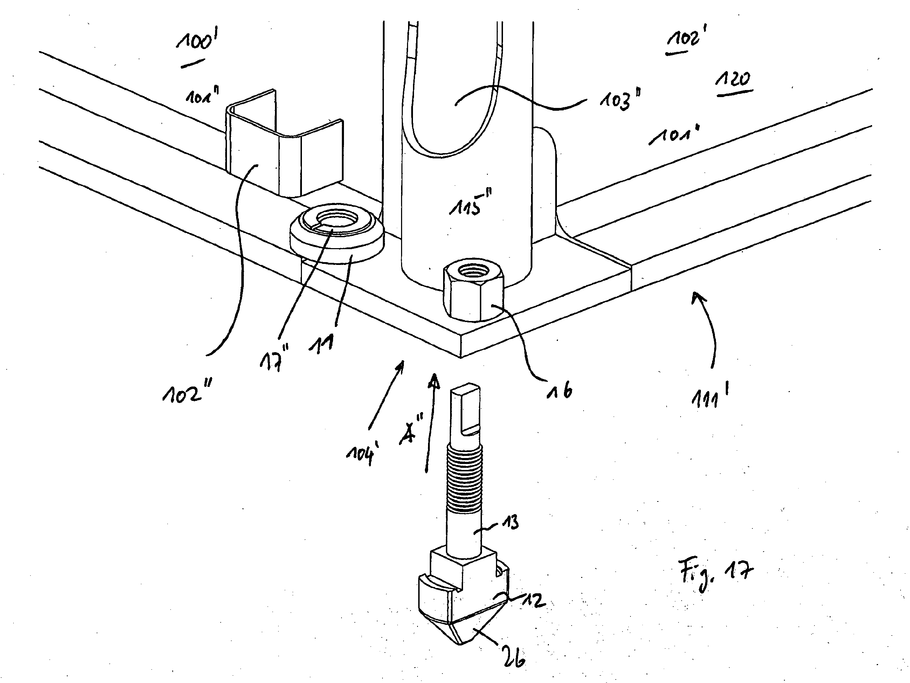

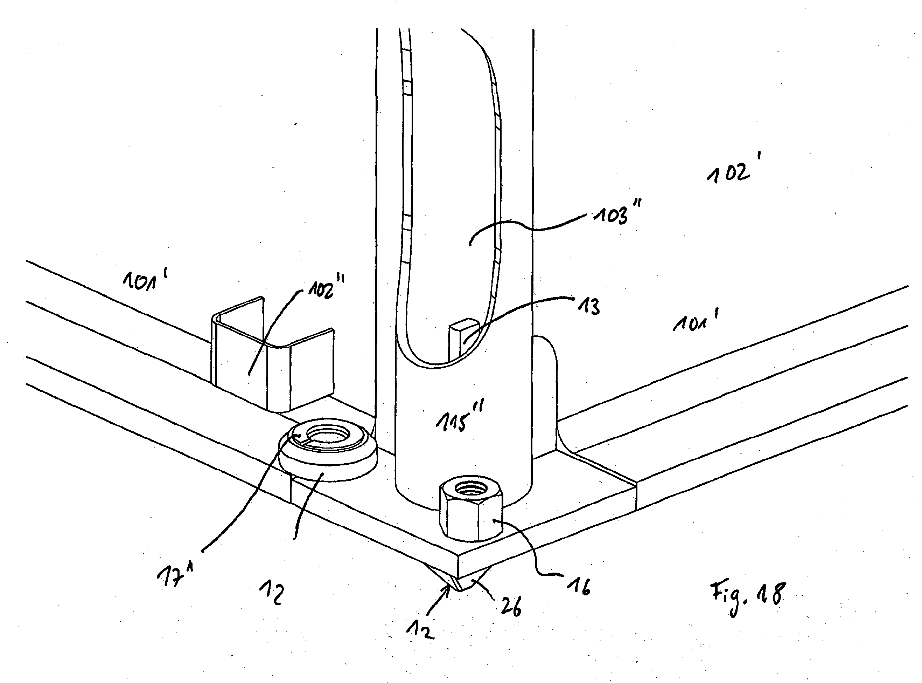

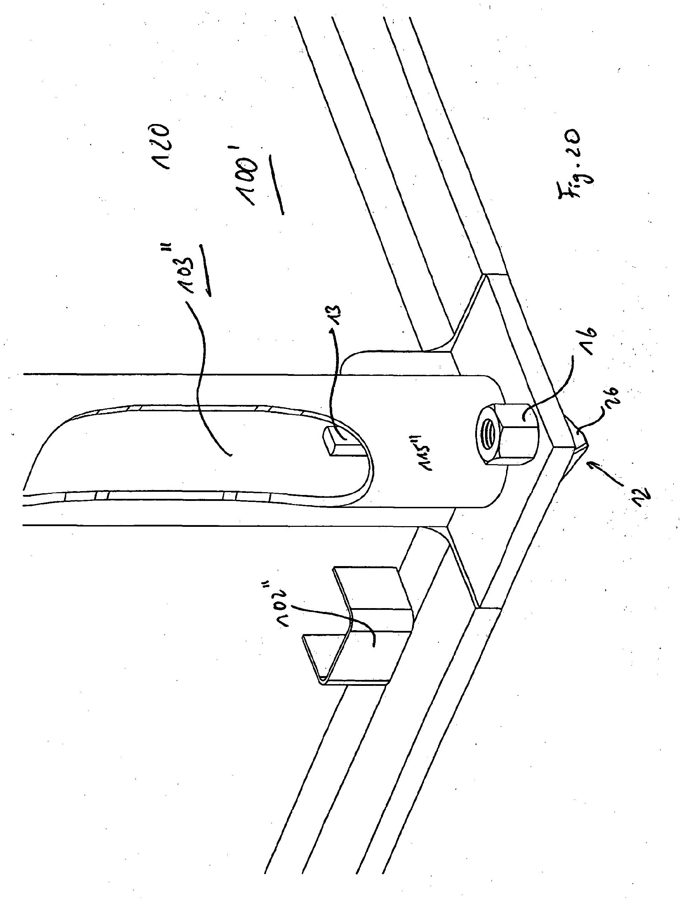

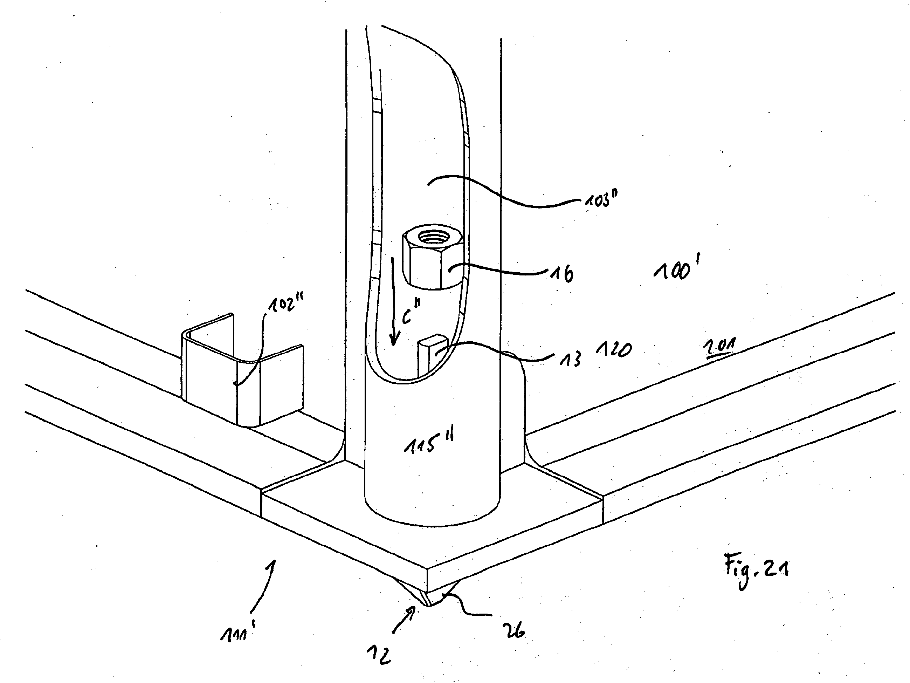

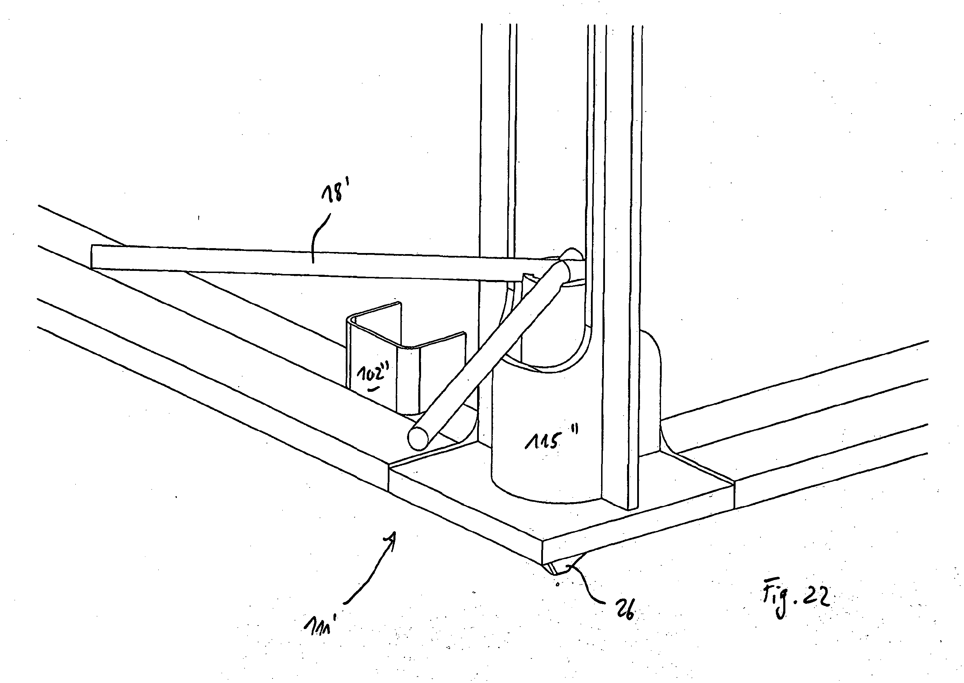

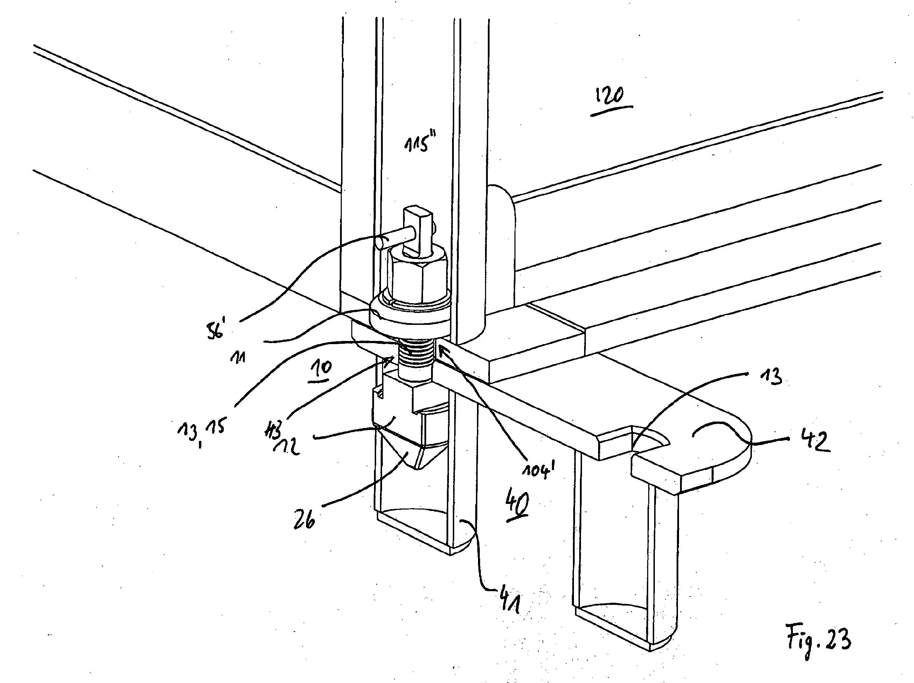

In den Fig. 16 bis Fig. 23 ist dargestellt, wie die Herstellung der vertikalen Verbindung über die vertikalen Rahmenbefestigungsmittel 10 vorgenommen wird. In einer Aufnahme 102" am Transportrahmen 120 ist das vertikale Rahmenbefestigungsmittel 10 angeordnet, damit es vor dem Abstellen des Transportrahmens 120 zum Einsetzen in die entsprechende Befestigungsaufnahme 104' zur Verfügung steht (siehe Fig. 16). In Fig. 17 wird dargestellt, dass der Gewindebolzen 13 mit dem Verriegelungselement 12 von dem Widerlager 11 und der Mutter 16 sowie einem Federring 17", der in einer Vertiefung 18" auf dem Widerlager 11 vorgesehen ist, gelöst wird und in Pfeilrichtung A" in die 'Befestigungsaufnahme 104', oberhalb derer ein Zylinder 115" mit einer Öffnung 103"angeordnet ist, eingesetzt wird. Nach dem einsetzen (Fig. 18) wird das Widerlager 11 mit dem Federring 17" auf den Gewindebolzen 13 auf gesetzt und die Mutter 16 wird ebenfalls auf den Gewindebolzen 13 aufgeschraubt (Fig. 20 und Fig. 21). Das Festschrauben erfolgt mit einem Werkzeug 18' (Fig. 22). Das Überführen des Verriegelungselements 12 von der Einsetzposition A in die Verriegelungsposition B erfolgt über einen Drehhebel 56' der in eine Bohrung 55' eingesetzt ist (Fig.23).

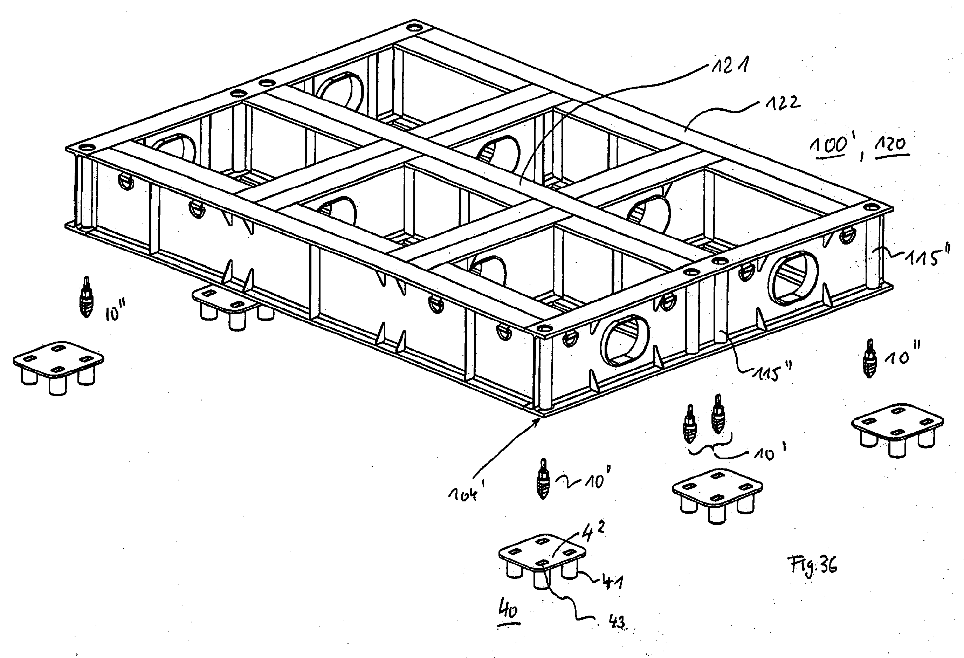

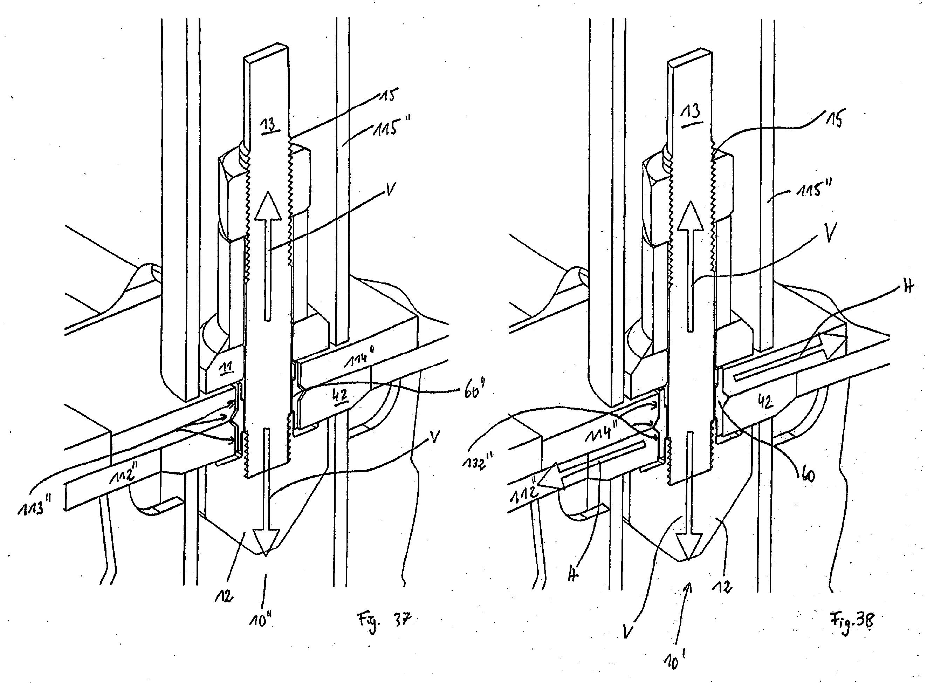

In Fig. 36 bis Fig. 38 sind zwei Ausführungsformen 10', 10 " zur zweiten Ausführungsform gemäß Fig.13, 13a gezeigt. Dabei sind zwei unterschiedliche Einsetzköper 60, 60' in Verwendung. Der Einsetzköper 60', der in Fig. 37 gezeigt ist, ist in der Dimensionierung in Längserstreckung und Quererstreckung kleiner als der Einsetzkörper 60, so dass ein Abstand 113" zwischen der Längsseitenwand und der Querseitenwand zur Einsetzöffnung 43 beseht. Die Verkleinerung wird durch eine Reduktion der Wandstärke 68 bzw. der Breite 71 erreicht. Durch die Abstände 113" lassen sich keine Horizontalkräfte H, sondern nur Vertikalkräfte G übertragen, wie dieses in Fig. 37 dargestellt ist. In Fig. 38 ist der größere Einsetzkörper 60 vorgesehen, bei dem kein Abstand 113" vorhanden ist, sondern die Flächen sind anliegend. Dadurch lassen sich neben den Vertikalkräften G auch Horizontalkräfte H übertragen, wie dieses in Fig. 38 dargestellt ist. Dieses kann dann zum Einsatz kommen, wenn lediglich auf einer Seite eines Transportahmens 120 neben den Vertikalkräften G auch Horizontalkräfte H übertragen werden dürfen oder sollen. Zur besseren Unterscheidung können die unterschiedlichen Sicherungsvorrichtungen 10 farblich markiert sein. Gleiches gilt auch für die Aufnahmen 115" an den Rahmen 120.

Fig. 36 zeigt eine Ausführungsform eines Transportrahmens 120. Am Transportrahmen 120 sind die Sicherungsvorrichtungen 10', 10" in die Befestigungsaufnahmen 104' einsetzbar. Auf der Transportoberfläche 410' sind Aufnahmevorrichtungen 120 angeordnet die jeweils vier zylindrische Grundkörper 41 aufweisen, die an einer Grundfläche 42 befestigt sind, und die eine besondere Verstärkung aufweisen kann. Beim Absenken werden die Sicherungsvorrichtungen 10', 10" in die Aufnahmevorrichtungen 40 eingeführt und anschließend wie zuvor beschrieben arretiert.

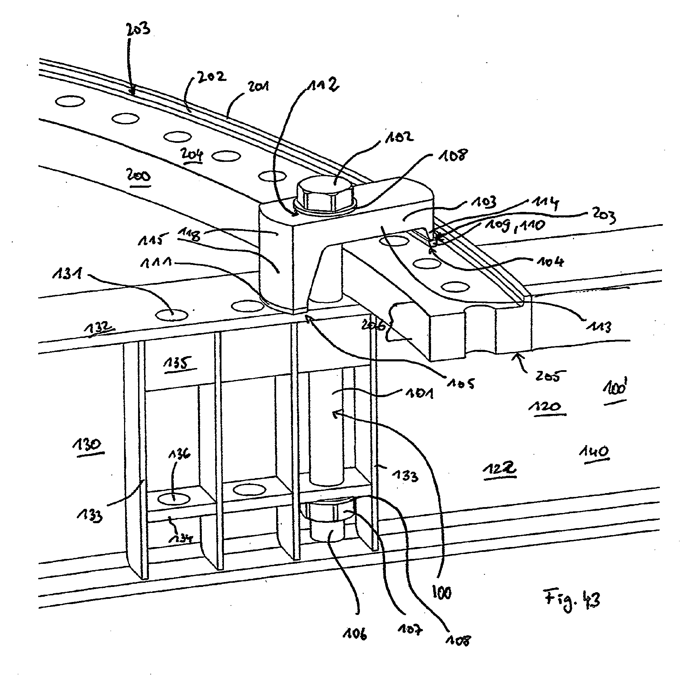

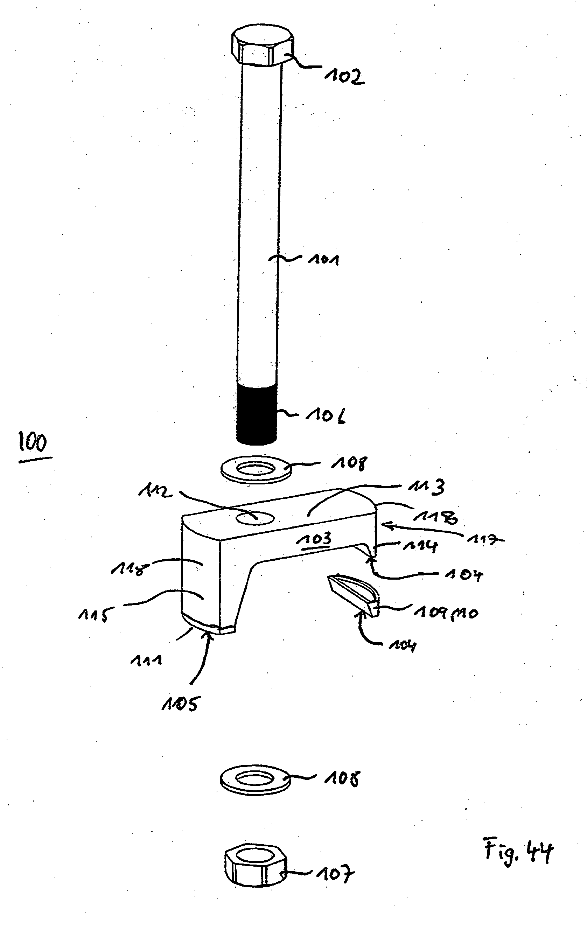

Fig. 43 bis 46 zeigen eine erste Ausführungsform eines erfindungsgemäßen lastsichernden Sicherungselements 100 in Verbindung mit einem Transportrahmen 120 und einem Flansch 200 als Verbindungsabschnitt eines Elements 300 einer Windkraftanlage.

Das Sicherungselement 100 besteht aus einem Bolzen 101, an dessen einem Ende ein Bolzenkopf 102 und an dessen anderem Ende ein Gewindeabschnitt 106 vorgesehen ist. Weiterer Bestandteil des Sicherungselements 100 ist ein Arretierelement 103, das eine Bohrung 112 aufweist, durch die der Bolzen 101 gesteckt ist. Das Arretierelement 103 weist einen Ausleger 113 auf, an dessen einem Ende ein Vorsprung 114 und an dessen anderem Ende ein längerer Vorsprung 115 vorgesehen ist. Am Ende des Vorsprungs 114, 115 ist ein Auflageabschnitt 104, 105 vorgesehen. Am kürzeren Vorsprung 114 ist ein Distanzstück 109, 110 vorgesehen, das eine Vertiefung 116 aufweist, der mit dem jeweiligen Auflageabschnitt 104, 105 übereinstimmt. Am Ende des Vorsprungs 115 ist ein Pufferelement 111 vorgesehen. Alternativ kann hier ebenfalls ein Distanzstück angeordnet werden. In einer weiteren Alternative ist weder ein Distanzstück 109, 110, noch ein Puffer 111 vorgesehen, so dass der Vorsprung 115 selber an seinem Ende den Auflageabschnitt 105 bildet.

Die jeweilige Außenseite 118 des Vorsprungs 114, 115 ist gewölbt ausgeführt. Im montierten Zustand, wie in Fig. 1 dargestellt ist, bildet die Außenseite 118 bzw. der korrespondierende Abschnitt des Distanzstückes ein Widerlagerabschnitt 117. Wenn das Element der Windkraftanlage auf dem Transportrahmen 120 angeordnet ist, befindet sich die Unterseite 205 des Flansches 200 in Verbindung mit der Oberfläche 132 des Transportrahmens 120. An der Oberseite 204 des Flansches 200 befindet sich ein erhöhter Abschnitt 202, der ein Widerlager 203 bildet. Das Widerlager 203 und das Widerlagerabschnitt 117 sichern den Flansch 200 gegen ein Verrutschen auf dem Transportrahmen 120.

Zur Montage des Sicherungselements 100 in Verbindung mit dem Transportrahmen 120 weist der Transportrahmen 120 einen Arretierbereich 130 auf. In der Oberfläche 132 sind im Arretierbereich 130 mehrere Bohrungen 131 vorgesehen. Unterhalb der Bohrung 131 befindet sich ein Verstärkungselement 135, durch das die Bohrung 131 ebenfalls hindurchgeht. Das Verstärkungselement 135 ist seitlich durch Lastaufnahmen 130 vorgesehen, die mit der Innenwand 140 des Transportrahmens 120 verbunden sind. Die Arretierbereiche 130 sind an Innentraversen 122 vorgesehen, die rechtwinklig mit einem Außenrahmen 121 des Transportrahmens 120 verbunden sind. Unterhalb des Verstärkungselements 135 ist ein Widerlager 134 vorgesehen, das eine Bohrung 136 aufweist. Zur Montage des Sicherungselements 100 in Verbindung mit dem Transportrahmen 120 wird das Arretierelement 103 auf den Bolzen 101 aufgesteckt. Zwischen Arretierelement 103 und Bolzenkopf 102 befindet sich eine Unterlegscheibe 108. Der Bolzen 101 wird durch die Öffnung 131 gesteckt und nach unten geführt, bis er ebenfalls durch die Öffnung 136 des Widerlagers 134 hindurchtritt. Anschließend wird eine Unterlegscheibe 108 auf den Bolzen aufgesteckt und auf den Gewindeabschnitt 106 des Bolzens wird eine Mutter 107 aufgeschraubt.

Nachdem der Flansch 200 auf die Oberfläche 132 aufgesetzt wurde, wird das Arretierelement 103 auf die Oberseite 204 des Flansches 200 aufgesetzt, so dass entweder das Widerlagerabschnitt 117 in Berührung mit dem Widerlager 203 kommt, wie dieses in Fig. 43 dargestellt ist. Je nach Dicke 206 des Flansches 200 wird auf den Vorsprung 114 das Distanzstück 109 oder 110 ausgewählt und auf den Vorsprung 114 aufgesteckt. Dabei ist wichtig, dass sich Montage des Distanzstückes der Auflageabschnitt 104 in Berührung mit der Oberseite 204 des Flansches 200 befindet und gleichzeitig der Auflageabschnitt 105 des Arretierelements 103 mit der Oberfläche 132 des Transportrahmens 120 in Berührung befindet. Anschließend wird die Mutter 107 auf dem Gewindeabschnitt 106 gegen das Widerlager 134 verschraubt, so dass zwischen Bolzenkopf 102 und Mutter 107 eine Kraft erzeugt wird, die bewirkt, dass das Arretierelement 103 auf die Oberfläche 132 und die des Transportrahmens 120 und die Oberfläche 204 des Flansches 200 gedrückt wird. Hierdurch wird die Arretierung des Flansches 200 in Bezug auf den Transportrahmen 120 bewirkt, so dass das mit dem Flansch verbundene Element der Windkraftanlage gegenüber dem Transportrahmen 120 arretiert ist. In Abhängigkeit des Durchmessers des Flansches 200 wird entsprechend das Sicherungselement 100 in die verschiedenen Bohrungen 131 eingesetzt.

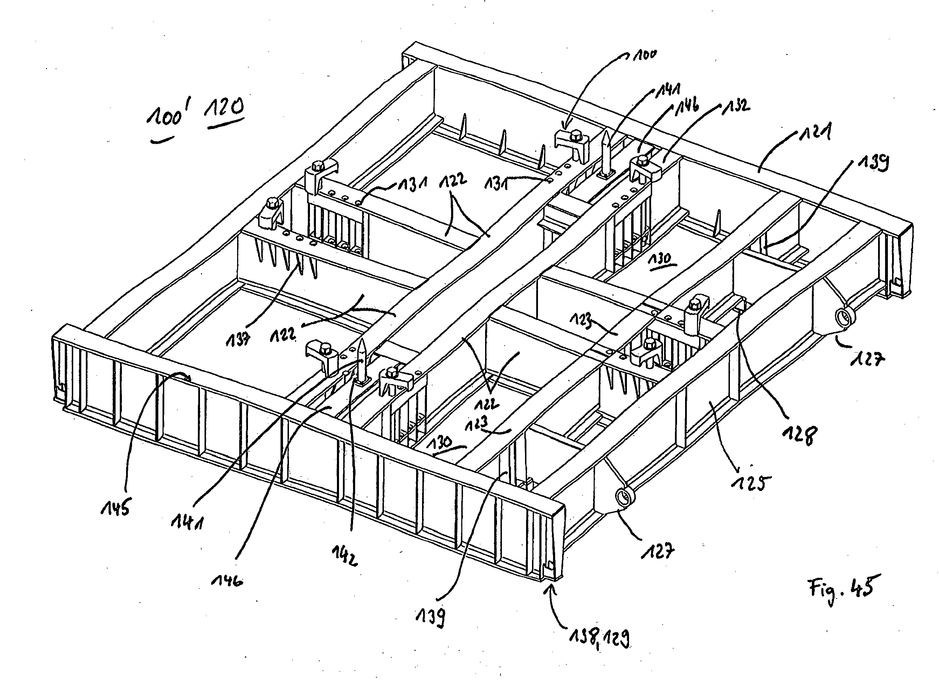

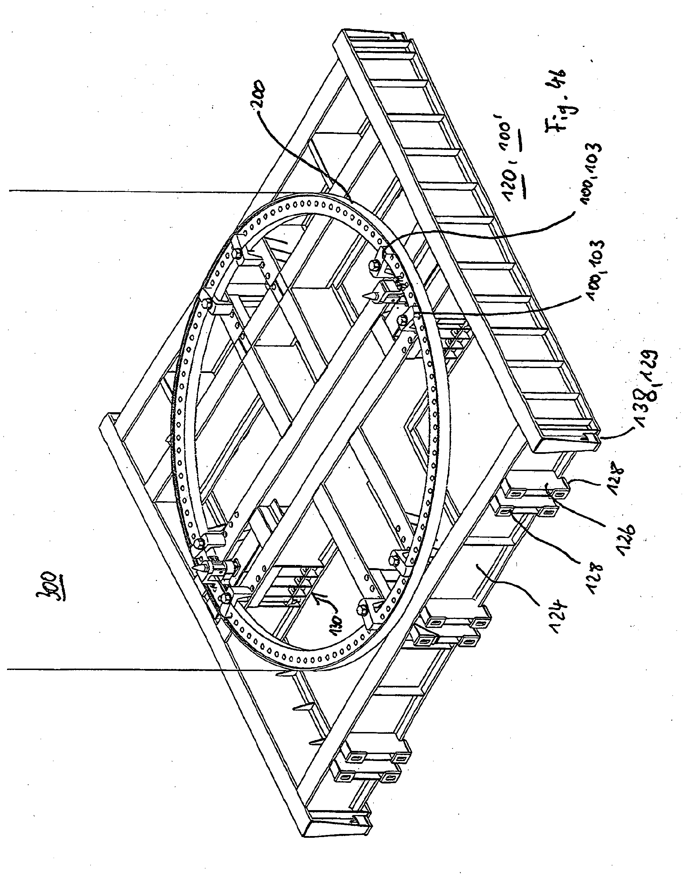

Der Transportrahmen 120 (Fig. 45, Fig. 46) weist einen Außenrahmen 121 auf, in dem Innentraversen 122 beispielsweise rechtwinklig kreuzförmig angeordnet sind (es sind auch andere Anordnungen möglich). An den Innentraversen 122 befinden sich die Arretierbereiche 130.

An einer auf der Außenseite des Außenrahmens angeordneten Seitenfläche 124 sind Trägerelemente 126 angeordnet. Auf diesem Trägerelement befinden sich parallel zur Seitenfläche 124 und an der Unterseite 143 des Trägerelements 124 Isosockets 128 zur Aufnahme von Twistlocks 210. Auf der gegenüberliegenden Seitenfläche 125 zur Seitenfläche 124 befinden sich Hubanschläge 127 zur Befestigung von Hubgeschirr einer Hubvorrichtung, bei der es sich beispielsweise um einen Kran handelt.

Parallel zur den Seitenflächen 124, 125 ist eine weitere Innentraverse 123 vorgesehen. An einer Seite der Innentraverse 123 befinden sich Tragelemente 139, an deren Unterseite 144 sich ebenfalls Isosockets 128 befinden. Die Tragelemente 139 fluchten mit den Tragelementen 126. In den Eckbereichen 138 des Außenrahmens 121 befinden sich verstärkte Isosockets 129, um eine alternative Befestigung gegenüber den herkömmlichen Isosockets 128 vorzusehen. Die Anordnung der Isosockets 128 stimmt, bevorzugt mit den standardmäßig auf den Ladeluken 110 angeordneten Isosockets für den Containertransport, überein.

Auf der Oberseite 145 des Transportrahmens 120 ist ein Tragabschnitt 146 angeordnet, auf dem ein Führungselement 141 in einer Bohrung 142 angeordnet ist. Um unterschiedlichen Durchmessern der Flansche 200 Rechnung zu tragen, befinden sich in dem Tragabschnitt 146 mehrere Bohrungen 142, so dass das Führungselement 141 an verschiedenen Punkten angeordnet werden kann.

Im Arretierbereich 130 an den Innentraversen 122 befinden sich an der gegenüberliegenden Seite der Innenwand 140 Verstärkungselemente 137, die an den gleichen Stellen wie die Lastaufnahmen 133 angeordnet sind. Durch diese Verstärkungselemente 137 ist ein gleichförmiger Lasteintrag in die Innenwand 140 möglich.

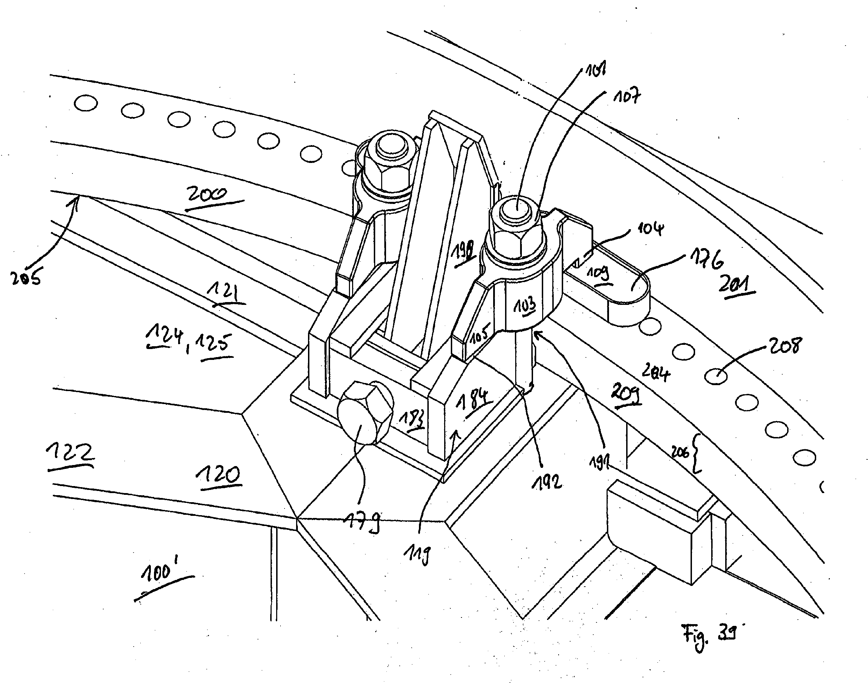

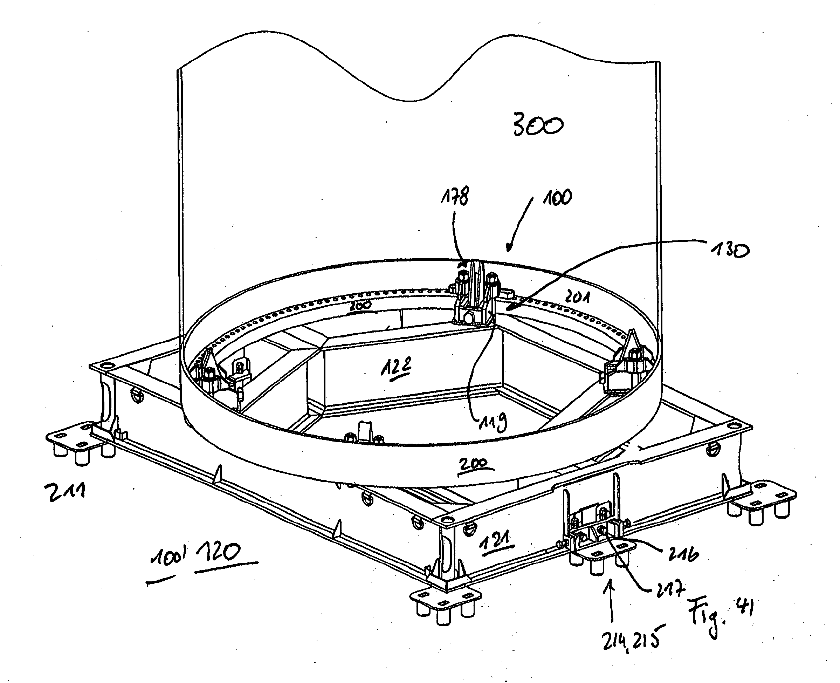

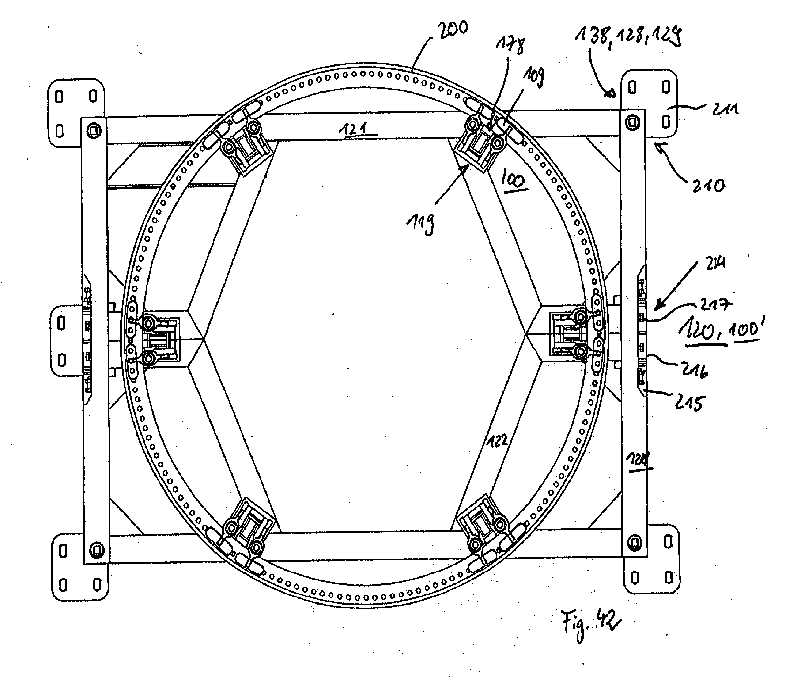

Fig. 39 bis 42 zeigen eine zweite Ausführungsform eines erfindungsgemäßen lastsichernden Sicherungselements 100 in Verbindung mit einem weiteren Transportrahmen 120 und einem Flansch 200 als Verbindungsabschnitt eines Elements einer Windkraftanlage.

Auf dem Transportelement 120 ist in den Anordnungsbereichen 130 ein Widerlager 119 angeordnet. Dieses Widerlager 119 ist entweder fest am Rahmen angebracht, beispielsweise durch verschweißen, gesteckt oder anderweitig angebracht. Das Widerlager 119 setzt sich zusammen aus einer Grundplatte 188, auf der eine Hintere Seitenwand 183, mit einer Öffnung 182 zum Einsetzen eines Arretiermittels 179, hier ein Gewindebolzen, und Seitenwänden 184, die zusammen einen Halteraum 185 bilden, der auf der vierten Seite eine Öffnung 187 aufweist. An den Seitenwänden 184 ist eine Führungen 186 vorgesehen. Das Widerlager 119 ist mit seien Bestandteilen so aufgebaut, dass ein Arretierkörper 178 einsetzbar ist.

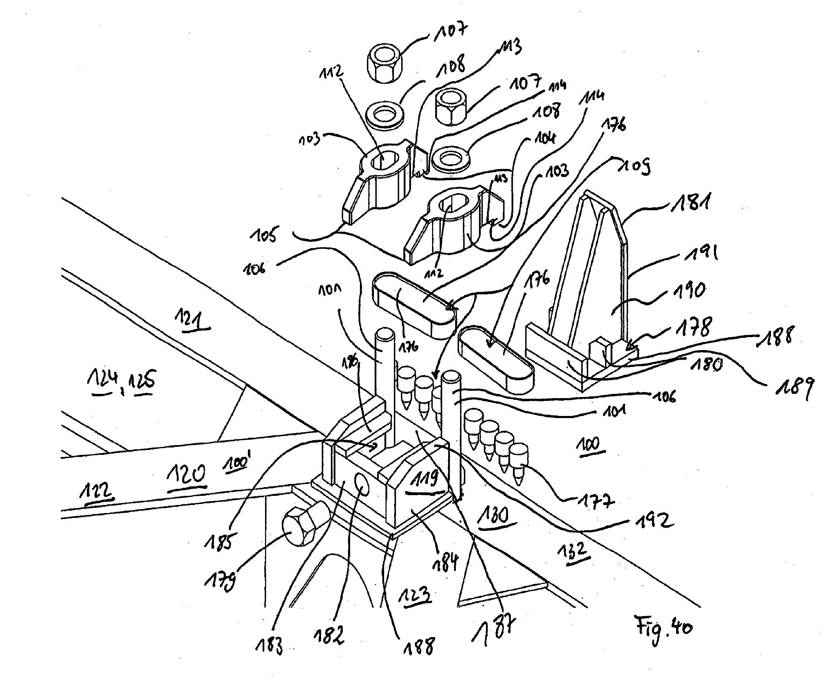

Der Arretierkörper 178 weißt eine Grundplatte 188 auf, auf dem ein Haltekörper 190 mit einer Anlagefläche 191 angeordnet ist (siehe Fig. 40). Weiterhin weißt die Grundplatte 188 eine Führung 189 auf, die mit der Führung 186 des Widerlagers 119 korrespondiert. An seiner Oberseite weißt der Haltekörper 190 ein Führungselement 181 auf. Dieses dient dazu, eine Last 300, 300' beim Aufsetzen auf das Transportelement 120 in die richtige Position zu bringen. Der Arretierkörper 178 wird vor dem Absetzen der Last 300, 300' auf das Transportelement 120 in den Halteraum 185 des Widerlagers 119 eingesetzt. An den Seitenwänden 184 sind Gewindebolzen 101 angeordnet. Hier sind die Bolzen 101 fest mit den Seitenwänden 184 und der Grundplatte 187 verbunden. Alternativ könnten sie auch in Öffnungen 131 in den Innentraversen 122 oder im Außenrahmen 121 eingesetzt sein.

Auf den Flansch 200 der Last 300 werden Distanzstücke 109 aufgebracht. Das Distanzstück 109 setzt sich zusammen aus Auflagebolzen 177 und einer Auflage 176. In Bohrungen 208 werden die Auflagebolzen 177 eingesetzt und die Auflage 177 wird auf diesen platziert.

Nach Aufsetzen der Last 300, 300' werden die Arretierelemente 103 auf die Bolzen 101 aufgesetzt. Der Auflageabschnitt 104 kommt dabei auf dem Distanzstück 109 bzw. der Auflage 176 zum Aufliegen. Der Auflageabschnitt 105 kommt auf der Oberseite 192 der Seitenwand 184 des Widerlagers 119 zum Aufliegen. Anschließend wird eine Unterlegscheibe 108 auf den Bolzen aufgebracht und ein Konterelement 107 hier in Form einer Mutter 107 auf den Gewindeabschnitt 106 des Bolzens 101 aufgeschraubt, bis eine erste haltenden Verbindung gegeben ist, die im wesentlichen vertikale Kräfte aufnimmt.

Zur horizontalen Arretierung wird eine Anlagefläche 191 des Haltekörpers 190 des Arretierkörpers 178 gegen den Flansch 200 bzw. dessen Seitenwand 209 bewegt durch Einschrauben des Gewindebolzens 179 in die Gewindeöffnung 182 in der hinteren Seitenwand 183 des Widerlagers 119. Über den Gewindebolzen 179 wird die horizontale Haltekraft zwischen Widerlager 119 und Flansch 200 erzeugt.

Der Transportelement 120 weißt neben den vertikalen Verbindungmitteln 211, 210 zusätzlich ein horizontales Befestigungsmittel 214 in Form eines Grundkörpers 216 auf, der in eine Aussparung 215 im Transportelement 120 eingesetzt wird. Der Grundkörper 216 wird gegenüber dem Transportrahmen durch Gewindebolzen 217 verkeilt. Weiterhin weißt der Grundkörper 216 an seiner Unterseite nicht dargestellte Vorsprünge auf, die in die Isosockets 211, 212 auf der Transportoberfläche 410' einsetzbar sind. (Fig. 40, 41, 42).

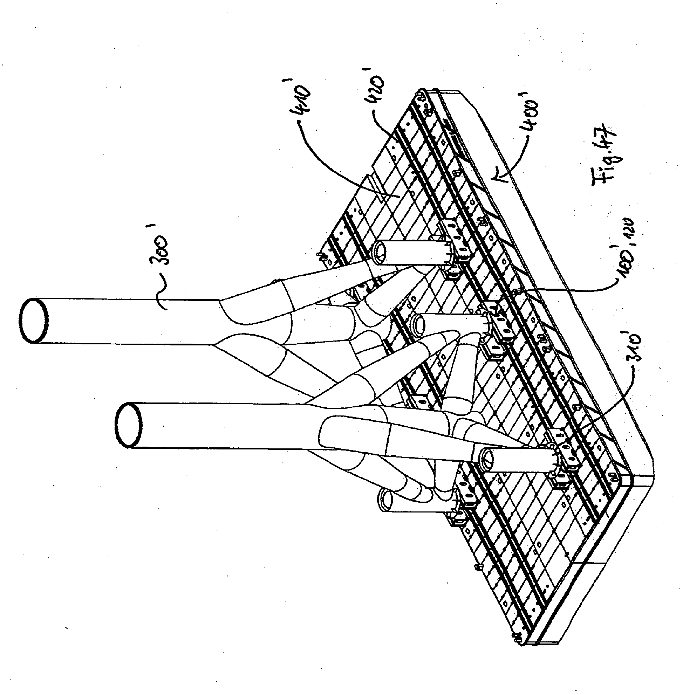

Fig. 47 zeigt den Transport einer Last 300', hier ein s. g. Tripod, der als Fundament für eine Windkraftanlage dient in aufrechter Stellung auf einer Barge 400' als Transportfahrzeug, wobei die Barge 400' eine Transportoberfläche 410' und einen Schienensystem 420' aufweist, mit dem die Last 300' auf die Barge 400' transportiert wird. In Fig. 39 ist die Last 300' auf Transportrahmensystem 100' angeordnet und über Sicherungsvorrichtungen 1010 mit dem Transportrahmensystem 100' verbunden. Das Transportrahmensystem 100' ist über Befestigungsmittel, beispielsweise ein Twistlock oder ein besonderer Schwerlasttwistlock, nicht dargestellt, mit der Transportoberfläche 410' verbunden.

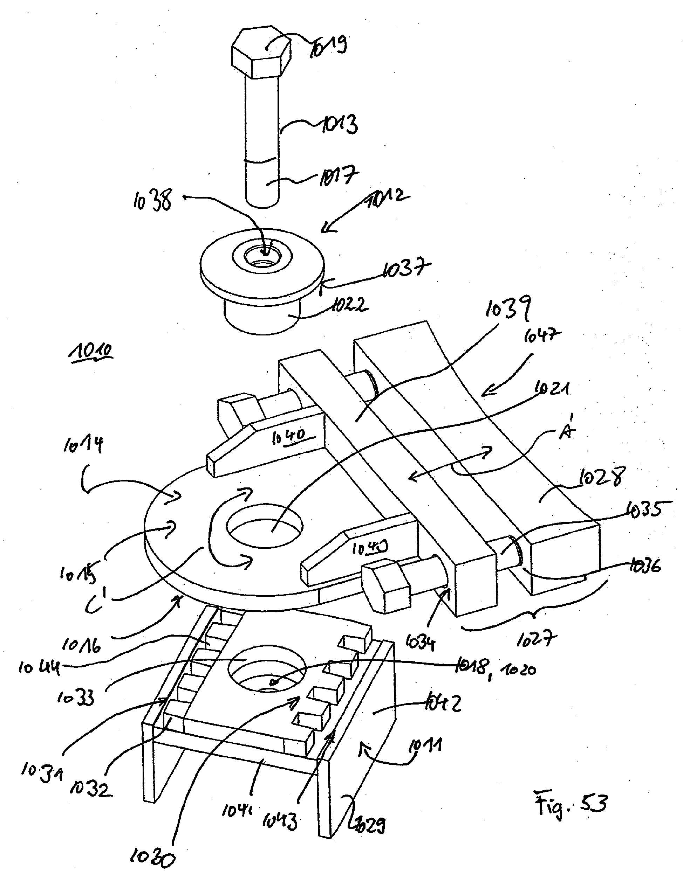

Fig. 53 zeigt eine erste Ausführungsform eines erfindungsgemäßen Sicherungselements 1010. Das Sicherungselement 1010 weist ein Verriegelungselement 1011 und ein Widerlagerelement 1012 auf. Zwischen dem Widerlagerelement 1012 und dem Verriegelungselement 1011 ist ein Sicherungskörper 1014 angeordnet. Der Sicherungskörper 1014 weist einen ersten oberhalb angeordneten Abschnitt 1015 auf, der sich im zusammengebauten Zustand dem Sicherungselement 1010 mit dem Widerlagerelement 1012 im Eingriff befindet. Des Weiteren weist der Sicherungskörper 1014 einen Abschnitt 1016 auf, der gegenüberliegend von dem Abschnitt 115 angeordnet ist und sich im montierten Zustand im wirkenden Eingriff mit dem Verriegelungselement 1011 und einer Oberseite 101' eines Transportrahmenabschnitts 102' eines Transportrahmensystem 100' befindet. Das Widerlagerelement 1012 weist einen Kontaktabschnitt 1037 auf. Des Weiteren weist das Widerlagerelement 1012 eine Öffnung 1038 auf, durch die ein Bolzen 1013 hindurch steckbar ist. Der Bolzen 1013 weist einen Gewindeabschnitt 1017 und einen Krafteinleitungsabschnitt 1019 auf.

Der Sicherungskörper 1014 weist eine Durchstecköffnung 1021 auf, die so ausgeführt ist, dass sie mit einem Einsetzabschnitt 1022, der in dieser Ausführungsform am Widerlagerelement 1012 angeordnet ist, alternativ aber auch am Verriegelungselement 1011 angeordnet sein kann, korrespondiert. Des Weiteren weist auch das Verriegelungselement 1011 einen Aufnahmeabschnitt 1033 auf, der ebenfalls mit einem Teil des Einsetzabschnitts 1022 des Widerlagerelements 1012 korrespondiert. Des Weiteren ist ein Eingriffsabschnitt 1018 vorhanden, in der Bolzen 1013 mit seinem Gewindeabschnitt 1107 eingreift und in diesen eingeschraubt wird. Der Eingriffsabschnitt 1018 ist entweder Bestandteil des Verriegelungselements 11 oder Bestandteil eines Konterelements 1020, wobei das Konterelement 1020 als separates Bauteil oder als Bestandteil des Verriegelungselementes 1011 ausgeführt sein kann.

Der Sicherungskörper 1014 weist des Weiteren ein Verbindungselement 1027 auf, mit dem eine haltende Verbindung mit einem Abschnitt 310' der Last, hier die Bodenplatte 310' des Tripods 300', herstellbar ist. Das Verbindungselement 1027 kann dabei variabel ausgeführt werden, je nach zu transportierende Last. Im dargestellten Ausführungsbeispiel weist das Verbindungselement 1027 ein Passstück 1028 auf. Dafür sind in einem Halteabschnitt 1039, der am Sicherungskörper 1014 angeordnet ist, Öffnungen 1034 vorgesehen, durch die Gewindebolzen 1035 durchsteckbar sind. Im Passstück 1028 sind Aufnahmen 1036 für die Gewindebolzen 1035 vorgesehen, so dass das Passstück 1028 in Bewegungsrichtung gegenüber dem Halteabschnitt 1039 verschiebbar ist, so dass das Passstück 128 gegen einen Wandabschnitt 330' der Last 300' bewegbar ist. Dadurch lässt sich auch eine Feinjustierung der Verbindung zwischen Sicherungskörper 1014 und Verbindungselement 1027 herstellen. Der Halteabschnitt 1039 ist über Stege 1040 zur Verbindungsverstärkung zwischen Halteabschnitt 1039 und Sicherungskörper 1014 mit dem Sicherungskörper 1014 verbunden. Das Verbindungselement 1027 wird jeweils spezifisch in Bezug auf die zu transportierende Lastart ausgelegt.

Das Verriegelungselement 1011 weist einen Grundkörper 1041 auf, an dem seitlich Führungsabschnitte 1029 angeordnet sind. An der Oberseite des Grundkörpers 141 ist ein Halteabschnitt 1030 angeordnet. Der Halteabschnitt 1030 weist Halteelemente 1031 auf, die hier in Form von Vorsprüngen 1032 und Rücksprüngen 1044 ausgeführt sind. Des Weiteren weist der Grundkörper 1041 und der auf dem Grundkörper angeordnete Halteabschnitt 30 den Aufnahmeabschnitt 1033 auf. An der Unterseite des Grundkörpers 1041 ist der Krafteinleitungsabschnitt 1019 angeordnet, in Form eines Konterelements 1020, wobei das Konterelement 1020 entweder direkt am Grundkörper 1041 befestigt oder an diesem in Verbindung mit dem Bolzen 1013 anbringbar ist.

Der Halteabschnitt 1030 springt gegenüber dem Grundkörper 1041 bzw. der Seitenfläche 1042 des Führungsabschnitts 129 zurück. Im Bereich dieses Rücksprungs weist das Verriegelungselement 1011 einen Kontaktabschnitt 1043 zur vertikalen Kraftübertragung auf. Zwischen den Vorsprüngen 1032 befinden sich Rücksprünge 1044, so dass das Halteelement 1031 eine sägezahnartige Form aufweist.

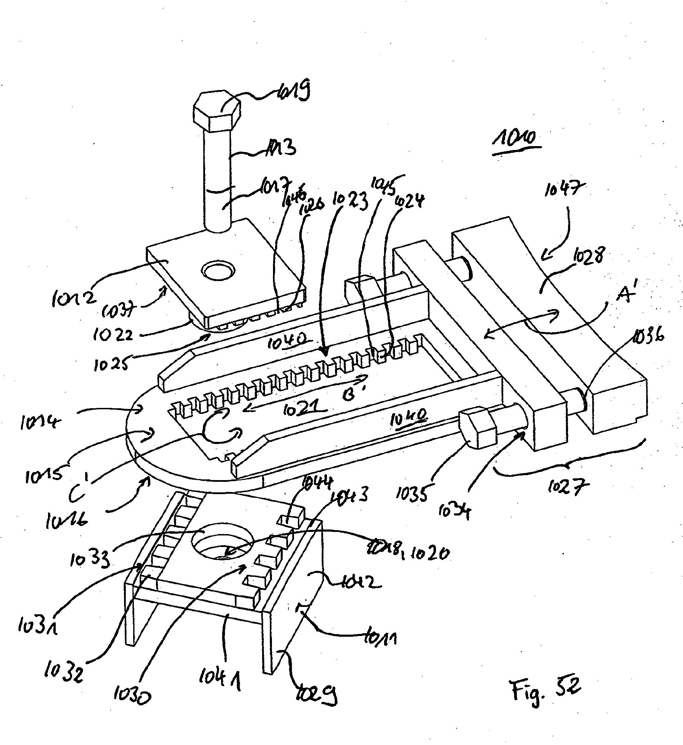

Eine ähnliche Konstruktion ist auch in einer zweiten Ausführungsform in Fig. 52 für ein gegenüber dem Widerlagerelement 1012 und dem Verriegelungselement 1011 verschiebbar angeordneten Sicherungskörper 1014 vorgesehen. Die Durchstecköffnung 1021 weist dabei einen Halteabschnitt 1023 auf, der Vorsprünge 1024 und Rücksprünge 1045 aufweist. Korrespondierend ist am Kontaktabschnitt 1037 des Widerlagerelements 1012 ein Halteabschnitt 1025 angeordnet, der ebenfalls Vorsprünge 1026 und Rücksprünge 1046 aufweist.

Die Vorsprünge 1024, 1026 und Rücksprünge 1045, 1046 der Halteabschnitte 1023, 1025 sind derart ausgeführt, dass der Halteabschnitt 1025 des Widerlagerelements 1012 in den Halteabschnitt 1023 des Sicherungskörpers 1014 einsetzbar ist. Solange der Halteabschnitt 1025 nicht in den Halteabschnitt 1023 eingesetzt ist, kann der Sicherungskörper 1014 in dieser Ausführungsform gegenüber dem Widerlagerelement 1012 und dem Verriegelungselement 1011 im Bewegungsrichtung B' verschoben werden. Ist der Halteabschnitt 1025 des Widerlagerelements 1012 in den Halteabschnitt 1013 des Sicherungskörpers 1014 eingesetzt, so wird eine Bewegung in Bewegungsrichtung B' verhindert.

Ist der Sicherungskörper 1014 oberhalb des Verriegelungselements 1011 angeordnet und ist das Widerlagerelement 1012 mit seinem Einsetzabschnitt 1022 in die Durchstecköffnung 1021 des Sicherungskörpers 1014 und in dem Aufnahmeabschnitt 1033 des Verriegelungselementes 1011 eingesetzt, der Bolzen 1103 aber noch nicht vollständig in den Eingriffsabschnitt 1018 des Konterelements 1020 eingeschraubt, so ist es möglich, dass der Sicherungskörper 1014 in der dargestellten Drehrichtung C' in Bezug auf das Widerlagerelement 1012 und das Verriegelungselement 1011 zu drehen und gegenüber der Last 300' auszurichten. Dieses wird durch die über dem Bolzen 1013 mit seinem Eingriffsabschnitt 1018 und dem Krafteinleitungsabschnitt 1019 des Konterelements 1020 einzuleitender Arretierkraft im arretierten Zustand verhindert. Zusätzlich kann ein Sicherungselement, nicht dargestellt, vorgesehen werden, mit dem Verdrehen in Drehrichtung C' ebenfalls unterbunden wird.

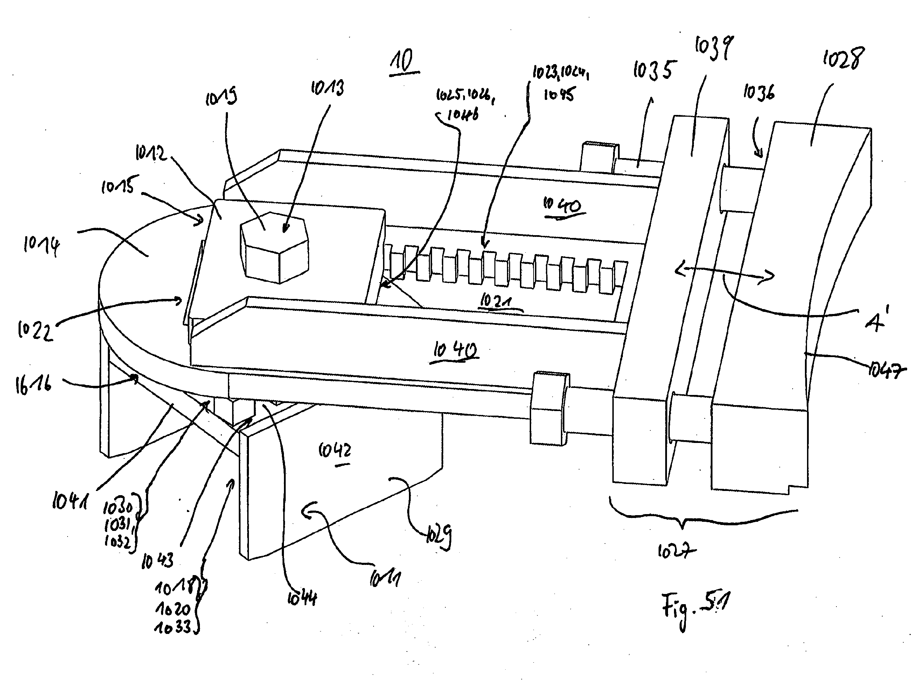

Fig. 51 zeigt den zusammengesetzten Zustand zur Ausführungsform des Sicherungselements 1010 gemäß Fig. 52, bei dem das Widerlagerelement 1012 mit seinem Halteabschnitt 1025 in die Durchstecköffnung 1021 des Sicherungskörpers 1014 und dessen Halteabschnitt 1023 eingesetzt ist. Gleichzeitig ist unterhalb des Sicherungskörpers 1014 im Abschnitt 1016 das Verriegelungselement 1011 angeordnet, der Bolzen 1013 in die Öffnung 1038 des Widerlagerelements 1012 eingesteckt und in den Eingriffsabschnitt 1018 des Konterelements 1020 mit dessen Gewindeabschnitt 1017 eingeschraubt.

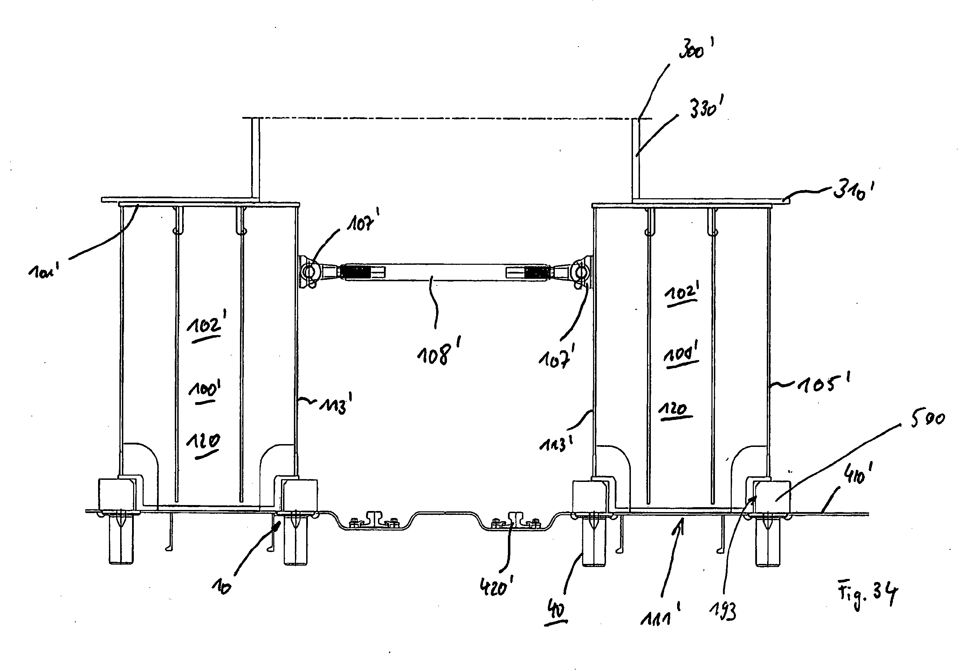

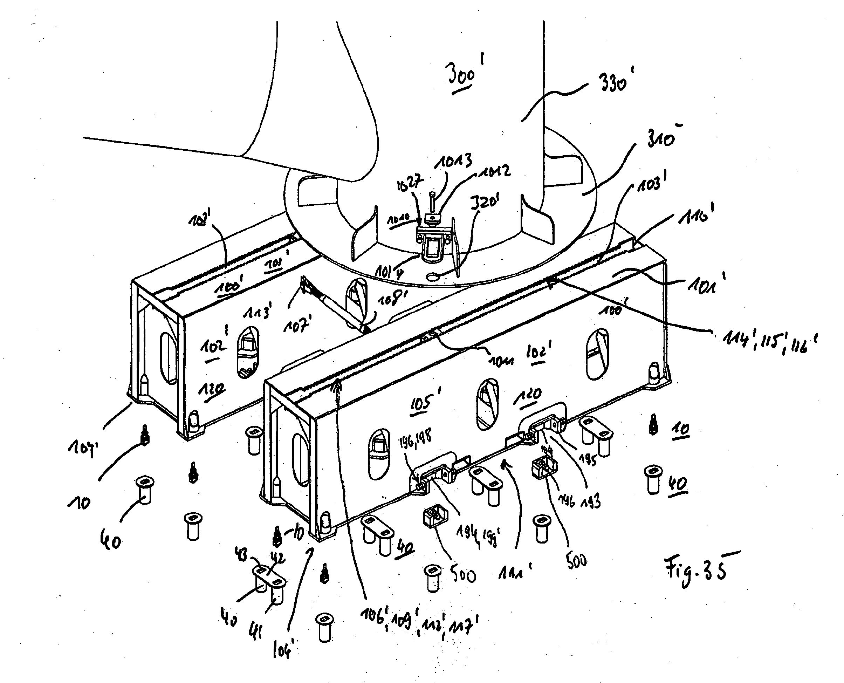

Fig. 32 zeigt eine räumliche Ansicht eines Transportrahmenabschnitts 102' eines Transportrahmensystems 100'. Der Transportrahmenabschnitt 102' weist eine Oberseite 101' auf, die als Auflagefläche für die Last 300' dient. Des Weiteren weist der Transportrahmenabschnitt 102' eine Seitenwand 105' und eine weitere Seitenwand 113' auf, die parallel zu einander ausgeführt sind. An der Oberseite 101' ist ein Aufnahmeabschnitt 103' dargestellt, der sich schlitzartig entlang der Seitenwand 105' erstreckt. Dieser Aufnahmeabschnitt 103' weist an seinen Enden einen Einsetzabschnitt 110' zum Einsetzen des Sicherungselements 1010 auf. An den Seitenrändern 117' des Aufnahmeabschnitts 103' sind Halteelemente 106' angeordnet. In dieser Ausführungsform bestehen die Halteelemente 106' aus Vorsprüngen 109' und Rücksprüngen 112'. Im Inneren des Transportrahmenabschnitts 102' unterhalb des Aufnahmeabschnitts 103 befindet sich eine Führung 114' mit einer Führungsfläche 115' und Seitenfläche 116'. Durch diese Führung ist das Sicherungselement 1010 einfach im Aufnahmeabschnitt 103' bewegbar. Die Seitenwand 105' stellt die eine lange Außenwand des Transportrahmenabschnittes 102' dar. Wird ein zweiter Transportrahmenabschnitt 102' eingesetzt, wie dieses in Fig. 34 und 35 dargestellt ist, so stellt die Seitenwand 113' die dem anderen Transportrahmenabschnitt 102' zugewandte Seite dar. Auf der Seitenwand 113' ist dann eine Aufnahme 107' jeweils angeordnet, zwischen dem ein Verbindungsmittel 108' befestigt werden kann. Bei dem Verbindungsmittel 108' handelt es sich um eine Spannschlossstange, die bewirkt, dass die Transportrahmenabschnitte 102' haltend miteinander in Verbindung bringbar sind. Gleichzeitig kann über die Spannschlossstange auch eine Ausrichtung der beiden Transportrahmenabschnitte 102' im Bezug auf die Last 300' erfolgen, sofern dies notwendig ist.

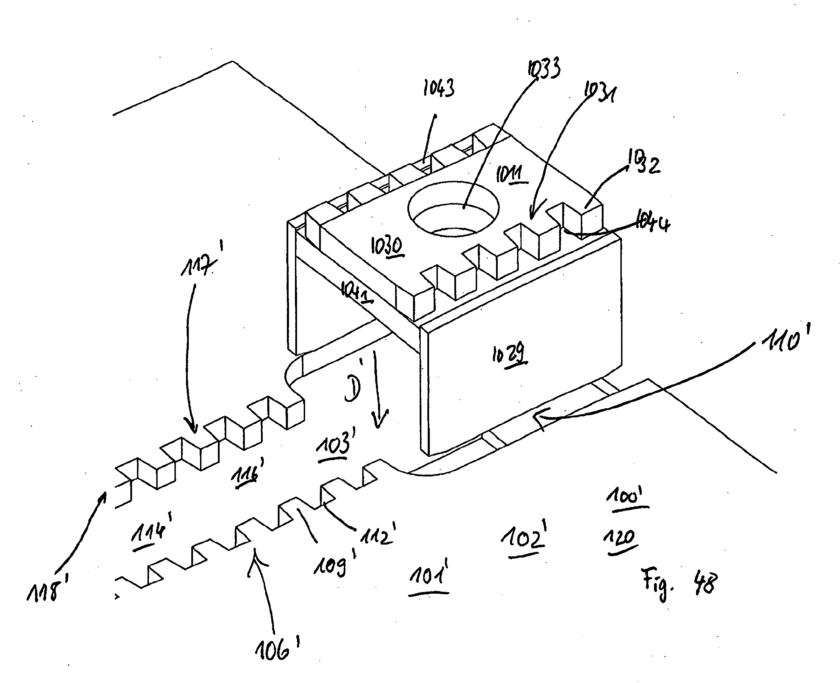

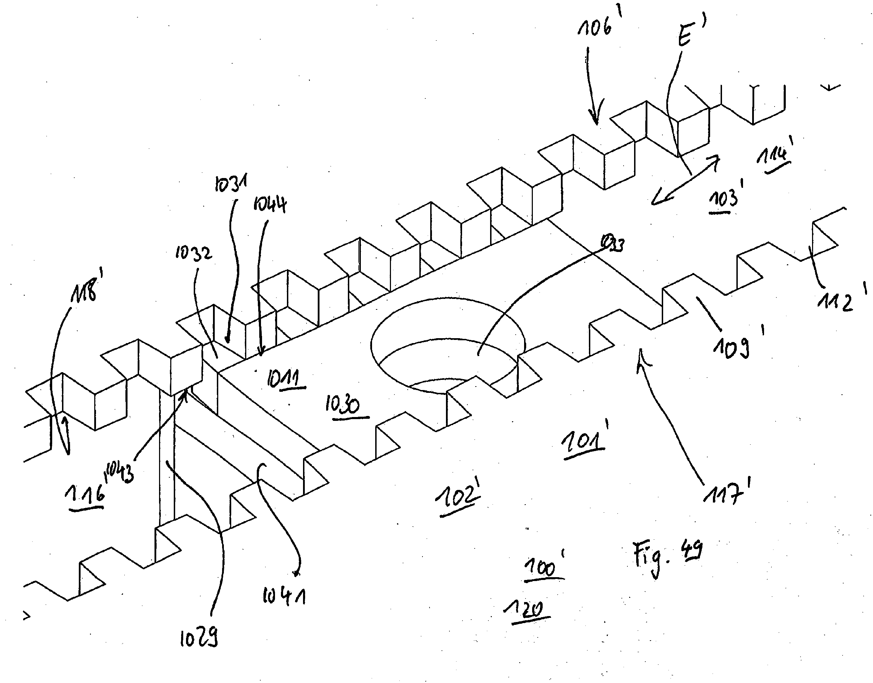

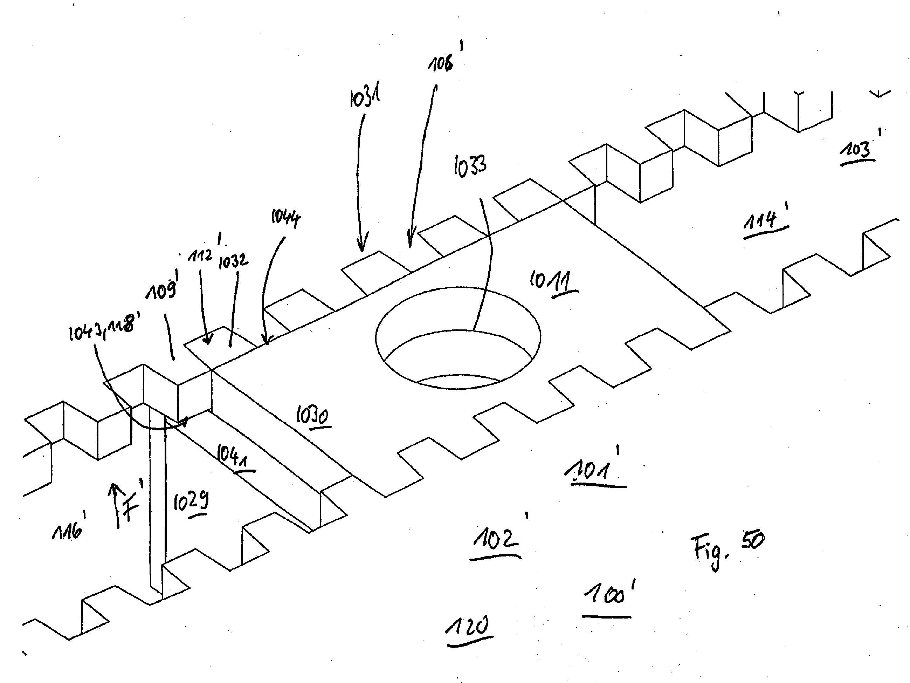

In den Figuren 48 bis 50 wird das Einsetzen des Verriegelungselementes 1011 in einen Aufnahmeabschnitt 103' eines Transportrahmenabschnitts 102' eines Transportrahmensystems 100', das auf einer Transportfläche 410' eines Transportmittels 400' befestigt ist, zeigt (siehe Fig. 48 bis 51 und 34, 35). Anschließend wird in Fig. 35 die Last 300' auf der Oberseite 101' des Transportrahmenabschnitts 102' so abgesetzt, dass eine Öffnung 320' in einer Bodenplatte 310' sich korrespondierend über den Aufnahmeabschnitt 33 des Verriegelungselementes 1011 befindet. Anschließend wird die Durchstecköffnung 1021 des Sicherungskörpers 1014 korrespondierend zur Öffnung 320' in der Bodenplatte 310' auf die Bodenplatte 310' aufgelegt, so dass sich eine Kontaktfläche 1047 des Passstücks 1028 des Verbindungselementes 1027 mit einer Seitenwand 330' des Tripods 310' im Eingriff befindet. Anschließend wird das Widerlagerelement 1012 durch die Durchstecköffnung 1021, die Öffnung 320' und den Aufnahmeabschnitt 1033 gesteckt, wobei der Halteabschnitt 1025 mit den Vorsprüngen 1026 und den Rücksprüngen 1046 des Widerlagerelements 1012 in Eingriff mit den Halteabschnitt 1023 und seinen Vorsprüngen 1024 und Rücksprüngen 1045 in Eingriff kommt. Anschließend wird der Bolzen 1013 durch die Öffnung 1038 des Widerlagerelements 1012 gesteckt, so dass der Gewindeabschnitt 1017 des Bolzens 1013 in den Eingriffsabschnitt 1018 des Konterelements 1020 eingreift. Nach Festschrauben des Bolzens 1013 über den Krafteinleitungsabschnitt 1019 in den Eingriffsabschnitt 1018 wird eine haltenden Verbindung zwischen dem Sicherungselement 1010 der Last 300' und dem Transportrahmenabschnitt 102' des Transportrahmensystems 100' hergestellt. Durch Drehen der Gewindebolzen 1035 des Verbindungselements 1027 wird das Passstück 1028 gegen die Seitenwand 320' der Last 300' geschraubt, bis eine haltende Verbindung mit der Kontaktfläche 1047 an allen vorgesehenen Punkten besteht, so dass ein horizontales Bewegen der Last 300' gegenüber dem Transportrahmensystem 100' nicht möglich ist. Ein vertikales Bewegen der Last 300' gegenüber dem Transportrahmensystem 100' wird durch den festgeschraubten Bolzen 1013 und die dadurch zwischen Widerlagerelement 1012, Sicherungskörper 1014, Oberseite 101' des Transportrahmenabschnitts 102' und Verriegelungselement 1011 auf die Bodenplatt 310' eingebrachte Arretierkraft verhindert. Das Lösen der Last 300' erfolgt in umgekehrter Reihenfolge.

Zum Einsetzen des Verriegelungselementes 1011 in den Aufnahmeabschnitt 103' wird das Verriegelungselement 11 in den Einsetzabschnitt 110' eingesetzt. Der Einsetzabschnitt 110' geht in die Führung 114', die durch die Führungsflächen 115' und die Seitenflächen 116' bereit gestellt wird, über. Die Höhe der Führungsabschnitte 1029 ist dabei so bemessen, dass die Oberseite des Halteabschnittes 1030 sich unterhalb der Oberseite 101' befindet, wenn die Führungsabschnitte 1029 auf der Führungsfläche 115' aufstehen. Das Einsetzen des Verriegelungselementes 1011 in den Einsetzabschnitt 110 erfolgt in Bewegungsrichtung D'. Anschließend wird das Verriegelungselement 1011 in Bewegungsrichtung E' im Aufnahmeabschnitt 103' soweit verschoben, bis die gewünschte Stelle im Aufnahmeabschnitt 103' erreicht ist, an der später die Befestigung der Last 300' durchgeführt werden soll. Ist das Verriegelungselement 1011 an der entsprechenden Stelle angekommen, wird gewährleistet, dass die Vorsprünge 1032 des Halteabschnitts 1030 in Flucht mit den Rücksprüngen 112' und des Halteelements 106' des Aufnahmeabschnitts 103' sind und analog die Vorsprünge 109' des Halteelements 106' mit den Rücksprüngen 1044 des Halteabschnitts 1030 übereinstimmend sind. Ist diese erfolgt, kann im weiteren Fortgang der Montage das Verriegelungselement 1011 in Bewegungsrichtung F' so angehoben werden, dass der Kontaktabschnitt 1043 des Verriegelungselements 1011 mit einem entsprechenden Kontaktabschnitt 118' der Oberseite 101' des Transportrahmenabschnitts 102' in Eingriff kommt. Je nach Ausführung fluchtet die Oberseite des Halteabschnitts 1030 in dieser Position mit der Oberseite 101' des Transportrahmenabschnitts 102' oder der Halteabschnitt 1030 befindet sich unterhalb der Oberseite 101' des Transportrahmenabschnitts 102', wenn gewährleistet werden soll, dass die Last 300' lediglich auf der Oberseite 101' des Transportrahmenabschnitts 102' aufliegt.

**Bezugszeichenliste:**

| | | | |
|---|---|---|---|
| 10 | Rahmensicherungselement | 20 | Vertiefung |
| 10' | horizontales Rahmensicherungselement | 21 | innerer Abschnitt |
| | | 22 | Außenseite |
| 10" | vertikales Rahmensicherungselement | 23 | Vierkant |
| | | 24 | Fase (Quererstreckung) |
| 11 | Oberes/zweites Verriegelungselement/Widerlager | 25 | Fase (Längserstreckung) |
| | | 26 | Einführabschnitt |
| 12 | Unteres/erstes Verriegelungselement | 27 | Eihführfläche |
| | | 28 | Widerlager/Widerlagerfläche |
| 13 | Gewindebolzen | 29 | Längserstreckung |
| 14 | Verbindungsabschnitt | 30 | Quererstreckung |
| 14' | Öffnung | 31 | Seitenfläche (Längserstreckung) |
| 14" | Gewinde | 32 | Seitenfläche (Quererstreckung) |
| 15 | Gewinde | 33 | Bohrung |
| 15' | Bohrung | 34 | oberer Abschnitt |
| 15" | Arretierstift | 35 | Außenfläche |
| 16 | Mutter/Arretierelement | 36 | Innenfläche |
| 16' | Aussparung | 37 | Kreisbogenfläche (Quererstreckung) |
| 16" | Kreuzbohrung | 38 | Kreisbogenfläche (Unterseite) |
| 17 | Unterlegscheibe | 39 | oberer Abschnitt |
| 17' | Federstift | 40 | Aufnahmevorrichtung |
| 17" | Federring | 41 | zylindrische Grundkörper |
| 18 | Abschnitt | 42 | Abdeckplatte |
| 18' | Drehwerkzeug | 43 | Einsetzöffnung |
| 18" | Vertiefung | 44 | Fase |
| 19 | Kraftübertragungsfläche | 45 | Längserstreckung |
| 46 | Quererstreckung | 75 | Fase |
| 47 | Längsseite | 76 | Innenfläche |
| 48 | Querseite | 77 | Durchmesser |
| 49 | Innendurchmesser | 78 | Bolzen |
| 50 | Abstand | 79 | Sechskant |
| 51 | Innenraum | 80 | rechter Teil |
| 52 | Innenwand | 81 | linker Teil |
| 53 | Unterseite | 82 | Aussparung |
| 54 | Konterelement/Mutter | 83 | Fase |
| 55 | Drehabschnitt | 84 | Gewindestift |
| 55' | Bohrung | 85 | Bohrung |
| 56 | Vierkant | 86 | Gewindeaufnahme/ Befestigungselement |
| 56' | Drehhebel | | |
| 57 | Verbindungselement | 87 | Bohrung |
| 58 | Anzeigeelement | 88 | Feder |
| 59 | Konus | 89 | Drehwiderlager/Kugel/Element |
| 60 | Einsetzkörper/Gehäuse | 100 | Lastsicherungselement/ Sicherungselement |
| 60" | Einsetzkörper/Gehäuse | | |
| 61 | oberer Einsetzabschnitt | 100' | Transportrahmensystem |
| 62 | unterer Einsetzabschnitt | 101 | Bolzen |
| 63 | Fase | 101' | Oberseite |
| 64 | Bohrung | 101" | Träger |
| 65 | Aussparung | 102 | Bolzenkopf |
| 66 | oberer Teil | 102' | Transportrahmenabschnitt |
| 67 | unterer Teil | 102" | Aufnahme |
| 68 | Wandstärke | 103 | Arretierelement |
| 69 | Breite | 103' | Aufnahmeabschnitt |
| 70 | Fase | 103" | Öffnung |
| 71 | Breite | 104 | Auflageabschnitt |
| 72 | Durchmesser | 104' | Befestigungsaufnahme |
| 73 | Scheibe | 105 | Auflageabschnitt |
| 73' | konischer Abschnitt | 105' | Seitenwand |
| 74 | Dicke Scheibe | 106 | Gewindeabschnitt |
| 74' | dicke Scheibe + konischer Abschnitt | 106' | Halteelement |
| 107 | Mutter | 125 | Seitenfläche |
| 107' | Aufnahme | 126 | Trägerelement |
| 108 | Unterlegscheibe | 127 | Hubanschlag |
| 108' | Verbindungsmittel | 128 | Isosocket |
| 109 | Distanzstück | 129 | verstärkter Isosocket |
| 109' | Vorsprung | 130 | Arretierbereich |
| 110 | Distanzstück | 131 | Bohrung |
| 110' | Einsetzabschnitt | 132 | Oberfläche |
| 111 | Pufferelement | 132" | Anliegende Flächen |
| 111' | Unterseite | 133 | Lastaufnahme |
| 112 | Bohrung | 134 | Widerlager |
| 112' | Rücksprung | 135 | Verstärkungselement |
| 112" | Transportoberfläche | 136 | Bohrung |
| 113 | Ausleger | 137 | Verstärkungselement |
| 113' | Seitenwand | 138 | Eckbereich |
| 113" | Abstand | 139 | Trägerelement |
| 114 | Vorsprung | 140 | Innenwand |
| 114' | Führung | 141 | Führungselement |
| 114" | verstärkter Abschnitt | 142 | Bohrung |
| 115 | Vorsprung | 143 | Unterseite |
| 115' | Führungsfläche | 144 | Unterseite |
| 115" | zylindrischer Körper | 145 | Oberseite |
| 116 | Vertiefung | 146 | Tragabschnitt |
| 116' | Seitenfläche | 147 | Höhenadapter |
| 117 | Widerlagerabschnitt | 148 | Öffnung/lsosocket |
| 117' | Seitenrand | 150 | Hubsicherungsvorrichtung |
| 118 | Außenseite | 151 | Traverse |
| 118' | Kontaktabschnitt | 152 | Hubanschlag |
| 119 | Widerlager | 153 | Klaue |
| 120 | Transportrahmen | 154 | Öffnung/Isosocket |
| 121 | Außenrahmen | 155 | Anschlag |
| 122 | Innentraverse | 156 | Lasching |
| 123 | Innentravers | 157 | Träger |
| 124 | Seitenfläche | 158 | Rahmen |
| 159 | Schiene | 197 | Bohrung |
| 160 | Öffnung/Isosocket | 198 | Mutter |
| 161 | Anschlag | 199 | Aussparung |
| 162 | Aufnahme, verschiebbar | 199' | Widerlager |
| 163 | Seitenfläche | 200 | Flansch |
| 164 | Seitenfläche | 201 | Anschluss |
| 165 | Anschlag | 202 | erhöhter Abschnitt |
| 170 | Transportrahmen | 203 | Widerlager |
| 171 | Grundrahmen | 204 | Oberseite |
| 172 | Tragelement | 205 | Unterseite |
| 173 | Ecke | 206 | Dicke |
| 174 | Verbindungsbereich | 207 | Führungselement |
| 175 | Führungselement | 208 | Bohrung |
| 176 | Auflage | 209 | Seitenwand |
| 177 | Auflagebolzen | 210 | Twistlock |
| 178 | Arretierkörper | 211 | Isosocket |
| 179 | Arretiermittel, Gewindebolzen | 212 | verstärkter Isosocket |
| 180 | Seitenwand | 213 | verstärkter Twistlock |
| 181 | Führungselement | 214 | Aussparung |
| 182 | Öffnung | 215 | Horizontales Befestigungsmittel |
| 183 | hintere Seitenwand | 216 | Grundkörper |
| 184 | Seitenwand | 217 | Gewindebolzen |
| 185 | Halteraum | 220 | Einweiser |
| 186 | Führung | 300 | Turmsegment |
| 187 | Öffnung | 300' | Last, Tripod |
| 188 | Grundplatte | 310 | Rotor |
| 189 | Führung | 310' | Bodenplatte |
| 190 | Haltekörper | 311 | Nabe |
| 191 | Anlagefläche | 312 | Flügel |
| 192 | Oberseite | 320' | Öffnung |
| 193 | Aussparung | 330' | Seitenwand |
| 194 | Seitenwand | 400 | Schiff |
| 195 | Seitenwand | 400' | Transportmittel, Barge |
| 196 | Gewindebolzen | 410 | Ladeluke |
| 410' | Transportoberfläche | 1011 | Verriegelungselement |
| 420 | Kran | 1012 | Widerlagerelement |
| 420' | Schienensystem | 1013 | Bolzen |
| 430 | Laderaum | 1014 | Sicherungskörper |
| 500 | horizontales Rahmenbefestigungsmittel | 1015 | Abschnitt |
| | | 1016 | Abschnitt |
| 501 | Grundkörper | 1017 | Gewindeabschnitt |
| 502 | Seitenwandabschnitt | 1018 | Eingriffsabschnitt |
| 503 | hinterer Seitenwandabschnitt | 1019 | Krafteinleitungsabschnitt |
| 504 | Steg | 1020 | Konterelement |
| 505 | Bohrung | 1021 | Durchstecköffnung |
| 506 | Oberseite | 1022 | Einsetzabschnitt |
| 507 | Unterseite | 1023 | Halteabschnitt |
| 508 | Rückseite | 1024 | Vorsprung |
| 509 | Vorsprung | 1025 | Halteabschnitt |
| 510 | Einführabschnitt | 1026 | Vorsprünge |
| 511 | Anschlag | 1027 | Verbindungselement |
| A | Einsetzposition | 1028 | Passstück |
| A' | Bewegungsrichtung | 1029 | Führungsabschnitt |
| A" | Bewegungsrichtung | 1030 | Halteabschnitt |
| B | Verriegelungsposition | 1031 | Halteelement |
| B' | Bewegungsrichtung | 1032 | Vorsprung |
| B" | Bewegungsrichtung | 1033 | Aufnahmeabschnitt |
| C | Versatz | 1034 | Öffnung |
| C' | Drehrichtung | 1035 | Gewindebolzen |
| D | Drehrichtung | 1036 | Aufnahme |
| D' | Bewegungsrichtung | 1037 | Kontaktabschnitt |
| E | Anhebrichtung | 1038 | Öffnung |
| E' | Bewegungsrichtung | 1039 | Halteabschnitt |
| F | Drehversatz | 1040 | Steg |
| F' | Bewegungsrichtung | 1041 | Grundkörper |
| G | Vertikalkraft | 1042 | Seitenfläche |
| H | Horizontalkraft | 1043 | Kontaktabschnitt |
| 1010 | Sicherungselement | 1044 | Rücksprung |
| 1045 | Rücksprung | | |
| 1046 | Rücksprung | | |
| 1047 | Kontaktfläche | | |

## Patentansprüche

1. Befestigungssystem, geeignet für den Transport einer schweren Last (300), insbesondere einer Komponente einer Windkraftanlage, auf einer Transportoberfläche, insbesondere auf einem Schiff (400'), wobei in oder auf der Transportoberfläche (410') wenigstens eine Aufnahmevorrichtung (40) mit wenigstens einer Einsetzöffnung (43) für ein vertikal sicherndes Rahmenbefestigungsmittel (10") vorgesehen ist, über das die auf die Last (300) wirkenden vertikalen Kräfte und Momente vom Rahmen (120) über die Aufnahmevorrichtung (40) in die Transportoberfläche (410') einleitbar sind, **dadurch gekennzeichnet, dass** die Last (300) auf einen Transportrahmen (120) so mit wenigstens einem lastsichernden Befestigungsmittel (100, 1010) angeordnet ist, dass das Lastbefestigungsmittel (100, 1010) auf die Last wirkende vertikale und/oder horizontale Kräfte sowie Momente aufnimmt und in den Transportrahmen (120) einleitet, dass auf der Transportoberfläche (410') wenigstens eine weitere Aufnahmevorrichtung (40) mit wenigstens einer Einsetzöffnung (43) für ein horizontal sicherndes Rahmenbefestigungsmittel (10', 500) vorgesehen ist, über das die auf die Last (300) wirkenden horizontalen Kräfte und Momente vom Rahmen (120) über die Aufnahmevorrichtung (40) in die Transportoberfläche(410') einleitbar sind, dass der Transportrahmen (120) wenigstens eine Öffnung (103") zum Einsetzen des vertikal sichernden Rahmenbefestigungsmittels (10) aufweist, und dass der Transportrahmen (120) wenigstens eine Aussparung (193) zur Aufnahme des horizontal sichernden Rahmenbefestigungsmittels (10', 500) aufweist.

2. Befestigungssystem nach Anspruch 1, **dadurch gekennzeichnet, dass** in einem Wandabschnitt (194, 195) der Aussparung (193) und/oder in einem Wandabschnitt (502, 503) des horizontal sichernden Rahmenbefestigungsmittels (500) wenigstens eine Öffnung (197, 505) vorgesehen ist, durch die ein Arretiermittel, bevorzugt ein Gewindebolzen (196), einsetzbar ist, der gegen einen Wandabschnitt (502, 503) des horizontal sichernden Rahmenbefestigungsmittels (500) und/oder gegen einen Wandabschnitt (194, 195) der Aussparung (193) und/oder in einer Vertiefung in dem Wandabschnitt (502, 503) des horizontal sichernden Rahmenbefestigungsmittels (500) oder der Aussparung (193) bewegbar ist, so dass eine horizontal sichernde Verbindung zwischen Transportrahmen (120) und horizontal sicherndem Rahmenbefestigungsmittel (500) herstellbar ist.

3. Befestigungssystem nach Anspruch 1 oder 2, **dadurch gekennzeichnet, dass** das horizontal sichernde Rahmenbefestigungsmittel (500) an einem Wandabschnitt, bevorzugt an der Unterseite (507), wenigstens einen Vorsprung (509) aufweist, der in die Einsetzöffnung (43) der Aufnahmevorrichtung (40) einsetzbar ist.

4. Befestigungssystem nach einem der Ansprüche 1 bis 3, **dadurch gekennzeichnet, dass** das horizontal sichernde Rahmenbefestigungsmittel (500) einen Grundkörper (501) aufweist, an dem der Wandabschnitt (502, 503) oder die Wandabschnitte (502, 503) des horizontal sichernden Rahmenbefestigungsmittels (500) angeordnet sind.

5. Befestigungssystem nach einem der Ansprüche 1 bis 4, **dadurch gekennzeichnet, dass** die Aufnahmevorrichtung (40) wenigstens einen Grundkörper (41) und eine eine Oberseite bildende Abdeckplatte (42) aufweist, in der sich die Einsetzöffnung (43) befindet, wobei die Aufnahmevorrichtung (40) bevorzugt eine Abdeckplatte (42) mit wenigstens zwei oder vier darin angeordneten Einsetzöffnungen (43) und wenigstens zwei oder vier unter den Einsetzöffnungen angeordneten Grundkörpern (41) aufweist.

6. Befestigungssystem nach einem der Ansprüche 1 bis 5, **dadurch gekennzeichnet, dass** das vertikal sichernde Rahmenbefestigungsmittel (10") ein Widerlager (11), ein Verriegelungselement (12) und einen das Widerlager (11) und das Verriegelungselement (12) verbindenden Bolzen (13) aufweist, wobei das Verriegelungselement (12) eine an der Außenseite des Verriegelungselements befindliche Kraftübertragungsfläche (19) und eine Vertiefung (20) zwischen Kraftübertragungsfläche (19) und Bolzen (13) aufweist, das Verriegelungselement (12) zwischen einer entriegelten und einer verriegelten Stellung drehbar ist und in der entriegelten Stellung in die Einsetzöffnung (43) der Aufnahmevorrichtung (40) einsetzbar ist.

7. Befestigungssystem nach Anspruch 6, **dadurch gekennzeichnet, dass** das Verriegelungselement (12) auf dem Bolzen (13) aufschraubbar ist, wobei das Verriegelungselement (12) gegenüber dem Bolzen (13) mit einem Sicherungselement (15") arretierbar ist, bevorzugt derart, dass der Bolzen (13) und das Verriegelungselement (12) eine korrespondierende Öffnung (16', 16") für die Aufnahme eines Sicherungselements (15"), das bevorzugt ein Sicherungsstift (17') ist, aufweisen.

8. Befestigungssystem nach Anspruch 6 oder 7, **dadurch gekennzeichnet, dass** das Widerlager (11) auf den Bolzen (13) aufsteckbar und mit einem Konterelement (16), das bevorzugt auf den Bolzen (13) aufschraubbar ist, arretierbar ist, wobei zur Sicherung des Konterelements (16) ein Sicherungselement (15", 17') vorgesehen ist, das bevorzugt ein Sicherungsstift ist, wobei bevorzugt der Bolzen (13) und/oder das Konterelement (16) wenigstens eine Aufnahme (16', 16") für das Sicherungselement (15", 17'), bevorzugt in Form einer Öffnung, aufweisen, wobei das Konterelement (16) besonders bevorzugt eine Mehrzahl von Aufnahmen (16') aufweist, und/oder dass zur Sicherung des Konterelements ein Federring (17") vorgesehen ist.

9. Befestigungssystem nach einem der Ansprüche 1 bis 8, **dadurch gekennzeichnet, dass** das vertikal sichernde Rahmenbefestigungsmittel (10, 10") so ausgelegt ist, dass durch die Gesamtanzahl der vertikal sichernden Rahmenbefestigungsmittel (10, 10") die vertikal auf die Last (300) wirkenden Kräfte und Momente vollständig aufnehmbar sind, und/oder dass das horizontale Rahmenbefestigungsmittel (10', 500) so ausgelegt ist, dass durch die Gesamtzahl der horizontal sicherenden Rahmenbefestigungsmittel die horizontal auf die Last wirkenden Kräfte und Momente vollständig aufnehmbar sind.

10. Befestigungssystem nach einem der Ansprüche 1 bis 9, **dadurch gekennzeichnet, dass** auf der Transportoberfläche (410'), bevorzugt in Verbindung mit der Aufnahmevorrichtung (40), ein Einweiseelement (220) für den Transportrahmen (120) anordbar ist, wobei das Einweiseelement (220) bevorzugt wenigstens einen Vorsprung (210) aufweist, der in die Aufnahmevorrichtung (40) einsetzbar ist.

11. Befestigungssystem nach einem der Ansprüche 1 bis 10, **dadurch gekennzeichnet, dass** es sich bei dem lastsichernden Befestigungsmittel (100, 1010) um ein Sicherungselement (100, 1010) nach einem der Ansprüche 13 bis 16 handelt.

12. Befestigungssystem nach einem der Ansprüche 1 bis 11, **dadurch gekennzeichnet, dass** es sich bei dem horizontal sichernden Rahmenbefestigungsmittel (10', 500) um ein Rahmenbefestigungsmittel (500) nach Anspruch 17 handelt.

13. Sicherungselement (100, 1010) geeignet zur Befestigung einer schweren Last (300), insbesondere einer Komponente einer Windkraftanlage, auf einem Transportelement (120, 410') mit wenigstens einem Bolzenelement (101, 1013), das mit dem Transportelement (120, 410') in Wirkverbindung steht, mit wenigstens einem Arretierelement (103, 1014), das auf dem Bolzenelement (101, 1013) anordbar oder angeordnet ist, wobei das Arretierelement (103, 1014) einen ersten Auflageabschnitt (105, 1016) zur Auflage auf einem Widerlager (119, 132, 101',1011), das in Wirkverbindung mit dem Transportelement (120, 410') steht, und einen zweiten Auflageabschnitt (104, 1028, 1047) zur Auflage auf einem Abschnitt (200) der Last (300) oder auf einem Auflager (109), das auf der Last (300) anordbar ist, aufweist, wobei über das Arretierelement (103, 1014) über die Auflageabschnitte (104, 105, 1016, 1028, 1047) eine die Last (300) auf dem Transportelement (120, 410') haltende Kraft übertragbar ist, die durch ein auf dem Bolzen (101, 1013) aufbringbares Konterelement (107, 1020) erzeugbar ist, wobei über das Arretierelement (103, 1014) im Wesentlichen vertikale Lasten oder Momente von der Last in das Transportelement eingeleitet werden.

14. Sicherungselement (100, 1010) nach Anspruch 13, **dadurch gekennzeichnet, dass** es sich bei dem Transportelement um einen Transportrahmen (120) oder eine Transportoberfläche (410') handelt, und/oder dass die Wirkverbindung des Bolzens mit dem Transportelement (120, 410') über eine Öffnung (131, 136, 1018, 1033) im Transportelement (120, 410') herstellbar ist, in die der Bolzen (101, 1013) einsteckbar ist, oder der Bolzen (101, 1013) am Transportelement (120, 410') angeordnet ist, und/oder dass es sich bei dem Bolzen (101, 1013) um einen Gewindebolzen handelt, und/oder dass es sich bei dem Konterelement (107, 1020) um eine Mutter handelt.

15. Sicherungselement (100, 1010) nach Anspruch 13 oder 14, **dadurch gekennzeichnet, dass** ein Arretierkörper (178) vorgesehen ist, der in Wirkverbindung mit dem Widerlager (119) und der Last (300) steht, über den im Wesentlichen horizontale Lasten von der Last (300) auf das Transportelement (120) übertragen werden, wobei der Arretierkörper (178) bevorzugt in das Widerlager (119) einsetzbar ist, und/oder dass das Widerlager (119) eine Öffnung aufweist, in die ein Arretiermittel (179), bevorzugt ein Gewindebolzen, einbringbar ist, der gegen eine Seitenwand des Arretierkörpers (178) und/oder in eine Öffnung (182) in der Seitenwand (183) des Arretierkörpers (178) bewegbar ist, so dass die Wirkverbindung herstellbar ist.

16. Sicherungselement (100, 1010) nach einem der Ansprüche 13 bis 15, **dadurch gekennzeichnet, dass** ein Führungselement (141) vorgesehen ist, über das gewährleistet ist, dass die Last (300) an der dafür vorgesehenen Stelle auf dem Transportelement (120, 410') angeordnet ist, wobei bevorzugt das Führungselement (141) Bestandteil des Arretierkörpers (178) ist.

17. Rahmenbefestigungsmittel (500) geeignet zum horizontalen Befestigen eines Transportrahmens (120) auf einer Transportoberfläche (410), mit einem Grundkörper (501) und wenigstens einem Wandabschnitt (502, 503), der an dem Grundkörper (501) angeordnet ist oder Bestandteil des Grundkörpers (500) ist, einem an einem Wandabschnitt (507) angeordneten Vorsprung (509) geeignet zum lösbaren Einsetzen in eine Aufnahmevorrichtung (40), mit einer im Grundkörper (501) oder in einem Wandabschnitt (502, 503) vorgesehenen Öffnung (505), die so ausgeführt ist, dass in die Öffnung ein Arretiermittel (196), bevorzugt ein Gewindebolzen, einsetzbar ist und einem in oder am Grundkörper (501) oder in oder an einem Wandabschnitt (502, 503) vorgesehenen Widerlagerabschnitt (511), der so ausgeführt ist, dass über ein weiteres Befestigungsmittel (196), bevorzugt ein Gewindebolzen, gegen den Widerlagerabschnitt (511) eine horizontal haltende Verbindung zwischen Grundkörper (501) und Transportrahmen (120) herstellbar ist.

18. Verfahren zum Sichern einer schweren Last (300), insbesondere einer Komponente einer Windkraftanlage, auf einer Transportoberfläche (410'), insbesondere am Bord eines Schiffes (400), bei dem die Last (300) an einem Transportrahmen (129) über ein Sicherungselement (100, 1010), insbesondere nach einem der Ansprüche 13 bis 16, angeordnet und befestigt wird, der Transportrahmen (120) auf der Transportoberfläche (410') durch Absenken angeordnet wird, wobei vor dem Absenken wenigstens ein vertikal sicherndes Rahmenbefestigungsmittel (10, 10") in wenigstens eine dafür vorgesehene Öffnung (104') im Transportrahmen eingesetzt wird, das beim Absetzen des Transportrahmens (120) auf der Transportoberfläche (410') in wenigstens eine Aufnahmevorrichtung (40) eingreift, die in der Transportoberfläche (410') angeordnet ist, wobei das vertikal sichernde Rahmenbefestigungsmittel (10, 10") ein Verriegelungselement (11) aufweiset, das nach dem Absetzen von einer Einsetzposition (A) in eine Verriegelungsposition (B) überführt wird, **dadurch gekennzeichnet, dass** vertikal sichernde Rahmenbefestigungsmittel (10, 10") so ausgeführt ist, dass die auf die Last (330) wirkenden vertikalen Kräfte und Momente über das vertikal sichernde Rahmenbefestigungsmittel (10, 10") in die Transportoberfläche (410') übertragen werden, dass in wenigstens eine Aussparung (193) im Transportrahmen (120) und in wenigstens einer zu der Aussparung korrespondierenden Aufnahmevorrichtung (40) ein horizontal sicherndes Rahmenbefestigungsmittel (10', 500), insbesondere nach Anspruch 16, eingesetzt wird, dass ein Arretierungsmittel (196), bevorzugt ein Gewindebolzen, durch wenigstens eine Öffnung (197) in einem Wandabschnitt (194, 195) der Aussparung (193) und/oder in einem Wandabschnitt (502, 503) eines Grundkörpers (501) des horizontal sichernden Rahmenbefestigungsmittels (500) geführt wird und gegen den korrespondierenden Wandabschnitt und/oder in eine korrespondierende Öffnung im Wandabschnitt (502, 503) des horizontal sichernden Rahmenbefestigungsmittels (500) und/oder der Aussparung (193) bewegt wird, der Transportrahmen (120) gegenüber der Transportoberfläche (410') dadurch so arretiert wird, dass die auf die Last (300) wirkenden horizontalen Kräfte und Momente über das horizontal sichernde Rahmenbefestigungsmittel (500) in die Transportoberfläche (410') eingeleitet werden.

## Claims

1. Fastening system, suitable for transporting a heavy load (300), in particular a component of a wind turbine, on a transporting surface, in particular on a ship (400'), wherein at least one receiving device (40) with at least one insertion opening (43) for a vertically securing frame-fastening means (10'') is provided in or on the transporting surface (410'), via which frame-fastening means the vertical forces and torques acting on the load (300) can be introduced from the frame (120) into the transporting surface (410') via the receiving device (40), **characterized in that** the load (300) is arranged on a transporting frame (120) with at least one load-securing fastening means (100, 1010) such that the load-fastening means (100, 1010) absorbs vertical and/or horizontal forces and torques acting on the load and introduces them into the transporting frame (120), **in that** at least one further receiving device (40) with at least one insertion opening (43) for a horizontally securing frame-fastening means (10', 500) is provided on the transporting surface (410'), via which frame-fastening means the horizontal forces and torques acting on the load (300) can be introduced from the frame (120) into the transporting surface (410') via the receiving device (40), **in that** the transporting frame (120) has at least one opening (103'') for inserting the vertically securing frame-fastening means (10), and **in that** the transporting frame (120) has at least one cutout (193) for receiving the horizontally securing frame-fastening means (10', 500).

2. Fastening system according to Claim 1, **characterized in that** at least one opening (197, 505) is provided in a wall portion (194, 195) of the cutout (193) and/or in a wall portion (502, 503) of the horizontally securing frame-fastening means (500), through which opening there can be inserted an arresting means, preferably a threaded bolt (196), which can be moved in relation to a wall portion (502, 503) of the horizontally securing frame-fastening means (500) and/or in relation to a wall portion (194, 195) of the cutout (193) and/or in a depression in the wall portion (502, 503) of the horizontally securing frame-fastening means (500) or of the cutout (193), with the result that a horizontally securing connection between the transporting frame (120) and horizontally securing frame-fastening means (500) can be produced.

3. Fastening system according to Claim 1 or 2, **characterized in that** the horizontally securing frame-fastening means (500) has at least one projection (509) on a wall portion, preferably on the underside (507), which projection can be inserted into the insertion opening (43) of the receiving device (40).

4. Fastening system according to one of Claims 1 to 3, **characterized in that** the horizontally securing frame-fastening means (500) has a basic body (501) on which the wall portion (502, 503) or the wall portions (502, 503) of the horizontally securing frame-fastening means (500) are arranged.

5. Fastening system according to one of Claims 1 to 4, **characterized in that** the receiving device (40) has at least one basic body (41) and a cover plate (42) which forms an upper side and in which the insertion opening (43) is situated, wherein the receiving device (40) preferably has a cover plate (42) with at least two or four insertion openings (43) arranged therein and at least two or four basic bodies (41) arranged below the insertion openings.

6. Fastening system according to one of Claims 1 to 5, **characterized in that** the vertically securing frame-fastening means (10'') has an abutment (11), a locking element (12) and a bolt (13) connecting the abutment (11) and the locking element (12), wherein the locking element (12) has a force-transmission surface (19) situated on the outside of the locking element and a depression (20) between the force-transmission surface (19) and bolt (13), and the locking element (12) can be rotated between an unlocked and a locked position and can be inserted into the insertion opening (43) of the receiving device (40) in the unlocked position.

7. Fastening system according to Claim 6, **characterized in that** the locking element (12) can be screwed on the bolt (13), wherein the locking element (12) can be arrested with respect to the bolt (13) with a securing element (15"), preferably in such a way that the bolt (13) and the locking element (12) have a corresponding opening (16', 16'') for receiving a securing element (15'') which is preferably a securing pin (17').

8. Fastening system according to Claim 6 or 7, **characterized in that** the abutment (11) can be plugged onto the bolt (13) and can be arrested with a fixing element (16), which can preferably be screwed onto the bolt (13), wherein, in order to secure the fixing element (16), there is provided a securing element (15'', 17') which is preferably a securing pin, wherein preferably the bolt (13) and/or the fixing element (16) have at least one receptacle (16' 16'') for the securing element (15'', 17') preferably in the form of an opening, wherein the fixing element (16) particularly preferably has a plurality of receptacles (16'), and/or **in that** a spring ring (17'') is provided to secure the fixing element.

9. Fastening system according to one of Claims 1 to 8, **characterized in that** the vertically securing frame-fastening means (10, 10'') is designed such that the forces and torques acting vertically on the load (300) can be completely absorbed by the total number of vertically securing frame-fastening means (10, 10''), and/or **in that** the horizontally securing frame-fastening means (10', 500) is designed such that the forces and torques acting horizontally on the load can be completely absorbed by the total number of horizontally securing frame-fastening means.

10. Fastening system according to one of Claims 1 to 9, **characterized in that** a guide-in element (220) for the transporting frame (120) can be arranged on the transporting surface (410'), preferably in connection with the receiving device (40), wherein the guide-in element (220) preferably has at least one projection (210) which can be inserted into the receiving device (40).

11. Fastening system according to one of Claims 1 to 10, **characterized in that** the load-securing fastening means (100, 1010) is a securing element (100, 1010) according to one of Claims 13 to 16.

12. Fastening system according to one of Claims 1 to 11, **characterized in that** the horizontally securing frame-fastening means (10', 500) is a frame-fastening means (500) according to Claim 17.

13. Securing element (100, 1010) suitable for fastening a heavy load (300), in particular a component of a wind turbine, on a transporting element (120, 410') with at least one bolt element (101, 1013) which is operatively connected to the transporting element (120, 410'), with at least one arresting element (103, 1014) which can be arranged or is arranged on the bolt element (101, 1013), wherein the arresting element (103, 1014) has a first bearing portion (105, 1016) for bearing on an abutment (119, 132, 101', 1011) which is operatively connected to the transporting element (120, 410'), and a second bearing portion (104, 1028, 1047) for bearing on a portion (200) of the load (300) or on a bearing (109) which can be arranged on the load (300), wherein a force which holds the load (300) on the transporting element (120, 410') can be transmitted via the arresting element (103, 1014) via the bearing portions (104, 105, 1016, 1028, 1047), which force can be generated by a fixing element (107, 1020) which can be mounted on the bolt (101, 1013), wherein substantially vertical loads or torques are introduced from the load into the transporting element via the arresting element (103, 1014).

14. Securing element (100, 1010) according to Claim 13, **characterized in that** the transporting element is a transporting frame (120) or a transporting surface (410'), and/or **in that** the operative connection between the bolt and the transporting element (120, 410') can be produced via an opening (131, 136, 1018, 1033) in the transporting element (120, 410'), into which opening the bolt (101, 1013) can be inserted, and/or the bolt (101, 1013) is arranged on the transporting element (120, 410'), and/or the bolt (101, 1013) is a threaded bolt, and/or the fixing element (107, 1020) is a nut.

15. Securing element (100, 1010) according to Claim 13 or 14, **characterized in that** an arresting body (178) is provided which is operatively connected to the abutment (119) and the load (300) and via which substantially horizontal loads are transmitted from the load (300) to the transporting element (120), wherein the arresting body (178) can preferably be inserted into the abutment (119), and/or **in that** the abutment (119) has an opening into which there can be introduced an arresting means (179), preferably a threaded bolt, which can be moved in relation to a side wall of the arresting body (178) and/or into an opening (182) in the side wall (183) of the arresting body (178), with the result that the operative connection can be produced.

16. Securing element (100, 1010) according to one of Claims 13 to 15, **characterized in that** a guide element (141) is provided which ensures that the load (300) is arranged at the point on the transporting element (120, 410') intended therefor, wherein preferably the guide element (141) is a constituent part of the arresting body (178).

17. Frame-fastening means (500) suitable for horizontally fastening a transporting frame (120) on a transporting surface (410), with a basic body (501) and at least one wall portion (502, 503) which is arranged on the basic body (501) or is a constituent part of the basic body (500), with a projection (509) which is arranged on a wall portion (507) and is suitable for releasable insertion into a receiving device (40), with an opening (505) provided in the basic body (501) or in a wall portion (502, 503), which opening is configured such that an arresting means (196), preferably a threaded bolt, can be inserted into the opening, and with an abutment portion (511) which is provided in or on the basic body (501) or in or on a wall portion (502, 503), which abutment portion is configured such that a horizontally holding connection between the basic body (501) and transporting frame (120) can be produced in relation to the abutment portion (511) via a further fastening means (196), preferably a threaded bolt.

18. Method for securing a heavy load (300), in particular a component of a wind turbine, on a transporting surface (410'), in particular on board a ship (400), in which the load (300) is arranged and fastened on a transporting frame (120) via a securing element (100, 1010), in particular according to one of Claims 13 to 16, and the transporting frame (120) is arranged on the transporting surface (410') by lowering, wherein, before the lowering operation, at least one vertically securing frame-fastening means (10, 10'') is inserted into at least one opening (104') provided therefor in the transporting frame, which frame-fastening means engages in at least one receiving device (40) which is arranged in the transporting surface (410') when the transporting frame (120) is deposited on the transporting surface (410'), wherein the vertically securing frame-fastening means (10, 10") has a locking element (11) which, after the depositing operation, is transferred from an insertion position (A) into a locking position (B), **characterized in that** the vertically securing frame-fastening means (10, 10'') is configured such that the vertical forces and torques acting on the load (300) are transmitted into the transporting surface (410') via the vertically securing frame-fastening means (10, 10''), **in that** a horizontally securing frame-fastening means (10', 500), in particular according to Claim 16, is inserted into at least one cutout (193) in the transporting frame (120) and into at least one receiving device (40), corresponding to the cutout, **in that** an arresting means (196), preferably a threaded bolt, is guided through at least one opening (197) in a wall portion (194, 195) of the cutout (193) and/or in a wall portion (502, 503) of a basic body (501) of the horizontally securing frame-fastening means (500) and is moved in relation to the corresponding wall portion and/or into a corresponding opening in the wall portion (502, 503) of the horizontally securing frame-fastening means (500) and/or of the cutout (193), and the transporting frame (120) is arrested with respect to the transporting surface (410') with the result that the horizontal forces and torques acting on the load (300) are introduced into the transporting surface (410') via the horizontally securing frame-fastening means (500).

## Revendications

1. Système de fixation approprié pour le transport d'une charge lourde (300), en particulier d'un composant d'une éolienne, sur une surface de transport, en particulier sur un navire (400'), dans lequel est prévu, dans ou sur la surface de transport (410'), au moins un dispositif de réception (40) avec au moins une ouverture d'insertion (43) pour un moyen de fixation de cadre à fixation verticale (10''), par le biais duquel les forces et les couples verticaux agissant sur la charge (300) peuvent être transférés depuis le cadre (120) par le biais du dispositif de réception (40) dans la surface de transport (410'), **caractérisé en ce que** la charge (300) est disposée sur un cadre de transport (120) avec au moins un moyen de fixation fixant la charge (100, 1010) de telle sorte que le moyen de fixation de charge (100, 1010) reçoive des forces et des couples verticaux et/ou horizontaux agissant sur la charge et les transfère dans le cadre de transport (120), **en ce qu'**au moins un dispositif de réception supplémentaire (40) avec au moins une ouverture d'insertion (43) pour un moyen de fixation de cadre à fixation horizontale (10', 500) est prévu sur la surface de transport (410'), par le biais duquel les forces et les couples horizontaux agissant sur la charge (300) peuvent être transférés depuis le cadre (120) par le biais du dispositif de réception (40) dans la surface de transport (410'), **en ce que** le cadre de transport (120) présente au moins une ouverture (103'') pour l'insertion du moyen de fixation de cadre à fixation verticale (10) et **en ce que** le cadre de transport (120) présente au moins un évidement (193) pour recevoir le moyen de fixation de cadre à fixation horizontale (10', 500).

2. Système de fixation selon la revendication 1, **caractérisé en ce que** dans une portion de paroi (194, 195) de l'évidement (193) et/ou dans une portion de paroi (502, 503) du moyen de fixation de cadre à fixation horizontale (500) est prévue au moins une ouverture (197, 505) à travers laquelle peut être inséré un moyen de blocage, de préférence un boulon fileté (196), qui peut être déplacé contre une portion de paroi (502, 503) du moyen de fixation de cadre à fixation horizontale (500) et/ou contre une portion de paroi (194, 195) de l'évidement (193) et/ou dans un renfoncement dans la portion de paroi (502, 503) du moyen de fixation de cadre à fixation horizontale (500) ou de l'évidement (193) de telle sorte qu'une liaison à fixation horizontale entre le cadre de transport (120) et le moyen de fixation de cadre à fixation horizontale (500) puisse être établie.

3. Système de fixation selon la revendication 1 ou 2, **caractérisé en ce que** le moyen de fixation de cadre à fixation horizontale (500) présente, au niveau d'une portion de paroi, de préférence au niveau du côté inférieur (507), au moins une saillie (509) qui peut être insérée dans l'ouverture d'insertion (43) du dispositif de réception (40).

4. Système de fixation selon l'une quelconque des revendications 1 à 3, **caractérisé en ce que** le moyen de fixation de cadre à fixation horizontale (500) présente un corps de base (501) au niveau duquel sont disposées la portion de paroi (502, 503) ou les portions de paroi (502, 503) du moyen de fixation de cadre à fixation horizontale (500).

5. Système de fixation selon l'une quelconque des revendications 1 à 4, **caractérisé en ce que** le dispositif de réception (40) présente au moins un corps de base (41) et une plaque de recouvrement (42) formant un côté supérieur, dans laquelle se trouve l'ouverture d'insertion (43), le dispositif de réception (40) présentant de préférence une plaque de recouvrement (42) avec au moins deux ou quatre ouvertures d'insertion disposées dans celle-ci (43) et au moins deux ou quatre corps de base (41) disposés sous les ouvertures d'insertion.

6. Système de fixation selon l'une quelconque des revendications 1 à 5, **caractérisé en ce que** le moyen de fixation de cadre à fixation verticale (10'') présente une butée (11), un élément de verrouillage (12) et un boulon (13) reliant la butée (11) et l'élément de verrouillage (12), l'élément de verrouillage (12) présentant une surface de transfert de force (19) se trouvant sur le côté extérieur de l'élément de verrouillage et un renfoncement (20) entre la surface de transfert de force (19) et le boulon (13), l'élément de verrouillage (12) pouvant tourner entre une position déverrouillée et une position verrouillée, et, dans la position déverrouillée, pouvant être inséré dans l'ouverture d'insertion (43) du dispositif de réception (40).

7. Système de fixation selon la revendication 6, **caractérisé en ce que** l'élément de verrouillage (12) peut être vissé sur le boulon (13), l'élément de verrouillage (12) pouvant être bloqué par rapport au boulon (13) avec un élément de fixation (15'') de préférence de telle sorte que le boulon (13) et l'élément de verrouillage (12) présentent une ouverture correspondante (16', 16") pour recevoir un élément de fixation (15"), qui est de préférence une goupille de fixation (17').

8. Système de fixation selon la revendication 6 ou 7, **caractérisé en ce que** la butée (11) peut être enfichée sur le boulon (13) et peut être bloquée avec un élément conjugué (16), qui peut être vissé de préférence sur le boulon (13), un élément de fixation (15", 17') étant prévu pour la fixation de l'élément conjugué (16), lequel élément de fixation est de préférence une goupille de fixation, le boulon (13) et/ou l'élément conjugué (16) présentant de préférence au moins un logement (16', 16") pour l'élément de fixation (15'', 17'), de préférence sous la forme d'une ouverture, l'élément conjugué (16) présentant particulièrement de préférence une pluralité de logements (16'), et/ou **en ce que** l'on prévoit pour la fixation de l'élément conjugué une bague élastique (17'').

9. Système de fixation selon l'une quelconque des revendications 1 à 8, **caractérisé en ce que** le moyen de fixation de cadre à fixation verticale (10, 10'') est conçu de telle sorte que les forces et les couples agissant verticalement sur la charge (300) puissent être entièrement reçus par le nombre total des moyens de fixation de cadre à fixation verticale (10, 10'') et/ou **en ce que** le moyen de fixation de cadre à fixation horizontale (10', 500) est conçu de telle sorte que les forces et les couples agissant horizontalement sur la charge puissent être complètement reçus par le nombre total des moyens de fixation de cadre à fixation horizontale.

10. Système de fixation selon l'une quelconque des revendications 1 à 9, **caractérisé en ce que** sur la surface de transport (410'), de préférence en liaison avec le dispositif de réception (40), peut être disposé un élément d'alignement (220) pour le cadre de transport (120), l'élément d'alignement (220) présentant de préférence au moins une saillie (210) qui peut être insérée dans le dispositif de réception (40).

11. Système de fixation selon l'une quelconque des revendications 1 à 10, **caractérisé en ce que** le moyen de fixation fixant la charge (100, 1010) est un élément de fixation (100, 1010) selon l'une quelconque des revendications 13 à 16.

12. Système de fixation selon l'une quelconque des revendications 1 à 11, **caractérisé en ce que** le moyen de fixation de cadre à fixation horizontale (10', 500) est un moyen de fixation de cadre (500) selon la revendication 17.

13. Élément de fixation (100, 1010) approprié pour la fixation d'une charge lourde (300), en particulier d'un composant d'une éolienne, sur un élément de transport (120, 410') avec au moins un élément de boulon (101, 1013) qui est en liaison fonctionnelle avec l'élément de transport (120, 410'), avec au moins un élément de blocage (103, 1014) qui peut être disposé ou qui est disposé sur l'élément de boulon (101, 1013), l'élément de blocage (103, 1014) présentant une première portion d'appui (105, 1016) pour l'appui sur une butée (119, 132, 101', 1011) qui est en liaison fonctionnelle avec l'élément de transport (120, 410') et une deuxième portion d'appui (104, 1028, 1047) pour l'appui sur une portion (200) de la charge (300) ou sur un support (109) qui peut être disposé sur la charge (300), une force retenant la charge (300) sur l'élément de transport (120, 410') pouvant être transférée par le biais de l'élément de blocage (103, 1014) par le biais des portions d'appui (104, 105, 1016, 1028, 1047), laquelle force peut être générée par un élément conjugué (107, 1020) pouvant être appliqué sur le boulon (101, 1013), des charges ou des couples essentiellement verticaux pouvant être transférés par le biais de l'élément de blocage (103, 1014) depuis la charge dans l'élément de transport.

14. Élément de fixation (100, 1010) selon la revendication 13, **caractérisé en ce que** l'élément de transport est un cadre de transport (120) ou une surface de transport (410'), et/ou **en ce que** la liaison fonctionnelle du boulon avec l'élément de transport (120, 410') peut être établie par le biais d'une ouverture (131, 136, 1018, 1033) dans l'élément de transport (120, 410'), dans laquelle ouverture le boulon (101, 1013) peut être enfiché, ou le boulon (101, 1013) est disposé sur l'élément de transport (120, 410'), et/ou **en ce que** le boulon (101, 1013) est un boulon fileté, et/ou **en ce que** l'élément conjugué (107, 1020) est un écrou.

15. Élément de fixation (100, 1010) selon la revendication 13 ou 14, **caractérisé en ce qu'**un corps de blocage (178) est prévu, lequel est en liaison fonctionnelle avec la butée (119) et la charge (300), par le biais duquel des charges essentiellement horizontales peuvent être transférées de la charge (300) à l'élément de transport (120), le corps de blocage (178) pouvant de préférence être inséré dans la butée (119), et/ou **en ce que** la butée (119) présente une ouverture dans laquelle un moyen de blocage (179), de préférence un boulon fileté, peut être introduit, lequel peut être déplacé contre une paroi latérale du corps de blocage (178) et/ou dans une ouverture (182) dans la paroi latérale (183) du corps de blocage (178), de telle sorte que la liaison fonctionnelle puisse être établie.

16. Élément de fixation (100, 1010) selon l'une quelconque des revendications 13 à 15, **caractérisé en ce qu'**un élément de guidage (141) est prévu, par le biais duquel il est garanti que la charge (300) est disposée à l'endroit prévu pour elle sur l'élément de transport (120, 410'), l'élément de guidage (141) faisant de préférence partie du corps de blocage (178).

17. Moyen de fixation de cadre (500) approprié pour la fixation horizontale d'un cadre de transport (120) sur une surface de transport (410), avec un corps de base (501) et au moins une portion de paroi (502, 503) qui est disposée sur le corps de base (501) ou qui fait partie du corps de base (500), une saillie (509) disposée sur une portion de paroi (507), appropriée pour l'insertion amovible dans un dispositif de réception (40), avec une ouverture (505) prévue dans le corps de base (501) ou dans une portion de paroi (502, 503), laquelle ouverture est réalisée de telle sorte qu'un moyen de blocage (196), de préférence un boulon fileté, puisse être inséré dans l'ouverture, et une portion de butée (511) prévue dans le ou sur le corps de base (501) ou dans ou sur une portion de paroi (502, 503), laquelle portion de butée est réalisée de telle sorte qu'une liaison à fixation horizontale entre le corps de base (501) et le cadre de transport (120) puisse être établie par le biais d'un moyen de fixation supplémentaire (196), de préférence un boulon fileté, contre la portion de butée (511).

18. Procédé pour fixer une charge lourde (300), en particulier un composant d'une éolienne, sur une surface de transport (410'), en particulier à bord d'un navire (400), dans lequel la charge (300) est disposée et fixée sur un cadre de transport (120) par le biais d'un élément de fixation (100, 1010) en particulier selon l'une quelconque des revendications 13 à 16, le cadre de transport (120) est disposé sur la surface de transport (410') en l'abaissant, au moins un moyen de fixation de cadre à fixation verticale (10, 10") étant inséré dans au moins une ouverture (104') prévue à cet effet dans le cadre de transport avant l'abaissement, le moyen de fixation de cadre, lors de la pose du cadre de transport (120) sur la surface de transport (410'), s'engageant dans au moins un dispositif de réception (40) qui est disposé dans la surface de transport (410'), le moyen de fixation de cadre à fixation verticale (10, 10'') présentant un élément de verrouillage (11) qui, après la pose, est transféré d'une position d'insertion (A) dans une position de verrouillage (B), **caractérisé en ce que** le moyen de fixation de cadre à fixation verticale (10, 10'') est réalisé de telle sorte que les forces et les couples verticaux agissant sur la charge (300) soient transférés par le biais du moyen de fixation de cadre à fixation verticale (10, 10'') dans la surface de transport (410'), **en ce qu'**un moyen de fixation de cadre à fixation horizontale (10', 500), en particulier selon la revendication 16, est inséré dans au moins un évidement (193) dans le cadre de transport (120) et dans au moins un dispositif de réception (40) correspondant à l'évidement, **en ce qu'**un moyen de blocage (196), de préférence un boulon fileté, est guidé à travers au moins une ouverture (197) dans une portion de paroi (194, 195) de l'évidement (193) et/ou dans une portion de paroi (502, 503) d'un corps de base (501) du moyen de fixation de cadre à fixation horizontale (500) et est déplacé contre la portion de paroi correspondante et/ou dans une ouverture correspondante dans la portion de paroi (502, 503) du moyen de fixation de cadre à fixation horizontale (500) et/ou de l'évidement (193), le cadre de transport (120) étant bloqué de ce fait par rapport à la surface de transport (410') de telle sorte que les forces et les couples horizontaux agissant sur la charge (300) soient transférés par le biais du moyen de fixation de cadre à fixation horizontale (500) dans la surface de transport (410').
